# EUROPEAN PATENT SPECIFICATION

(11) **EP 1 117 214 B1**
(45) Date of publication and mention of the grant of the patent: **14.12.2005**
(21) Application number: 01660004.1
(22) Date of filing: 12.01.2001
(51) Int. Cl.: H04L 12/66

(54) **Home network gateway**
Hausnetzübergangseinrichtung
Passerelle de Réseau domotique

(30) Priority: 14.01.2000 US 483681
(43) Date of publication of application: 18.07.2001
(73) Proprietor: Terayon Communication Systems, Inc., Santa Clara, CA 95054 (US)
(72) Inventor: Rakib, Selim Shlomo, Cupertino, California 95014 (US); Fish, Ronald Craig, Morgan Hill, California 95037 (US)
(74) Representative: Brax, Matti Juhani

(56) References cited:
- EP-A- 0 851 653
- WO-A-99/44363
- TRICHT VAN E ET AL: "VOICE-OVER-IP FOR CORPORATE USERS. A SOLUTION IN SEARCH OF A PROBLEM?" UTRECHT, NL, AUG. 24 - 28, 1999,LONDON: IBTE,GB,24 August 1999 (1999-08-24), pages 9-14, XP000847162
- KORPI M ET AL: "SUPPLEMENTARY SERVICES IN THE H.323 IP TELEPHONY NETWORK" IEEE COMMUNICATIONS MAGAZINE,US,IEEE SERVICE CENTER. PISCATAWAY, N.J, vol. 37, no. 7, July 1999 (1999-07), pages 118-125, XP000835313 ISSN: 0163-6804

## Description

### Field of use

The invention finds applicability in the distribution of digital video on demand services and other digital services throughout a consumer's location.

With the advent of cable modems, there is the ability to deliver digital data at high rates from content providers and the internet over cable TV systems. Many different services will be delivered digitally, one of which is video on demand and high definition TV digital data. Another digital service which is useful at least for business establishments is video conferencing. Other digital services that will be becoming more and more useful in the future are high speed contact with the corporate LAN from home for telecommuters, high speed internet access, distance learning, multimedia presentations to remote and/or dispersed audiences, etc.

The development of cable modems has enabled the delivery of high speed data over 10 MB/sec channels to customer premises over hybrid fiber coaxial cable TV distribution networks. But once the digital data reaches a customer premises, it still must be distributed and converted to a proper format for use by the user on a TV, a telephone, a video phone, a computer, a network computer a FAX, a DVD recorder and other peripherals that will be developed in the future.

Concurrently, the telephone companies have developed digital subscriber line technologies such as Asymmetrical Digital Subscriber Line (ADSL), High Bit Rate Digital Subscriber Line technology, ISDN and ISDL, Rate Adaptive Digital Subscriber Line (RADSL), Symmetric Digital Subscriber Line (SDSL), Very High Speed DSL (VDSL). These different technologies are described in Muller, *Desktop Encyclopedia of Telecommunications,* p. 93-95 (McGraw Hill 1998) ISBN 0-07-044457-9, and Clayton, *Illustrated Telecom Dictionary,* (McGraw Hill 1998) ISBN 0-07-012063-3, and Horak, *Communications Systems and Networks, Voice, Data and Broadband Technologies,* (M&T Books, Foster City, Ca. 1997) ISBN 1-55851-485-6, the entirety of all these publications being hereby incorporated by reference. These digital subscriber line technologies will soon be capable of delivering digital voice, data and image information from various servers as well as via high speed internet access to the subscriber premises over standard telephone copper twisted pairs which are already in the ground and which everybody already has. Some of these technologies are fast enough to also deliver video on demand, which typically requires about 2 megabits/sec data rate.

The also were introduced in 1994, digital broadcast satellite services (DBS) such as DirecTV (offered by Hughes Electronics and Thomson Multimedia). DBS services already can or soon will provide video on demand, internet connectivity and multimedia applications all with the high picture quality that digital technology provides. Video conferencing via DirectPC service may also soon be provided. DirecTV delivers 175 channels of digital-quality programming through an 18 inch dish antenna, a digital set-top decoder box and a remote control. An access card allows billing information to be captured by the set-top decoder box and downloaded by the PSTN to a billing center for pay-per view programs ordered by a user. In addition, DirecPC technology allows high speed (400 KB/sec) internet access to PCs in the customer premises using the DBS dish and coaxial cable distribution network. An expansion card couples the PC's I/O bus to the coaxial cable distribution network of the DBS system. A modem is used by the PC to make a dial up connection to the internet service provider (ISP) which then sends internet data to the PC via an uplink to the satellite and then down to the user's dish.

One problem that consumers of digital data delivery services will soon face is as follows. There is great uncertainty as to which subscription data delivery services will provide the most reliable, best performing and least expensive version of each type service. Thus, there is a need for a way for a user to be able to couple to all the different subscription service data delivery options available to her and to distribute the data cheaply throughout her premises to all the different peripherals that need it like television sets, computers, telephones, video phones etc. To do this, it will be necessary to have some sort of circuit that can interface with all the different subscription service digital data delivery networks and at least one local area network running throughout the user's home and do any necessary protocol conversions and packet, cell or frame reassembly and encapsulation into packets of the type used on the LAN.

ADSL routers such as the Remote 810 ADSL Router manufactured by 3Com currently exist. These routers can couple an Ethernet local area network to ADSL lines so that POTS voice conversations can occur simultaneously while searching the internet. The Remote 810 ADSL Router has an integrated 4-port 10Base-T hub to couple multiple PCs can share the same ADSL line. The router supports up to 16 simultaneous concurrent connections to multiple destinations on the internet and can perform bridging functions. 3Com also manufactures SDSL routers like the OfficeConnect Remote 840 SDSL which can support applications that require high bandwidth in both directions such as video conferencing, remote training, Web hosting, e-commerce and other multimedia applications.

Other prior art, such as the 3Com PathBuilder S700 WAN switch, exists which concentrates, aggregates and switches traffic over wide area networks. The PathBuilder S700 WAN can converge voice, video and data applications -- including Frame Relay, ATM and SONET -- onto a common network. Up to 100 interfaces are supported. Advanced traffic management features such as traffic shaping, priority queuing and multicasting, guarantee the right amount of bandwidth for each application and let you build and manage your WAN infrastructure. The switch features a future-proof chassis with a modular construction to protect the initial investment and provide a migration path to accomodate future growth. The switch has individual application modules that provide native interfaces to a variety of campus networking technologies such as LANs, muxes, routers, SNA applications, business video and PBXs. Each application module adapts communications traffic to the cell-based backplane and transports it across the PathBuilder S700 switch cell bus to the appropriate trunk interface connections which offer a a comprehensive range of campus and wide area interface types. A T1/UNI module supports Inverse Multiplexing for ATM at speeds ranging from 1.5 Mbps to 16 Mbps. An 18-slot chassis supports migration to T3/E3 or OC-3 services as bandwidth requirements increase. Distributed processing implemented by placing a RISC processor on each application module to provide scaleable performance and wire speed communications.

However, the 3COM Pathbuilder S700 WAN Switch lacks the capability to interface with ADSL lines, cable modems, satellite dishes, wireless local loops, terrestial microwave links or other subscription network services that may become available in the future such as digital data delivery over the power lines. The 3COM Pathbuilder S700 WAN Switch is a professional level switch which is not affordable for the average home network consumer. In short, it is believed that no gateways or routers currently exist which can couple a local area network such as an Ethernet to each of the public service telephone network, and which embody and combine the technology of ADSL modems, cable modems, and satellite DirectPC decoder boxes with IP video and IP telephony interfaces and switching, routing and protocol conversion capability.

In the current climate of deregulation, fierce competition for provision of telecommunication services to customers has arisen. Many alternative distribution networks for digital data have either already been developed or under development. For example, in the near future, the digital data delivery services just described that are delivered by the PSTN and CATV HFC distribution facilities will also be competing with wireless local loop delivery networks provided by Personal Communication Service (PCS) companies and data delivery services under development by the electric power utilities.

The problem is that the consumer has no way to know which services will provide the most reliable, highest quality and least expensive delivery mechanism for telephone and FAX service, e-mail, distance learning, video conferencing, high speed world wide web access, video on demand, remote LAN for telecommuters and multimedia services. Further, over time, as each of the subscription networks evolve and competitive pressures force lowering of prices, it is possible that what was once the best provider of, for example, video-on-demand (hereafter VOD), is no longer the best provider but some other technology is. As another example, ADSL does not have sufficient upstream bandwidth if video telephony becomes a popular application whereas cable modems do. However, variable bit-rate MPEG2 and advances in video compression technology might save ADSL if video conferencing becomes big, and High Speed ADSL may be adequate to service this application. The problem this raises for consumers is that they do not want to invest in technology for their home networks that only interfaces to ADSL or cable modems and then be faced with the prospect of an expensive replacement of their home network equipment in order to interface their LAN with a new subscription service digital data delivery network.

Another example involves supplying Plain Old Telephone Service (POTS) to consumers via cable modem versus ADSL. Cutting of a CATV line in the street or losing an above ground cable during a windstorm will cut service to the entire neighborhood. That means that everybody in the neighborhood who obtains their telephone service via cable modem, will be left without phone service until the break is repaired. In contrast, ADSL is a point-to-point technology which causes only one customer to lose phone service if her line is broken. A well maintained HFC CATV network may obviate some of these problems, but that is unclear because there has not been a great deal of field experience gained yet in POTS over HFC.

Thus, a consumer will not know whether to buy a gateway that can interface to an ADSL modem or an HDSL modem or a cable modem until the bugs are worked out and competitive factors come into play and make it clear which delivery network provides the best, lowest cost service for this application.

However, one thing is clear: the above identified services will be in demand, and the consumer would like to be able to take advantage of the best delivery mechanism for each service and be able to switch easily between delivery services as competition forces adjustments in prices.

Since these services will arrive on many different media, possibly in many different packet formats or using many different protocols, a problem is created for the user in deciding what type of home network data distribution system to buy and install. For example, there may be different packet and cell sizes and different header structures, different type of compression and different protocols will be used. The user only wants to inexpensively and conveniently distribute data encoding each of these services throughout her premises to the various peripherals like digital VCRs, DVD recorders/players, TVs, FAX machines, computers, telephones etc. that need the data without having to have a different gateway and local area network for each type of data delivery service. Further, the user may want to use ADSL for some services and cable modem for other services and wireless local loops or satellite downlinks or some other data delivery network option for other services.

A related problem is in the area of videoconferencing. Currently, videophone offered by AT&T have been a commercial failure because of the low picture quality of 2 frames per second deliverable over standard twisted pairs. ISDN circuits can be used for videoconferencing and ISDN videophones are available, and their details are hereby incorporated by reference. However, the higher cost of ISDN and its lesser availability to all homes has slowed the acceptance of ISDN videoconferencing. Switched 56/64 Kbps circuits can also be used for video conferencing by bonding or grouping into multiple channels. Switched 384 Kbps connectivity can also be provided on the basis of fractional DS1 or through ISDN PRI channels in a channel group known as an HO. However, the cost and availability issues that are slowing ISDN teleconferencing also exist for switched 56/64 and switched 384 Kbps services as well.

Likewise, DS-1 facilities support full-motion, high-quality videoconferencing over dedicated networks at rates of up to 2.048 Mbps for E1 and 1.544 Mbps for T1. However, DS-1 facilities are costly and not widely deployed and, although they are affordable for large organizations with DS-1 backbones, they are out of reach for the home network consumer.

Broadband networks such as ADSL, B-ISDN, HFC and cable modems, satellite etc. are likely to be much more convenient and affordable ways of delivering videoconferencing services via ATM operating at DS-1 or DS-3 or higher speeds.

Thus, a need has arisen for a system which interface to many different subscription service data delivery networks and can distribute digital data throughout a customer premises in an economical fashion to all the peripheral devices that need the data using a uniform protocol and addressing scheme. Preferably, the system will have an economical and reliable local area network on the consumer premises side and have the flexibility to couple to many different subscription service data delivery network media types and translate from whatever packet/cell/frame type and protocols are used by the data delivery network without substantial expense to reconfigure or buy new equipment or software each time a data delivery network option appears that is better, cheaper or more reliable than the consumer's current service provider.

A prior art document WO 99/44363 A is known to disclose a method and an apparatus for synchronizing sound and images in a real-time multimedia communication through a network gateway. Of an audio signal and a video signal at least the audio signal is supplied as an input to the gateway; optionally also the video signal so that said signal(s) is/are routed through the gateway to the multimedia terminal. Any mismatch is detected in the synchronisation between the audible and visible outputs from the audio device and the video device owing at least partly to the intrinsic gateway processing delay(s). A variable delay is adjusted in the gateway on a signal routed through the gateway until the audible and visible outputs from the separate devices are effectively synchronised. The variable delay is stored in the gateway for future use.

### Summary of the Invention

According to a first aspect of the invention there is provided a gateway apparatus the characteristic features of which are those recited in claim 1.

According to a second aspect of the invention there is provided a process carried out by a gateway, the characteristic features of which are those recited in claim 28.

### Brief Description of the Drawings

Figure 1 is a diagram of a prior art connection between the internet and a home local area network through a cable modem and the HFC of a CATV system.
Figure 2 is a diagram of a prior art connection between the internet and a home local area network through an ADSL modem.

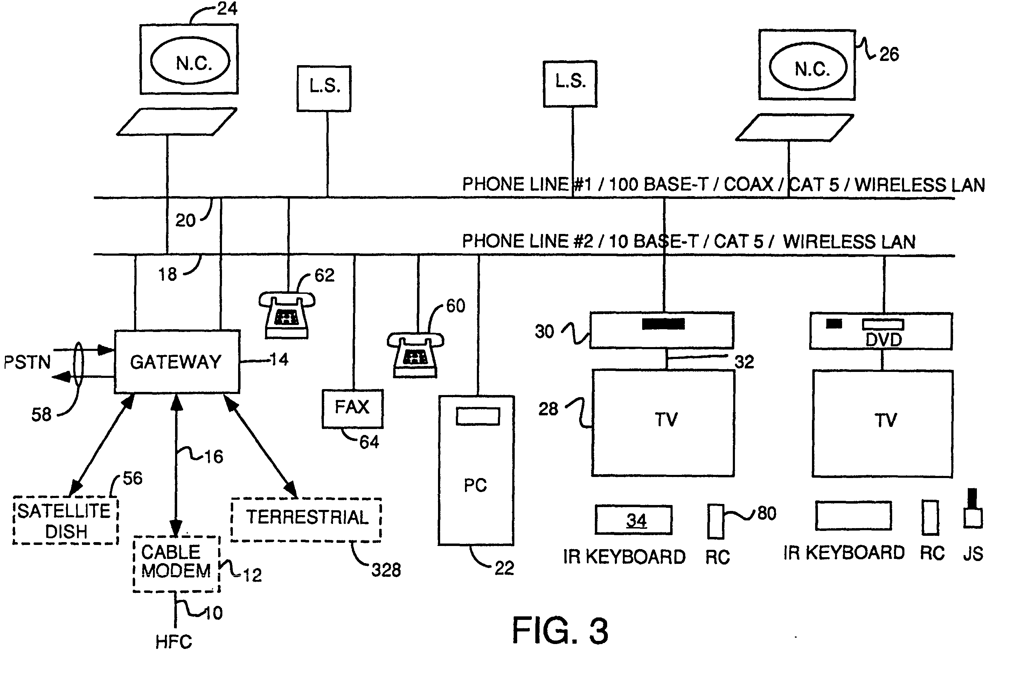

Figure 3 is a diagram of a home network having a gateway within the genus of the invention which couples any one of a number of different subscriber service data delivery networks which are external to a customer premises to one or more local area networks that deliver digital data from said external networks to one or more devices in said customer premises coupled to said local area networks. The gateway does the necessary protocol conversions and translations between the protocols and packet formats of the local area network and the protocols and packet formats of the subscriber service data delivery external networks.
Figures 4A and 4B are a detailed diagram of a gateway having ADSL, satellite, cable and broadcast TV antenna interface circuitry.
Figure 5 is a block diagram of a video adapter for coupling a local area network to a television.
Figures 6A-6E are a flowchart of a pull technology video on demand process.
Figure 7 is a flowchart of a wideband internet access process.
Figure 8 is a block diagram of a modular construction for the gateway.

### Detailed Description of the Preferred and Alternative Embodiments

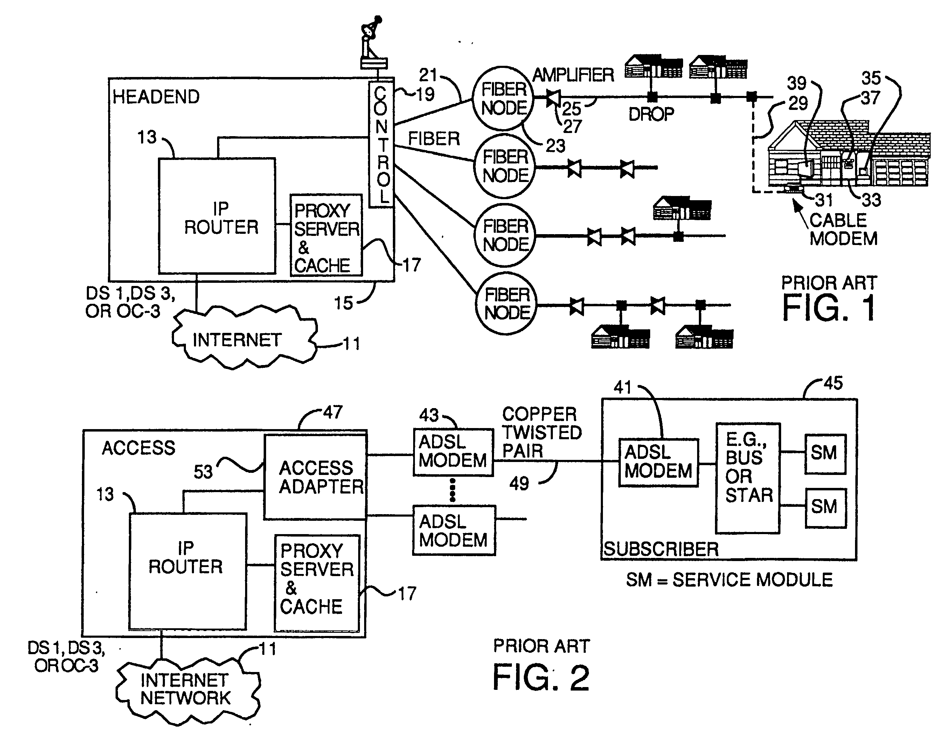

Figure 1 is a diagram of a prior art connection between the internet and a home local area network through a cable modem and the HFC of a CATV system. The internet is shown as cloud 11. An IP router 13 in the headend facility 15 of an internet service provider bidirectionally couples IP packets to the internet using the TCP transport protocol. An optional local proxy server 17. The proxy server is coupled to the IP router and provides local content as well as caching certain very popular web pages such as Yahoo or CNN news etc. so that they can be sent to cable modem subscribers with greater speed. A control circuit 19 concentrates all IP traffic from the subscribers coupled to the HFC network and sends it to the IP router 13 and distributes packets from the IP router to the various fiber optic links of which line 21 is typical. The fiber optic links couple the headend to fiber nodes of which node 23 is typical. Each fiber node couples the fiber optic link to a coaxial cable feeder branch of which branch 25 is typical. Each feeder branch has at least one bidirectional amplifier, of which amplifier 27 is typical. Each feeder branch is coupled to a plurality of drop lines, of which drop 29 is typical, which couples the branch to a cable modem at the subscriber premises. Cable modem 31 is typical and can be any of the cable modems identified below. The cable modem has a 10Base-T output port which is coupled to an Ethernet LAN 33 which runs throughout the home to peripherals such as TV 39, telephone 37 and personal computer 35. A typical example of cable modem 31 is the U.S. Robotics Cable Modem CMX. This modem will work on any cable system that complies with the MCNS data-over-cable specification. This cable modem comes with an EtherLink network interface card and is compatible with the Windows and Macintosh operating systems.

Referring to Figure 2, there is shown a prior art connection between the internet and a local area network in a home via the telephone system using ADSL modems. The internet 11 is coupled to IP router 13 via DS 1 (1.544 Mbps supporting 5 or more continuous users or up to 55 users with 10% usage), DS 3 (45 Mbps supporting up to 1500 subscribers) or OC-3 connections. Optional proxy server 17 serves the same function is served in the cable modem system of Figure 1. ADSL modems 41 and 43 at the subscriber premises 45 and central office 47 couple to the twisted copper wire pair that was originally used for POTS. A POTS splitter, not shown, forwards the analog voice transparently to the POTS central office in a frequency below the ADSL domain. The ADSL modem 41 connects directly to the Ethernet port of a personal computer or to an Ethernet hub. The access switch 53 serves to concentrate access lines from the ADSL modems such as 43 into router ports of IP router 13. Access adapter 53 is likely to include ATM switch fabric. The ADSL modem 41 can be the 3Com HomeConnect ADSL Modem Ethernet or any equivalent ADSL modem.

Referring to Figure 3, there is shown a diagram of a home network having a gateway within the genus of the invention which couples any one of a number of different subscriber service data delivery networks which are external to a customer premises to one or more local area networks that deliver digital data from said external networks to one or more devices in said customer premises coupled to said local area networks. The gateway does the necessary protocol conversions and translations between the protocols and packet formats of the local area network and the protocols and packet formats of the subscriber service data delivery external networks. The home network is useful for distribution of digital data that encodes video on demand, distance learning, video conferencing, telephone service, internet web pages and FTP download files, e-mail and other digital subscriber services to multipled devices over one or more local area network that runs throughout a customer premises. Digital data or analog signals implementing the subscriber service (subscriber service is used loosely to mean all signals whether analog or digital transmitted to the customer premises via an external network of any type including a TV antenna) is transmitted to the customer premises. Gateway 14 converts the incoming signals to digital data in Ethernet packets and transmits it to the requesting device coupled to the local area network.

The gateway 14 functions to do all the physical layer interfacing and protocol conversions necessary to couple one or more local area networks that run through the customer premises to digital data distribution services delivered via the Hybrid Fiber Coax (HFC) of a cable television system, or a digital satellite data distribution network or the phone lines of the public service telephone network. Hereafter, these digital data delivery networks external to the customer premises will be called the subscription networks or the digital data delivery networks even though some or all of them may also deliver analog signals as well as digital data. For example, the cable TV subscription network 16 will deliver analog CATV signals in addition to the digital data carried on its upstream and downstream carriers. Likewise, the satellite dish 56 will deliver broadcast TV signals as well as digital data modulated on the downstream carrier. The Public Service Telephone Network (PSTN) telephone lines 58 will also deliver analog telephone signals in addition to digital data modulated onto the upstream and downstream carriers of the ADSL service.

The gateway 14 is typically a Pentium or Celeron class personal computer host with protocol conversion and switching control programs that cooperate with the operating system to control the operations of various interface circuits and having one or more network interface circuits that drive the media of the local area network(s). In some embodiments, the interface circuits can be built on the motherboard with the host microprocessor. However, in the preferred embodiment, each interface circuit is a separate expansion card that plugs into the system bus of the host and has a connector suitable to interface with the physical media of the particular digital data delivery service. Likewise, the network interface to the local area network(s) can be an expansion card. However, it is preferable for the local area network interface circuit to be built into the motherboard so as to not consume an expansion slot. In this modular type construction, the circuits and software that are common to all the expansion modules that interface to the various subscription networks are shared by the expansion module interface circuits. Thus, the host microprocessor, hard disk, RAM, CD-ROM/DVD, power supply, network interface circuits for the LAN(s), display and keyboard are all shared as are the operating system, management sofware and any protocol conversion software layers that are common to all network interface circuits. Likewise, the gateway 14 is going to have a packet switching process and a crossbar switch or other switching circuitry controlled by the switching process to route packets received from the subscription providers to the appropriate LAN and vice versa based upon the IP or other addresses in the headers of the packets. These two elements can also be shared by the expansion module interface cards as the switching services need to be shared by all the subscription network interface cards in the gateway. The circuits and software that are specific to any particular subscription network such as MPEG compression or decompression, tuning, detection and demodulation, carrier and clock recovery, video decoding, A/D or D/A conversions etc. are located on the expansion module interface card dedicated to that subscription network.

This preferred modular construction has two significant advantages. First, it protects the subscriber's investment in the gateway by providing flexibility to couple the gateway to any subscriber network that turns out to be the most reliable, least expensive, most flexible or easiest to use or least aggravating subscriber network for supplying any particular digital data based service desired by the user. For example, if ADSL turns out to be the best provider of telephone and video telephony services, but HFC turns out to be the best provider of video on demand or distance learning services, and these are the only services the user is interested in purchasing, the user can simply buy expansion modules to interface with these two subscription services. There is no need to invest in a gateway that has hardware and software to provide high speed internet access as well as these other services since the user is not interested in purchasing high speed internet access. This first advantage also extends to the situation where the user later changes her mind and decides that high speed internet access is useful, but determines that satellite delivery by DirectPC™ is the best way of obtaining this service. In such a case, the user does not have to buy an entirely new gateway, but can simply buy an additional modular expansion card for interfacing to a satellite dish.

The second advantage of the modular construction of the gateway is the property it has of protecting the subscriber's investment in the gateway by decoupling the physical structure and software of the shared components of the gateway from changes in the particular subscription networks. As these subscription networks evolve, there are likely to be changes in the protocols, physical media, packet structure etc. which are unpredictable in nature. Further, it may evolve over time with competitive forces similar to those acting on the long distance carriers that competition alters the picture as to which subscription network is the best provider of each particular service in which the subscriber is interested. If ADSL no longer is the best provider of telephony services, and the HFC networks offer a better deal, the consumer does not have to buy an entirely new gateway, but can simply remove the ADSL interface card and substitute a cable modem card to interface with the HFC network if a cable modem card is not already present. Likewise, if ADSL with Carrierless Amplitude/Phase modulation (CAP) give way to Discrete Multitone (DMT) modulation as the new standard, the user can simply swap out the CAP based ADSL expansion module for a DMT based module.

The structure of one embodiment of the gateway 14 will be discussed in more detail later. However, the genus of gateways 14 which are within the teachings of the invention is defined by the following characteristics which all will share:
a programmed host computer with an operating system, and one or more protocol conversion processes and a switching control process that controls a packet switch to route packets between the one or more subscription service networks and the local area network(s) to which the gateway is coupled;
one or more interface circuit for the particular local area network(s) coupled to the packet switch to drive packets out onto the physical media of the LAN(s);
either a single interface circuit that can interface to all of HFC, PSTN and satellite digital data delivery networks which is either on the motherboard of the host or separate from the motherboard and coupled to the host system bus, or a plurality of expansion slots for coupling individual subscription network interface modules to the host system bus as desired so that each module can share the common facilities of the host needed to support the module; and
wherein the common elements of the host that can be shared by all the subscription network interface circuits for all the subscription networks to which the gateway is coupled are shared, with examples of such shared circuits being: the host microprocessor, hard disk, RAM, CD-ROM/DVD, power supply, network interface circuits for the LAN(s), display and keyboard, the operating system, any management sofware and any protocol conversion software layers that are common to all network interface circuits and a packet switching process and a crossbar switch or other switching circuitry.

The gateway 14 will have a cable modem circuit either on a modular expansion card or as part of the subscription network interface circuits board. This cable modem circuitry can be any of the cable modems that are known in the prior art which are identified herein or any new cable modem design that surfaces after this application is filed since the details of the cable modem are not believed at the present time to be critical to the invention.

Likewise, the gateway 14 will have as part of its interface circuit board or as an expansion card module, an ADSL modem (or SDSL or HDSL modem) to receive incoming digital data modulated onto a downstream carrier and output it as Ethernet packets on LAN(s) 18 and 20. In some alternative embodiments, LANs 18 and 20 could be ATM LANs or one could be ATM and the other Ethernet or some other technology such as Fibre Channel Arbitrated Loop with suitable adjustments in the gateway 14 to packetize the data properly and use appropriate circuitry and protocols at all levels from the physical layer, MAC and network or routing layers up to the application layer for the particular LANs in use. ATM LAN switches and routers are available in the prior art and the details of their construction are hereby incorporated by reference.

Likewise, the ADSL modem receives Ethernet packets with digital data encoding voice, pictures, video etc. and modulates that data onto an upstream carrier. ADSL carves up the local loop bandwidth (the bandwidth of the twisted pair telephone line from the consumer premises to the Central Office) into several independent frequency channels suitable for any combination of services including voice, ISDN, VOD programming and interactive gaming. Downstream data rates vary from 1.544 to 6.144 Mbps with upstream rates from 16 to 640 Kbps. The gateway ADSL interface circuit will also have a voice splitter if regular analog telephone are to be supported in addition to the LAN-connected video phones 60 and 62 or other data-consuming phones or FAX machines like FAX 64 which receive and transmit voice and pictures or caller ID or other data in digital form. Such other data can include such things a background information file on the person identified by caller ID data transmitted by an application on the PC 22 which supports the phones. Any conventional ADSL (or SDSL or HDSL) modem design such as the known ADSL modem manufactured by 3COM (specifically identified below and incorporated by reference herein) may be used for the PSTN ADSL interface circuitry or the ADSL expansion module as the details of the ADSL interface circuitry are not believed to be critical to the invention. The 3COM ADSL modem couples to a twisted pair carrying ADSL services and has an Ethernet 10Base-T output for coupling to the LAN(s) 18 or 20 through the shared packet switching circuitry of the gateway.

The gateway 14 also includes as part of its subscription network interface circuit board or as part of its satellite network expansion module a decoder box. This satellite decoder box is of known design suitable to receive, demodulate, demultiplex, detect and decompress (if necessary) digital data transmitted on a downlink to satellite dish 56. This digital data may be transmitted via a service such as DirectPC or other satellite-based, digital data delivery services which may become available in the future, and the interface circuitry necessary to receive digital data transmitted to a particular PC via satellite is known in the DirectPC application, and is hereby incorporated by reference. Typically, such satellite interface circuitry includes a tuner, a QPSK demodulator, a transport demultiplexer and a conditional access circuit. If the satellite interface circuit is being used to receive digital video signals that are compressed, the satellite circuitry may include circuits to decompress the digitized video back to its original state (or close to its original state if lossy compression such as MPEG is used). However, since uncompressed broadcast quality standard NTSC video requires a bit rate of slightly over 221 Mbps, whether the satellite interface circuitry of the gateway includes decompression circuits depends upon the bandwidth of the local area network(s) coupled to the gateway. If the LAN(s) are 10Base-T or 100Base-T, the video digital data will be left compressed and can be transferred over the LAN(s) with quite acceptable quality at T1 speeds of 1.544 Mbps. MPEG compression and decompression is known in the art and is incorporated by reference herein. MPEG compression is lossy compression which uses: a 7-tap filter for averaging 7 neighboring pixels or lines; color space conversion; scaling to the presentation resolution before digitization; transforms such as the Discrete Cosine Transform, vector quantization, fractal transform and wavelet compression; and quantization or compaction encoding to reduce the number of bits needed to represent a color pixel such as run-length encoding, Huffman coding, and arithmetic coding; and interframe compression to transmit only the pixels that change between frames. Many compression standards exist such as Px64, JPEG, MPEG 1 and 2 (MPEG 2 with transmission rates of 4 to 100 Mbps is already in use for digital video transmission via satellite services such as DirecTV) and MPEG 4 (a low bit rate standard intended for videophones and other small screen devices). The compression and decompression circuitry for all these standards is hereby incorporated by reference.

Further, the satellite interface circuitry or satellite expansion module should also include a convention telephone modem for making dial up access to the internet via the PSTN for upstream data transmissions through the server of the internet service provider. Downloads from the internet or a video server or some other digital service server are beamed up to the satellite and retransmitted on the downlink addressed to the specific user that requested the downlink. All other decoder boxes coupled to satellite dishes that received the same broadcast reject the packets so received as not addressed to them.

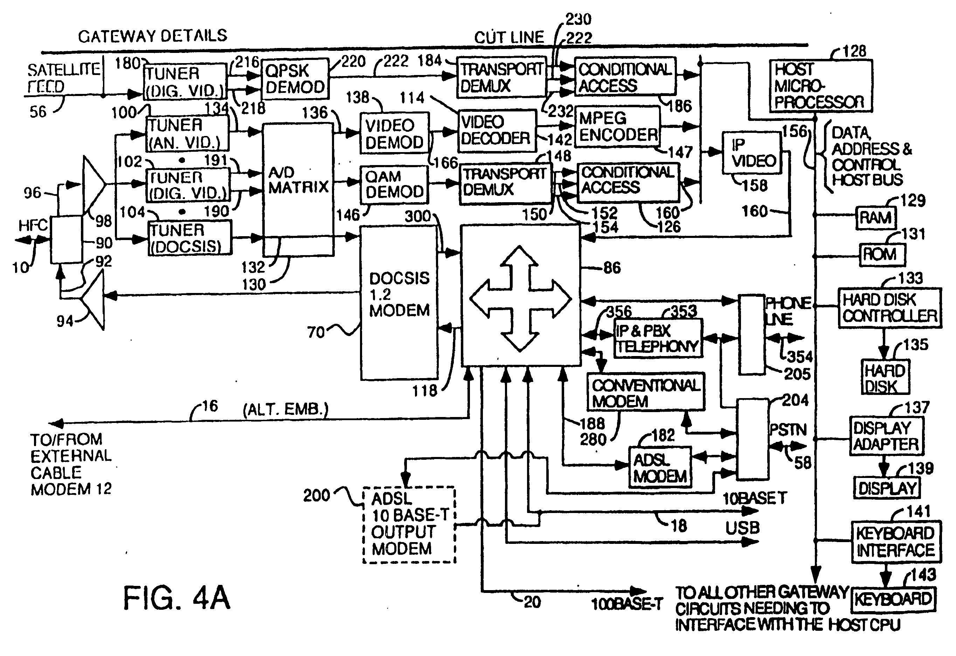

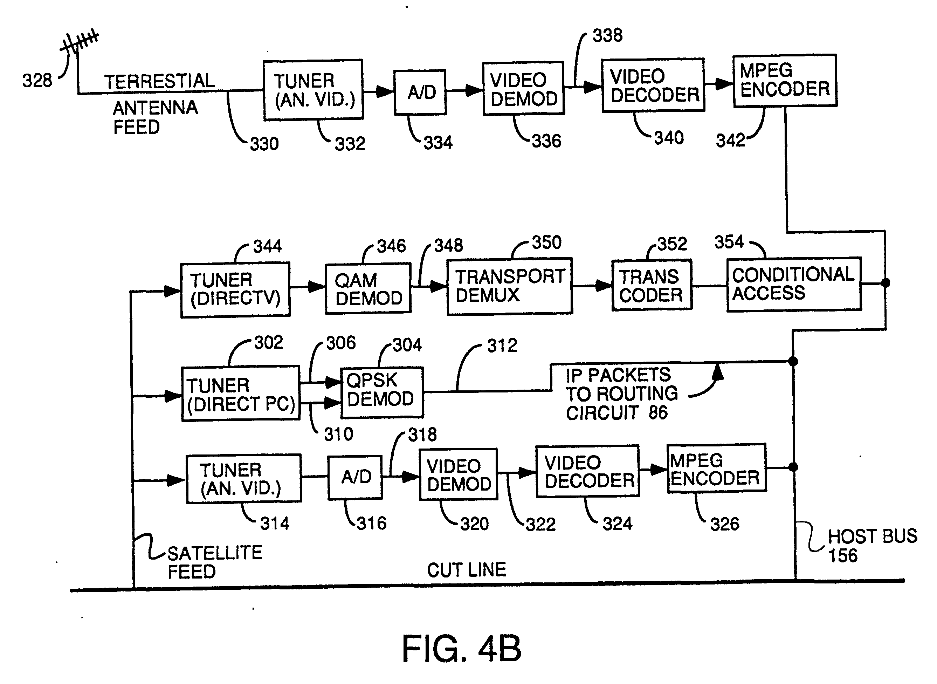

In the embodiment shown in Figure 3, a cable modem 12 is shown externally to the gateway with the output IP or Ethernet packets encapsulating IP packets or ATM cells on bus 16 for coupling into the packet switching process inside the gateway. The preferred embodiment however is as shown in Figures 4A and 4B with the cable modem circuitry inside the gateway as shown at 70. The particular cable modem shown at 70 is labelled as DOCSIS 1.2 compatible, but it can be any known cable modem design as can the external cable modem.

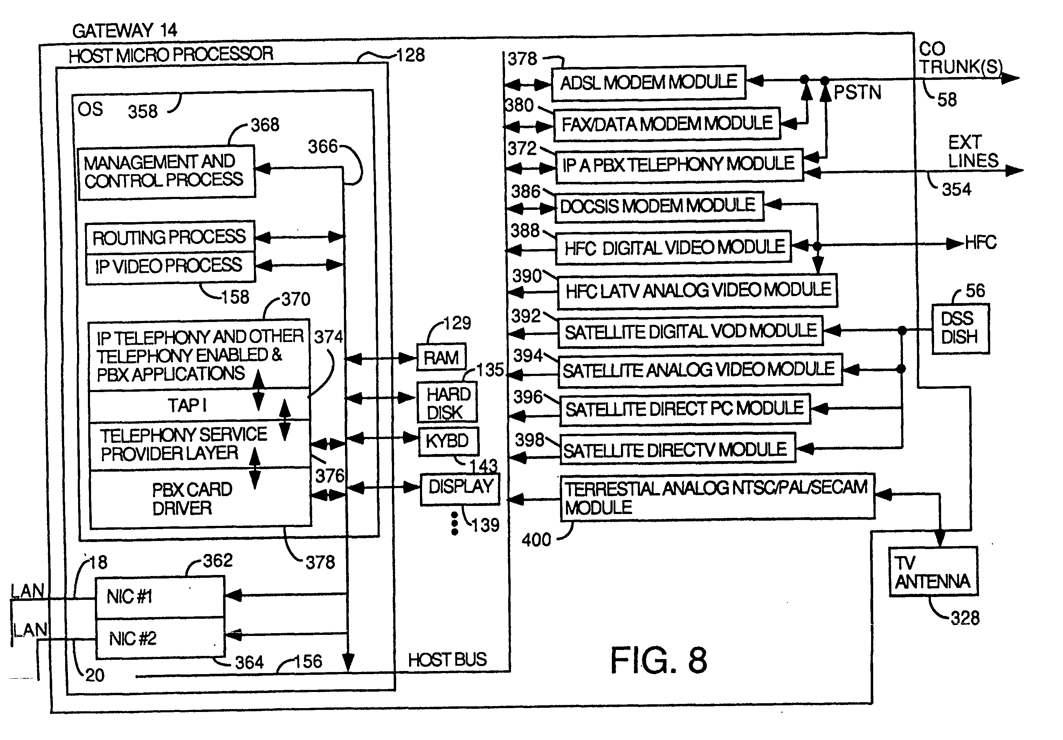

Referring to Figures 4A and 4B, we turn now to more specific information about each of the possible subscription services digital data delivery networks and the interface circuitry in the gateway 14 needed to couple each said external network to the LAN at the customer site. The gateway 14 can be a standalone circuit with all the interface circuits needed to interface to one or more external networks included as a permanent part thereof with no plug-in expansion capability as opposed to the preferred modular construction shown in Figure 8 where external network interface circuits may be added as needed.

First, digital data services may be delivered by a coaxial cable 10 which represents the drop line in a cable TV HFC network (not shown). The cable TV network has a head end modem (not shown) which couples the HFC cable CATV plant to wide area networks such as the internet as well as the public service telephone network (hereafter PSTN) through one or more routers, bridges or gateways (not shown). The head end modem may also couple the HFC to local servers such as VOD servers.

Digital data encoding video signals, telephone service, data being received from the internet etc. is modulated by the head end cable modem onto one or more downstream channels for simultaneous transmission on the HFC cable plant with regular analog cable TV programming. The cable TV channels each have their own frequency so as to not conflict with each other. The downstream digital services data is modulated onto a carrier that has a frequency that does not conflict with the frequencies of the cable TV programming nor with upstream data which is modulated onto a different upstream carrier frequency. Data from different sources is multiplexed on both the downstream and upstream channels by any known means including time division multiplexing, code division multiplexing, synchronous code division multiplexing or frequency division multiplexing.

Digital data can be delivered over the HFC using Asynchronous Transfer Mode (ATM) or ATM over B-ISDN type services adapted for HFC and the particular type of transmitters, modulation and multiplexing being used. ATM and B-ISDN (Broadband ISDN) are inexorably linked, and there are a plurality of standards set by ITU-T that are in existence which are incorporated by reference herein. Those standards are: I.113; I.121; I.150; I.211; I.311; I.321; I.327; I.361; I.362; I.363; I.413; I.432; I.555; and I.610. ATM Forum Implementation Documents of significance that are incorporated by reference herein are: ATM User-Network Interface (UNI) Specification for PVCs; ATM Broadband Intercarrier Interface (B-UNI) Specification and ATM Date Exchange Interface (DXI) Specification; Internet Engineering Task Force Requests for Comment (RFC) that are incorporated by reference are: RFC 1483: Definition of Multiprotocol Encapsulation over AAL5; and RFC 1577: Definition of Internet IP over ATM.

ATM is the delivery mechanism of choice since its small 48-octet payload and 5-octet header in each cell lends itself well to video, image, facsimile, voice or data. Further, the fixed cell size gives routers and switches the advantage of predictability, as compared to a variable length frame. These two considerations yield decreased delay as data moves through the switching system and across the transmission links in frequent little blasts. No long frames need to be transmitted tying up switch ports and thereby causing delays for frames from other sources that need to use the same ports. ATM also has the advantage of being able to adjust the amount of bandwidth required to support a session during the session. However, ATM networks do not provide either error detection and correction or protocol conversions. Those functions are left up to the user.

Likewise, digital data may be delivered over HFC using Discrete Multi Tone (DMT) technology typically used in ADSL but adapted to HFC and the particular type of transmitters, modulation, multiplexing being used. DMT is a new technology developed for ADSL delivered via twisted pairs that uses DSPs to pump more than 6 Mbps of video, data, image and voice signals over todays existing one pair copper wiring, but it could also be used to transmit data over HFC cable plants. DMT provide 4 asymmetric "A" channels at 1.5 Mbps each of which can provide an VCR quality signal and which can be ganged together such that two A channels can deliver a "sports" quality video channel and all four A channels operating together can deliver digital Extended Definition TV signals. DMT also delivers one "H zero" channel at 384 Kbps to deliver Northern Telecomm's multirate ISDN Dialable Wideband service or equivalent. This channel can also be used for work-at-home telecommuters for high bandwidth access to the corporate LAN using Northern Telecomm's DataSPAN or other frame relay services. DMT also delivers one ISDN Basic Rate channel containing two "B_" channels at 64 Kbps and one "D" channel at 16 Kbps. The Basic Rate channels allow access to a wide range of emerging ISDN services without requiring a dedicated copper pair or the expense of a dedicated NT1 unit at home. These channels also permits the extension of Northern Telecom's VISIT personal video teleconferencing services to the home at fractional T-1 rates (Px64). DMT also delivers one signalling and control channel operating at 16 Kbps giving the home user VCR type control over VOD movies and other services including fast-forward, reverse, search and pause functions. Finally, DMT also delivers embedded operations or overhead channels for administration, internal system maintenance, audits etc. All this is delivered without interrupting the POTS service if it is delivered over a copper pair. HFC could also potentially deliver POTS, but without a dedicated pair to each home, such service would be subject to congestion and loss of POTS to entire neighborhoods served by a single cable in case of a failure of the cable.

In the embodiment shown in Figure 3, digital data on the HFC drop line is recovered by any known cable modem 12. One example of a suitable cable modem using SCDMA upstream multiplexing is given in PCT publication WO 97/08861, published 6 March 1997, which is hereby incorporated by reference. One example of software and hardware in the cable modem 12 which is Docsis 1.2 compatible is given in the following U.S. patent applications, all of which are hereby incorporated by reference: serial number 09/074,036, filed 5/6/98 entitled APPARATUS AND METHOD FOR SYNCHRONIZING AN SCDMA UPSTREAM OR ANY OTHER TYPE UPSTREAM TO AN MCNS DOWNSTREAM OR ANY OTHER TYPE DOWNSTREAM WITH A DIFFERENT CLOCK RATE THAN THE UPSTREAM; serial number 09/152,645, filed 9/14/98, entitled METHOD AND APPARATUS OF USING A BANK OF FILTERS FOR EXCISION OF NARROW BAND INTERFERENCE SIGNAL FROM CDMA SIGNAL; serial number 09/152,643, filed 9/14/98, entitled TWO DIMENSIONAL INTERLEAVE PROCESS FOR CDMA TRANSMISSIONS OF ONE DIMENSIONAL TIMESLOT DATA; serial number 09/337,167, filed 9/21/99, entitled MIXED DOCSIS 1.0 TDMA BURSTS WITH SCDMA TRANSMISSION ON THE SAME FREQUENCY CHANNEL; serial number 08/760,412, filed 12/4/96, entitled LOWER OVERHEAD METHOD FOR DATA TRANSMISSION USING ATM AND SCDMA OVER HYBRID FIBER COAX CABLE PLANT published as PCT publication WO 97/34421 on 18 Sept. 1997. The PCT publication WO 97/34421 published on 18 Sept. 1997 explains hardware and software for transmitting IP packets received from the internet over HFC using ATM cells and virtual channels to a remote unit cable modem and distributing the data to peripherals via a local area network. Specifically, WO 97/34421 teaches:
receiving Internet Protocol packets directed to an entity having an IP address out on a LAN at a customer premises and looking up Ethernet source and destination addresses mapped to that IP address and generating an Ethernet header and appending it to the IP packet;
adding RFC 1483 bits and CRC bits and sufficient pad bits to make up an integer number of ATM cell payload section of 48 bytes to result in an AAL5 format packet;
parsing the resulting AAL5 packet into a plurality of ATM cell payload sections of 48 bytes each;
adding a standard 5 byte ATM cell header to each ATM cell;
encoding the PTI field of the ATM cell header with a bit which signals which cell is the last cell in the packet;
outputting the ATM cells to a formatter circuit in the head end cable modem as an OC3 TDMA stream;
optimizing ATM cell headers to reduce the size of the headers down to two bytes comprising the 16 least significant bits of the VPI/VCI field and encoding the last cell data into two 9th bits of the two 9-bit sections of the downstream optimized ATM cell header;
encoding the 9th bits of each of the first eight "bytes" (byte here is used in the sense of a 9-bit entity);
parsing the optimized ATM downstream cells into 9-bit bytes and sending them as a TDM stream to the headend cable modem downstream transmitter for transmission (this transmitter can be any conventional transmitter but preferably is an SCDMA transmitter which divides each 9-bit byte into three tribits and interleaves them into elements of an information vector that correspond to virtual channels assigned to the particular modem to which each 9-bit byte is directed, and spreading the spectrum of the information vector using one or more spreading codes assigned to the one or more assigned virtual channels);
headend cable modem transmitter encodes the 9-bit bytes and modulates them onto a downstream carrier for transmission over virtual channels from a head end over HFC to a remote unit (RU) cable modem.

The optimized system uses a two level addressing scheme and a mapping between each logical channel and the assigned RU for that channel. The two byte header in the downstream optimized ATM cell identifies the single logical channel upon which the data is to be transmitted, and this single logical channel corresponds to a single one of the multiple RUs. The Ethernet address of the particular process or peripheral at the RU to which the payload data is to be directed once it arrives at the RU is included as several bytes in the payload data.

At the RU cable modem (12 in Figure 3 or 70 in Figure 4A), the 9-bit bytes are recovered, reassembled into AAL5 packets and encapsulated into one or more Ethernet packets for transmission over the LAN. Specifically, the RU cable modem carries out the following processing:
the incoming signals from the cable drop 10 are demodulated, demultiplexed and detected in accordance with whatever multiplexing and modulation schemes that were used by the headend downstream transmitter for the transmission on separate logical channels so as to recover the 9-bit bytes;
a formatter circuit finds the ATM cell boundaries by examining the 9th bits for the start code and reassembles the 50-byte optimized downstream ATM cell;
the formatter in each RU examines the 2-byte header in each ATM cell to determine if the ATM cell is directed to that RU and discards the cell if it is directed to another RU (RU and cable modem at the customer premises) are used interchangeably herein) and forwards it to a segmentation and reassembly circuit (SAR) as a Utopia data stream if the cell is directed to this RU;
the SAR recovers the AAL5 packet boundaries by finding the RFC 1483 bits and the last cell code and reassembles the AAL5 packet and error checks it using CRC bits and stores the corrected AAL5 packet in memory for retrieval by an Ethernet controller and passes a pointer to the packet to the Ethernet controller;
the Ethernet controller retrieves the AAL5 packet pointed by each pointer and strips off the RFC 1483 bits and sends the remaining bits as an Ethernet packet (after stripping the RFC 1483 bits, the remainder is an Ethernet header followed by an IP header followed by a payload section).
In the embodiment of Figure 3, if the cable modem 12 has the structure and functionality just described, gateway 14 receives the downstream Ethernet packet on line 16 and simply couples them through a packet switching process on the gateway onto the appropriate LAN subnet (if more than one LAN is used in the customer premises). If only one LAN is used, the Ethernet packets can simply be delivered to an Ethernet Network Interface Card in the gateway for driving out onto the LAN. Likewise, Ethernet packets received from the LAN having IP addresses indicating they are directed to processes coupled to the wide area networks to which cable modem 12 is coupled are routed through the gateway to the cable modem 12. There, they are transmitted on an upstream channel assigned to cable modem 12 and recovered by the head end modem and coupled to the internet through a router at the head end.

Other examples of high speed cable modems which could be used for cable modem 12 are given in Azzam, *High Speed Cable Modems,* (McGraw Hill 1997), ISBN 0-07-006417-2, which is hereby incorporated by reference.

Typically, the local area networks 18 and 20 are 10Base-T phone lines or Cat 3, 4 or 5 UTP (twisted pair) type LANs with any topology. These LANs are inexpensive and there many sources of inexpensive network adapters, hubs and peripherals. The physical media of the LAN(s) 18 and 20 can be provisioned as a twisted pair phone line with which the customer premises is already wired or it can be CAT 5 wiring, or an RF or infrared wireless LAN system, or the coax of the cable TV system that runs through the house can be used for a ThickNet (10Base-5) or ThinNet (10Base-2) LAN. The latter case assumes the coax has been disconnected from the standard CATV drop line feed and is coupled to TV set peripherals only indirectly through the cable modem 12. However, it is also possible to maintain the connection of coaxial cable running throughout the premises to the HFC cable drop 10 for delivery of FDMA analog CATV programming channels to various TVs and VCRs in the house and use the 10Base-T or wireless LAN for delivery of digital services to the various peripherals through network adapter circuits.

Figure 3 shows gateway 14 as coupled to two LANs 18 and 20 one of which is high speed and the other of which is low speed The high speed LAN may be 100BaseT and is used to deliver high bandwidth consuming services such as video conferencing, video on demand, high speed internet access. There may be one or more LANs coupled to the gateway. If there is more than one LAN, the gateway 14 also provides a routing function to get the Ethernet packets onto the appropriate LAN to which the peripheral having the IP address in the packet is coupled.

The local area networks 18 and 20 also serve the dual purpose of allowing the computers on the network to communicate with each other and share resources such as shared hard disks, printers etc. For example, PC 22, which is typically a Windows based personal computer but which may also be a Macintosh or other workstation, can communicate with network computers 24 and 26 to allow files created on the hard disk of PC 22 to be accessed by the network computers or to have documents created on the network computers 24 and 26 stored on the hard disk of PC 22. Through the gateway 14 and an internal ADSL modem or the cable modem, the network computers can also access the internet and download web pages, send e-mail etc.

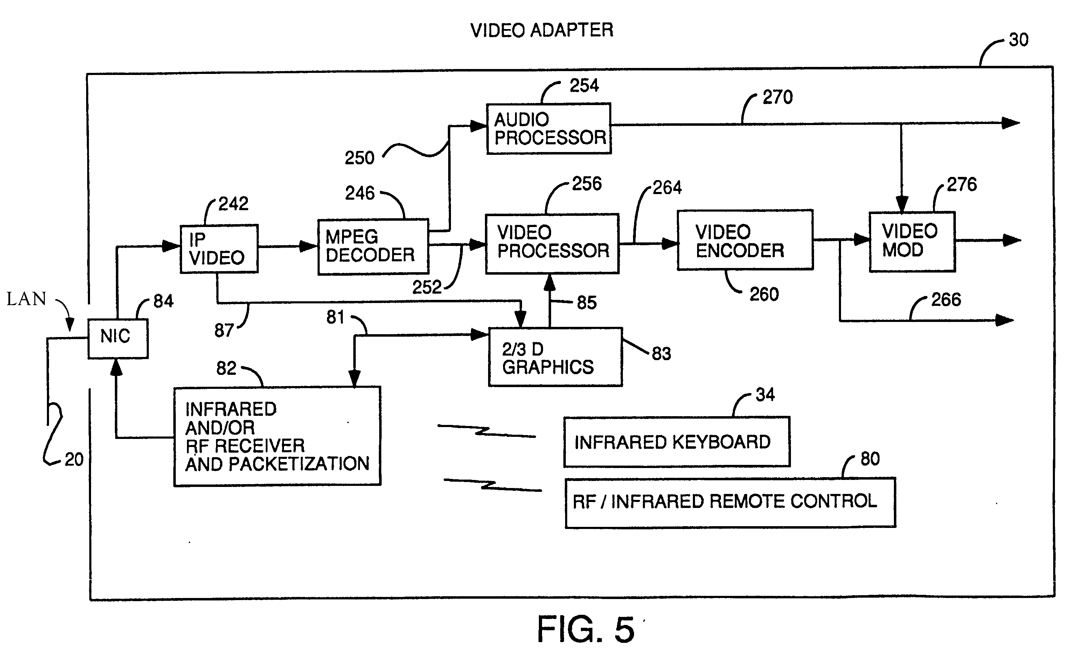

Television set 28 is coupled to the local area network 18 via a network adapter 30 which functions to convert the compressed digital data in received Ethernet packets to video signals on line 32. The TV may be used in interactive communications so upstream data can be sent through the use of an infrared or RF wireless keyboard 34. Such data might include the title or number of a VOD movie to be ordered or upstream text to be sent in a multimedia interactive presentation. In addition, an infrared or RF remote control 80 can be used to transmit commands to the network adapter 30 such as play, pause, slow motion, stop, rewind etc. to control video on demand services. Information the consumer wishes to send is entered on the keyboard and communicated to the network adapter 30 via infrared or RF transmission from the keyboard 34 and/or remote control 80. The data transmissions are received, demodulated and detected to recover the data and the data is addressed and packetized into IP packets encapsulated inside Ethernet packets by an infrared and/or RF receiver 82 in the network adapter 30 (see Figure 5 which is a block diagram of the network adapter 30). The Ethernet packets containing the upstream VOD request data are addressed to the gateway 14. These packets are launched onto the LAN 20 by a network interface card 84 which does the media access control and physical layer protocols of whatever LAN is in use such as CSMA/CD in the case of Ethernet LANs.

The IP packet encapsulating each VOD request is addressed to the particular video server which will supply the data. Standard mouse or touchpad type technology in the infrared keyboard and/or remote control 80 sends pointer information to receiver 82 so that the user can request menus from each video server and point to a video selection from each menu displayed on the TV. In one embodiment, the remote control 80 or IR keyboard 34 has function keys that may be pushed to request menus of VOD selections from the satellite, HFC and ADSL video servers. When these function keys are pressed, the receiver 82 converts the request into an IP packet addressed to the appropriate video server requesting transmission of the current menu data. The menu data listing currently available selections is sent as downstream IP packets addressed to the video adapter having the IP address that was the source address of the menu request packet. These IP packets reach the IP video circuit 242 where they are recognized and routed via bus 87 to the 2/3D Graphics circuit 83 which converts the data into graphics data signals on line 85 which will be used to display the menus.

When the user points to a particular menu selection on a displayed menu, this pointing information is transmitted to the receiver 82 and converted to graphics commands which are transmitted via line 81 to optional 2/3D graphics circuit 83. The graphics circuit 83 creates graphics for overlay on the TV display, and the pointer information is converted to a graphics image such as a pointer or hand which the user can move on the displayed menu by use of a mouse or touchpad. When the user points to a VOD selection and gives an "order" command, the menu in which the pointer lies is transmitted via bus 81 to the receiver 82 and the position on that menu where the pointer currently is located is determined by graphics circuit 83 and transmitted to the receiver 82. The menu and current position data so determined are mapped to an IP address of a particular server and a particular VOD selection available from that server. The receiver 82 then uses the IP address of the video server as a destination address and its own IP address as a source address and the requested selection to create an IP packet bearing the VOD request. This packet is then encapsulated into an Ethernet packet addressed to gateway 14 and sent to the gateway via the NIC 84 and the LAN 20. The gateway strips off the Ethernet header and routes the IP packet to the appropriate video server via the appropriate upstream media for that video server.

In alternative embodiments, the user may simply type in the number of a category of video from a displayed menu of available categories and the number of a video selection on the displayed menu. The menu number and program number are then converted into a VOD request IP packet by the receiver 82 and then encapsulated into an Ethernet packet addressed to the gateway 14. The gateway 14 then processes the VOD request as described above.

When the upstream VOD request packet reaches the gateway 14, it is processed by the Ethernet (or other LAN protocol) to IP protocol conversion and routing process (hereafter referred to as the routing circuit) carried out by the host computer circuitry and the software processes symbolized by block 86 in Figure 4A (Figures 4A-4B together are a block diagram of one embodiment of the gateway). The routing circuit 86 then routes the VOD request packet to the appropriate subscription service data delivery network for delivery to the process/target device named in the IP destination address.

The routing circuit 86 is shown as a separate logical block in Figure 4A from the host microprocessor 128 and its associated peripherals: random access memory 129, nonvolatile memory 131 to store the bios, hard disk controller 133 and the hard disk 135 it controls, display adapter 137 and display 139, keyboard interface 141 and keyboard 143. All of these peripheral devices are conventional. In an actual circuit, the routing circuit 86 is usually the host microprocessor programmed to do the IP to Ethernet and vice versa protocol conversions, routing table construction and packet routing functions along with any other functions necessary for a router including network interfaces and any other functions required of the routing process described in the flowcharts herein. Descriptions of gateways, routers, the Internet Protocol and IEEE 802.3 Ethernet local area networks are found in Tanenbaum, *Computer Networks, 2nd Ed.* (Prentice Hall 1989) ISBN 0-13-162959-X, and Stallings, *Data and Computer Communications, 4th Ed.,* (MacMillan Publishing 1994) ISBN 0-02-415441-5, which are both hereby incorporated by reference.

The function of the gateway is to provide protocol conversion, packet format conversion, video, voice and data demodulation, detection and demultiplexing services, conditional access control to prevent non subscribers from receiving services they have not subscribed to. The gateway 14 performs the functions of a cable modem and a set-top decoder box for a satellite digital data subscription service such as DirectPC and performs the functions of an ADSL modem. As part of this interface circuitry, the gateway performs MPEG encoding services, IP video. IP video comprises the process of recovering downstream IP packets and sending them to an input port of a routing process and receiving Ethernet upstream packets and converting them to IP packets and sending them upstream. The gateway also performs IP telephony services (similar to the IP video services except for telephony over the internet) as well as switching and routing services. More details about the structure and operation of the gateway will be included below.

It is up to the network interface cards of the peripherals to receive the Ethernet packets from LAN 18, determine if they are directed to the Ethernet address of that peripheral, convert the payload data to a format useable by the peripheral, and to transfer the data to the process having the IP address in the packet.

Assuming that the service being carried by the home network requires bidirectional data transfer and ATM is to be used upstream, the upstream data transmission process from the peripheral to the internet via the cable modem 12 is as follows assuming the cable modem is of the type defined in PCT publication WO 97/34421 which is incorporated by reference herein:
the application process that needs to send upstream data outputs one or more Ethernet packets onto the LAN 18 which include the IP address of the entity on the internet to which the data is directed;
each Ethernet packet gets routed through the gateway 14 to the cable modem 12 if it has an IP address which indicates it is directed to an entity on the internet to which the gateway is coupled through the cable modem 12;
the SAR in the RU cable modem adds pad bits to each Ethernet packet, computes CRC-32 error detection bits, and adds RFC 1483 bits such that the resulting packet is an integer multiple of 48 bytes;
the SAR parses the packet into multiple 48-byte ATM cell payload sections with no header bytes, adds standard 5-byte ATM cell headers to each payload section using a virtual link identifier which identifies the virtual upstream channel assigned to that RU to construct the VPI/VCI fields and using last cell, normal cell and idle cell information to construct the PTI field and calculates a HEC field and transmits the resulting ATM cells to a formatter as a Utopia stream;
the formatter adds a 9th bit to each byte in the cell and encodes the 9th bits with a start code, last cell, normal cell and idle cell codes using the information in the PTI field of each ATM cell header;
the formatter strips off the 5-byte header of each ATM cell while saving the information and then parses each upstream ATM cell into 9-bit bytes and places one 9-bit byte into each timeslot of an upstream information vector which corresponds to the virtual channel assigned to this RU modem and transmits the information vector to the upstream transmitter in the RU cable modem 12 using the information in the VPI/VCl field of the header to identify which virtual channel in which each 9-bit byte from each ATM cell is to be transmitted;
the upstream transmitter of the RU modem transmits the upstream data in the appropriate virtual channel such as by spreading the spectrum of the 9-bit bytes using one or more spreading codes assigned to the virtual channel(s) assigned to the RU;
the spread spectrum data is then transmitted on the upstream carrier;
the receiver in the headend cable modem receives the upstream transmissions from each RU and demodulates, demultiplexes and detects the transmitted data of each 9-bit byte and places the recovered 9-bit bytes into the timeslots on a TDMA bus which correspond to the logical channel in which the data was received;
a formatter process in the headend modem demultiplexes the TDMA stream and reassembles the 48-byte optimized upstream ATM cells using the signalling data in the 9th bits and places each ATM cell in a portion of a cell buffer dedicated to storing ATM cells from the RU which generated the data using the timeslot data to determine from which RU each ATM cell arrived;
a cell output controller process then retrieves each 48-byte ATM cell and generates a standard 5-byte header and transmits the standard 53-byte ATM cell in an OC3 format data stream to a segmentation and reassembly circuit in a router in the headend cable modem;
the SAR error checks the 53-byte ATM cell using the HEC field and strips off the header bytes while retaining the VPI/VCI and the PTI field information and reconstructs the AAL5 sequence using RFC 1483 bits and the last cell data encoded in the PTI field to find the packet boundaries and by concatenating 48-byte payload sections of the ATM cells and error checks the packet using CRC bits;
if no errors are found, the RFC 1483 bits and the CRC bits and pad bits are stripped off to leave an Ethernet packet header, an IP header and a payload section and the result is sent to a router for routing on the appropriate subnet to get to the destination having the IP address somewhere out on the wide area network.
If the cable modem 12 has the architecture of any of the cable modems described in Azzam, *High Speed Cable Modems,* suitable modifications to the above described downstream and upstream processes described above can be made, or the upstream and downstream processes used in those modems can be used for delivery of the same digital services they have used in the prior art to deliver. For example, any of the cable modem hardware and software structures known in the prior art which have been used in the actual field trials identified in Azzam, *High Speed Cable Modems,* Chapter 14, Section 14.2, pp. 512-518 (McGraw Hill 1997), ISBN 0-07-006417-2, may be used, and all of these modem designs are hereby incorporated by reference. The cable modems whose circuitry and software is incorporated by reference herein include: the LANcity Personal; Hybrid Networks Cable Client Modem 211; Zenith HomeWorks Elite; Motorola CyberSurfr; General Instruments SURFboard SB1000; Hewlett-Packard QuickBurst; Com21 ComPort; Toshiba and any cable modem that conforms to the IEE 802.14 standard.

Typically, the IEEE 802.14 compliant cable modem genus will contain species which have the following characteristics:
downstream data contained in one of the 6-MHz TV channels that occupy the spectra above 550 MHz;
upstream channel assigned band between 5 and 45 MHz;
64-QAM downstream modulation delivering over 30 Mbps data rate;
upstream channel using QPSK modulation or a combination TDMA and synchronous code division multiple access multiplexing techniques and QAM modulation delivering from 2 to 10 Mbps in each upstream channel;
a media access control software layer to mediate upstream access between multiple users sharing the same cable medium;
a MAC protocol which is ATM friendly using the ATM cell transport concept and possibly involving segmentation of ATM cells into smaller segments to improve system performance;
status and control information looped back from the upstream to the downstream to provide remote cable modems with status and control information to determine pecking order;
the upstream channel divided into frequency channels that are allocated to individual users or combining two multiplexing methods such as TDMA and Synchronous CDMA or CDMA.

Cable modems within this genus include circuits and software to achieve time synchronization where frame alignment is necessary for proper demultiplexing. Although not required to be within the genus, the better modems in the genus also include time synchronization coupled with TDMA and CDMA to lower intersymbol inteference as well as power alignment and adaptive equalization to minimize other forms of interference. These better modems will also include encryption such as pseudorandom scrambling or DES encryption for privacy and a MAC layer protocol that insures fairness in upstream bandwidth access.

These cable modems have been used to deliver residential online subscription services that include Internet access, Email, world news, shoppping, local content covering city government, schools, libraries and other news of the community, multimedia services, campus networking, distance learning and telemedicine, internet access to schools, Prodigy, Jones Internet Channel and work at home programs.

### Details Of Gateway Interfaces To Downstream Cable, Satellite, And ADSL.

Referring to Figure 4, there is shown a block diagram of one embodiment of gateway 14 configured as a standalone circuit where interfaces to the satellite, HFC and PSTN networks are all implemented on the circuit board. This circuitry may be an expansion card in a personal computer or it may be integrated into the motherboard of a personal computer. The other known components of the personal computer are not shown in Figure 4 for simplicity, but suffice it to say that the host CPU of the PC is coupled to circuitry shown in Figure 4 by the address, data and control buses of the PC such that the circuits that need control inputs or data from the host CPU may receive it. The control and data inputs needed by each circuit will be described when that circuit is described.

The embodiment of the gateway 14 shown in Figure 4 includes the entire circuitry of a DOCSIS1.2 cable modem 70 therein. Turning first to the interface circuitry to couple HFC to the LAN, HFC drop line 10 is coupled to an upstream and downstream combiner and isolation circuit 90. There, upstream modulated RF carrier signals on line 92 from upstream isolation amplifier or coupler 94 are coupled onto the cable 10 and downstream modulated RF signals are received from cable 10 and placed on line 96. Typically, combiner 90 will include a bandpass filter to prevent upstream RF signals from entering line 96 and may optionally include a termination for line 92 to prevent reflections. Isolation circuit 98, typically a buffer amplfier or capacitor or other circuitry such as a lighting arrester protects the internal circuitry of the gateway from any unwanted DC signals or lightning strikes on the HFC.

In the embodiment shown in Figure 4, three tuners 100, 102 and 104 are used. Tuner 100 is tuned to one of the conventional CATV analog video channels in NTSC, PAL or SECAM format. Typically, the total bandwidth of the HFC will be divided up into different frequency bands for CATV FDMA analog video channels, an upstream DOCSIS data and management and control signals band, a digital VOD signals band and a downstream DOCSIS data band. The frequency band for upstream data and management and control signals extends from 0 to about 50 MHz. Within this band, upstream DOCSIS data will be modulated onto one carrier frequency and management and control data will be modulated onto another carrier frequency. There may be multiple upstream management and control channels at different frequencies or in different timeslots or on the same frequency with the data of each management and control channel having its spectrum spread with a different spreading code. Typically, the frequency band from 50 to 500 MHz will be reserved for FDMA 6 MHz wide analog CATV video signals. Digital video data such as for VOD or teleconferencing etc. is typically modulated onto one of a plurality of different frequency channels in a band above 500 MHz with each channel being about 6 MHz wide and containing a plurality of video, audio and associated data subchannels separated by TDMA. Downstream DOCSIS data such as web pages which are downloaded during high speed internet access is typically modulated onto a carrier having a frequency somewhere above the video on demand carrier frequencies.

One of the functions of the gateway 14 is to deliver requested services to all the peripherals in the customer premises seemlessly over a shared LAN thereby eliminating the need for separate coaxial cable wiring to deliver CATV analog signals, a digital network to deliver digital data, telephone wires to deliver conventional telephone service. All these services are delivered via a single digital data distribution system comprised of one or more LANs. To that end, even CATV signals that are analog when they arrive are digitized, compressed, turned into IP packets and then into Ethernet packets and transmitted to the various televisions via a LAN.

### Reception and Distribution of Analog CATV Signals

Tuner 100 starts this process by receiving control data from microprocessor 128 defining which CATV analog video channel which has been requested. Users request analog CATV broadcast channels via their IR keyboards 34 or remote controls 80 in Figure 3. These requests are encapsulated into management and control Ethernet packets addressed to host CPU 128 by network adapter 30. The host CPU receives them and generates a bus packet on bus 156 addressed to tuner 100 telling it which channel to tune. The host bus 156 may be a PCI bus in a Windows based personal computer, but high traffic loads may bring such a bus to its knees since only two devices may use the bus to communicate at any particular time. In alternative embodiments, a high capacity multiplexed bus like an H.100 standard TDMA bus coupled by suitable bus drivers to the host bus in a computer with sufficient expansion slots for all the necessary expansion modules to implement a flexible gateway may be used. In other words, in smaller bandwidth consumption embodiments where only one or two of the expansion modules shown in Figure 8 are present, a Windows based personal computer with a PCI or ISA bus and one or two expansion slots may be sufficient. However, in higher bandwidth consumption embodiments where many or all of the expansion modules shown in Figure 8 are present or might be added as the number of services and external networks to be used grows, the gateway 14 may also take the configuration of one or more personal computers, each with a fast microprocessor and a PCI or some other fast bus, each running one or more of the software processes symbolized by Figure 8 to divide up the labor. These servers would be coupled to the LANs by one or more NICs with their one or more host buses coupled to another expansion module interface circuit board by one or more high capacity buses such as an H.100 TDMA bus, a Firewire or even FDDI or Fibre Channel Arbitrated Loop LAN technology. The expansion module interface circuit board would have a plurality of expansion slots interfaced to the high capacity bus(es) or LAN(s) coupling the expansion module interface circuit board to the one or more servers. Each expansion slot would be available to couple one of the expansion modules shown in Figure 8 to the shared software and hardware facilities of the servers. For simplicity of expression, all of these various alternative bus or LAN type interconnections between the server(s) and the modules in the expansion slots will be simply referred to as the host bus or the PCI bus 156. There will also be descriptions of circuits to the effect of placing data in PCI bus or host bus packets addressed to a particular circuit to which they are to be sent such as the IP video circuit 158 or the routing process 86. This is to be understood as actually placing the data into a packet with a destination address set to the destination circuit or process or seizing control of the host bus and writing the address of the destination circuit onto its control lines and placing the data to be transferred on the data lines and activating any necessary control signals to latch the address and strobe the data into a data register or other memory.

The RF output of tuner 100 on bus 134 is then digitized by an analog-to-digital converter in A/D matrix 130. The digital samples on line 136 are input to a video demodulator 138 which functions in the digital domain to demodulate the digitized analog video signal by removing the RF component. The video demodulator 138 outputs digital data on line 166 which represents a conventional baseband NTSC, PAL or SECAM format video signal.

The digital data on line 166 is at too high a bit rate to send over the LAN since uncompressed broadcast video is at 221 Mbps. Therefore, the video data must be compressed. MPEG II compression is preferred, but any known form of compression currently known or to be developed in the future will suffice since the form of compression is not critical. MPEG II compression circuitry is well known, and is used for MPEG encoder 146. However, MPEG compression does not compress NTSC, PAL or SECAM format signals. They must first be converted to YUV format luminance and chrominance signals. This conversion is done in video decoder 142, which is a known type of circuit in any video system that uses MPEG II compression.

The compressed video data is encapsulated into PCI (or other type) bus packets addressed to IP video circuit 158. There, the compressed video data is encapsulated into IP packets addressed to the network adapter of the TV where the CATV video channel is to be viewed. The IP video circuit 158 determines which IP destination address to use in constructing the IP packets via data received from the host microprocessor 128. When the original request was received, the host microprocessor 128, in addition to telling the tuner 100 which channel to tune, also determines from the Ethernet packet source address which TV's network adapter requested the data. The IP address of this network adapter is encapsulated into a PCI bus packet and transmitted via host bus 156 to the IP video circuit. The IP packets encapsulating the digitized CATV channel are then transmitted via bus 160 to the routing process 86.

The routing process 86 is a conventional IP to Ethernet routing process which examines the IP packet destination addresses and looks up the corresponding Ethernet addresses. The IP packets are then encapsulated into Ethernet packets and routed to the appropriate LAN network interface card for LAN 18 or 20 depending upon the Ethernet destination address of each packet. The process works in reverse for incoming Ethernet packets from the LAN(s).

When the IP packets reach the network adapter of the TV that requested the CATV channel, they are converted to a video signal that can be displayed by the TV by the circuitry described below in conjunction with the discussion of Figure 5.

### Video on Demand

One disadvantage of watching CATV broadcast channels is that there is no facility to have VCR like controls such as pause, rewind, play, slow motion or stop over the incoming video. This is one reason why VOD is more advantageous. We turn now to an overview discussion of VOD delivered via cable modem. Later, VOD delivered by ADSL modem or satellite dish will be discussed. The discussions herein regarding delivery of VOD however apply equally to delivery of video conferencing services, home shopping, distance learning and other multimedia services involving video, images or other multimedia data. Also, there is great similarity in the functions and structure of the circuitry for receiving, recovering and distributing digital VOD via satellite so there will be some seeming replication of the discussions that follow. First, a quick overview.

The VOD downstream frequency band has multiple video channels, each at a different carrier frequency. Each video channel carries multiple TDMA channels of MPEG II compressed video with its associated audio, and sometimes with one or more additional TDMA subchannels devoted to associated data.

The tuner 102 is commanded by the host microprocessor 128 to tune to a -particular VOD channel. The customer will order a particular VOD program using the IR keyboard 34 or remote control 80. The microprocessor 128 receives the order information via management and control Ethernet packets generated by the network adapter 30 and driven onto the LAN 20. As an example of how the video, audio and associated data subchannels of a VOD program are used, suppose the tuner 102 is tuned to a home shopping VOD channel where a plurality of customers wish to buy an item being shown by the video data on a first subchannel and being described on the associated audio data subchannel, there may be multiple customers who wish to buy the item who need to talk to an operator. These multiple customers can have their telephone calls digitized into IP packets on digital telephones such as 62 in Figure 1 with each packet addressed to the IP address corresponding to the telephone number shown on the screen. These packets get encapsulated into Ethernet packets and transmitted on the LAN 18 or 20 to the gateway 14. There, they are received by the switching process 86 and the Ethernet headers are stripped and the IP packets are sent to DOCSIS modem for transmission on an upstream channel.

At the headend modem, the IP telephony packets are recovered and routed to the IP address where the operators are standing by. Suppose, three callers are calling to buy the item being shown and described. The three different operators handling these calls have their speech digitized into IP packets addressed to the digital telephone being used by the caller they are talking to. These IP packets addressed to the telephones of the three different callers are QAM modulated by the headend modem modulator transmitting the VOD program and sent downstream as associated data on three different TDMA subchannels associated with the video and audio subchannels of the home shopping presentation.

The host microprocessor 128 tells tuner 102 which channel in the VOD band to tune to via control data transmitted via data, address and control bus 156 (also referred to as the host bus). The RF tuner 102 tunes to that channel and rejects all other signals.

Then the video, audio and associated values for each video, audio and data QAM modulated constellation point is recovered by the QAM demodulator 146.

The recovered data values are then separated by transport demultiplexer 148 into video, audio and associated data streams on lines 150, 152 and 154. The transport demultiplexer receives control data from the host microprocessor via data, address and control bus 156 which tells it which subchannels to separate out in the demultiplexing process.

A conventional conditional access circuit 126 then decrypts the recovered data to prevent any unauthorized access thereto. The decryption process can be the same process used in current Ku band satellite digital video delivery or any other conventional encryption process. Since VOD subchannels are sent to only particular users, the data can be encrypted by PGP using the public key of the user to which the data is directed. That user then uses her private key to decrypt the data.

The conditional access circuit has a conventional PCI or other bus interface circuit. Typically the gateway is implemented as one or more circuit boards on a personal computer such as a Pentium class or PowerPC Macintosh which has a system bus. Any system bus which is fast enough to carry the worst case system load bit rate will suffice. The worst case system load is based upon the number and type of peripherals in the house. Typically, a compressed digital video channel can be delivered with good picture quality at 2 Mbps, so if a household has 4 TVs all of which are tuned to a different VOD channel and one video conference going on, 10 Mbps should be adequate. PCI buses have maximum bit rates much above 10 Mbps so a PCI bus for system bus 156 is adequate for most applications. The conditional access circuit's bus interface packetizes the decrypted video, audio and associated data into PCI bus packets which are addressed to an IP video circuit 158 and placed on bus 156 via line 160.

The IP video circuit receives the PCI bus packets and encapsulates the video and audio data into IP packets addressed to the network adapter 30 which ordered the VOD program. The associated data is encapsulated into IP packets addressed to telephone 62 (or whatever telephone is being used to converse with the operator). The IP packets are then transmitted via line 160 to the routing procss 86.

The routing process 86 is a conventional IP to Ethernet routing process which examines the IP packet destination addresses and looks up the corresponding Ethernet addresses. The IP packets are then encapsulated into Ethernet packets and routed to the appropriate LAN network interface card for LAN 18 or 20 depending upon the Ethernet destination address of each packet. The process works in reverse for incoming Ethernet packets from the LAN(s).

We now turn to a more detailed discussion of the process carried out by the system to receive VOD via either satellite, HFC or ADSL.

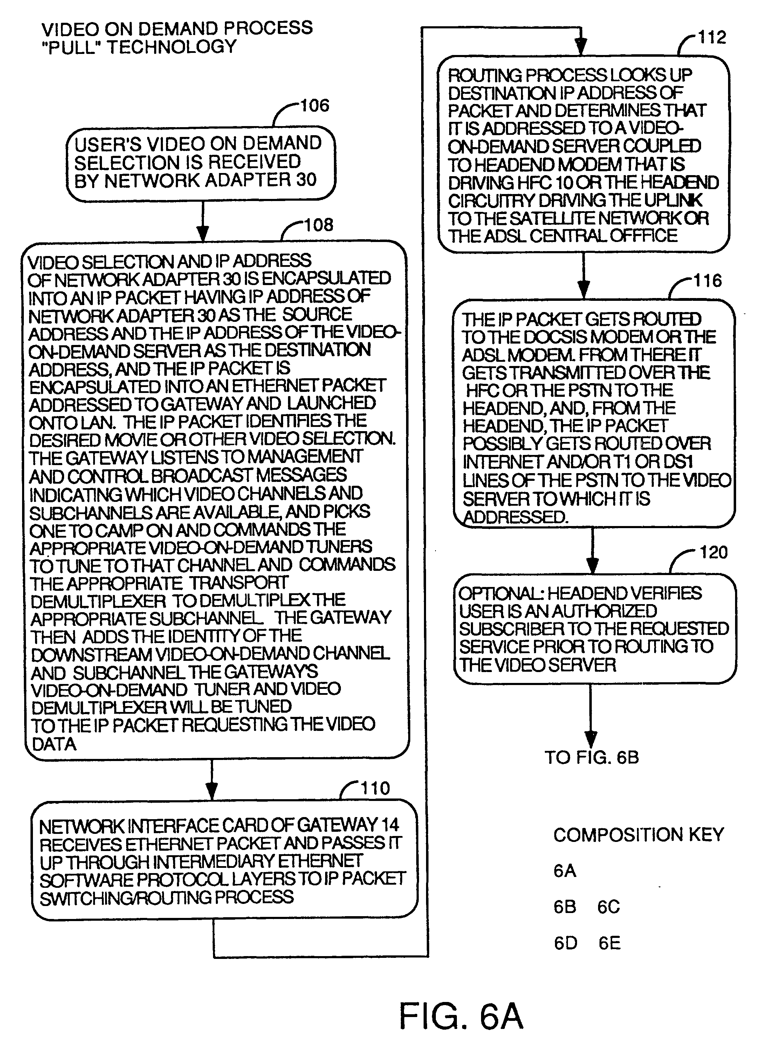

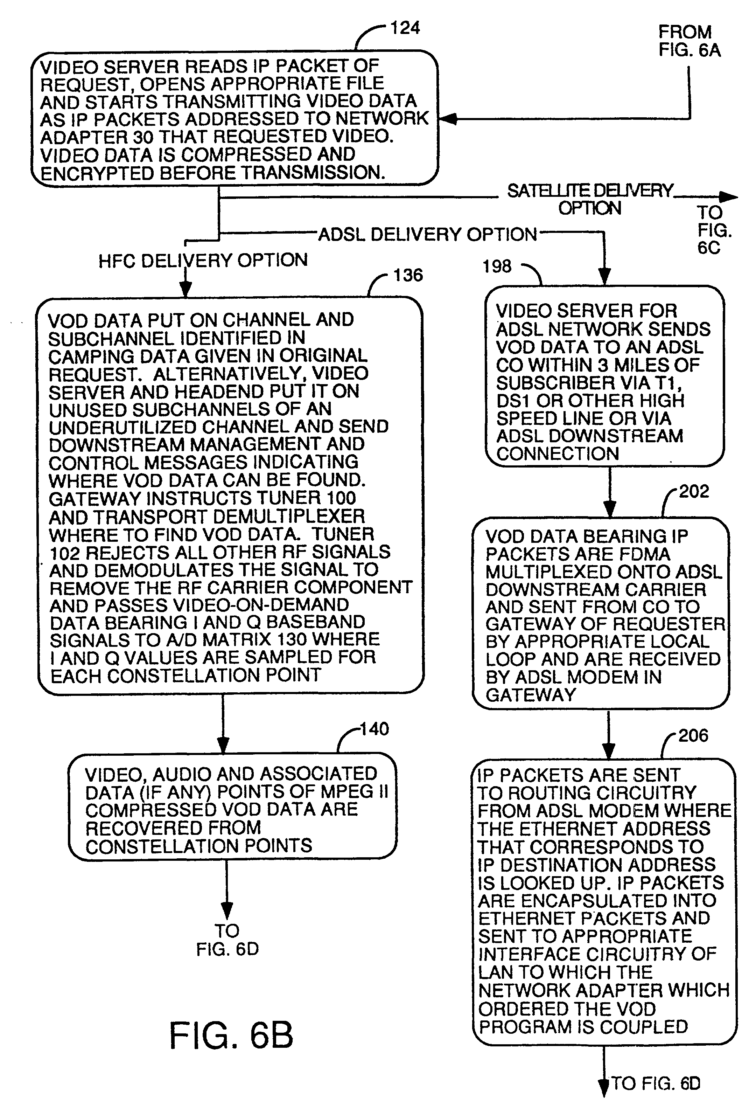

Figures 6A-6E together comprise a flowchart of the preferred embodiment of the processing which occurs in the system to order a VOD selection via either HFC, satellite or ADSL modem. Referring jointly to Figures 4A and 4B, 5 and 6A-6E, a user orders a particular video program via the IR keyboard 34 or remote control 80 acting as a pointing device to point to a displayed menu selection on TV 28 in Figure 3. That selection is received by the IR or RF receiver 82 in Figure 5, as symbolized by step 106 in Figure 6A. The video selection along with the IP address of network adapter 30 is encapsulated in an IP packet and then encapsulated in an Ethernet packet by network adapter 30 and launched onto LAN 20 (step 108). The IP packet has the IP address of network adapter 30 as its source address and the IP address of the VOD server as its destination address. The IP address will usually be different depending upon whether the VOD selection has been ordered via HFC, satellite or ADSL since each network probably has its own video server. The user typically picks the VOD selection from a menu displayed on her screen for each network, so by pointing to the desired selection on the menu of the ADSL network, for example, the IP address is set to the IP address of the video server for the ADSL network.

The network adapter encapsulates the IP packet requesting the video selection in an Ethernet packet (step 108). The Ethernet packet destination address is the routing process 86 in the gateway. The IP packet payload message identifies the movie or other video program desired and, in some embodiments, identifies the particular VOD channel and subchannel the gateway's VOD tuner will be tuned to (step 108). MPEG II compressed video is transmitted on two or more subchannels (one video, one associated data and zero or more associated video subchannels), and this is done regardless of whether the delivery media is HFC, satellite or ADSL. Step 108 represents the preferred process wherein the headend of the HFC, satellite network or ADSL central office monitors the channels and subchannels for load and sends downstream load balancing messages indicating which channels and subchannels are free. These load balancing messages are monitored by the gateways, and the channels and subchannels that are available are selected by the gateways for "camping" thereby helping balance the load across the network. In other embodiments however, the video server and/or headend may simply put the requested video selection on any unused subchannels of a channel that is not fully occupied and sends a downstream management and control message to the gateway from which the request originated indicating where the requested video selection will be found. The host microprocessor 128 in the gateway then sends data to its circuitry to cause the right channel to be tuned and the right subchannels to be demultiplexed. The "subchannel" means the particular timeslots or spreading codes to use in receiving the video data when tuned to the frequency of the "channel". In embodiments where only one video subchannel per channel is carried, then subchannel and channel mean the same thing.

In the preferred embodiment, the headend modem (or other headend circuitry such as the uplink transmitting center in the case of satellite or the ADSL central office - hereafter these other headend circuits will be referred to as headend modems for brevity) has a plurality of VOD modulators/transmitters (hereafter called modulators), each of which is coupled to the VOD server and each of which receives a plurality of streams of MPEG II compressed video data. Each modulator is structured to transmit one VOD channel downstream with the plurality of MPEG II compressed video/audio/associated data streams being multiplexed therein by TDMA, CDMA or Synchronous CDMA.

To implement the preferred form of load balancing, the headend modem keeps track of which subchannels of each downstream VOD channel are in use. It then broadcasts management and control messages to all gateways via the HFC, satellite downlink or ADSL lines of subscribers indicating which VOD channels and subchannels are available and which upstream channels the gateways are to use in sending messages that indicate that a gateway has "camped" on a particular channel and subchannel.

The meaning of the term "camped" or "camping" is as follows. The gateways receive these broadcast load balancing messages and the host CPU of each gateway with a pending VOD request commands their VOD tuners (such as tuners 102 or 180 or a corresponding tuner in ADSL modem 182 in Figure 4A) to tune to a channel that has an available subchannel, as symbolized by step 108. The host CPU then commands the appropriate transport demultiplexer (e.g., demultiplexer 114 for HFC delivery or demultiplexer 184 in the case of satellite or a similar but not shown demultiplexer in the ADSL modem 182) to demultiplex and select out only the compressed video and audio data subchannels carrying the requested program as well as the associated data subchannels. "Camped" or "Camping" therefore means tuning of the appropriate digital VOD tuners and transport demultiplexers in the gateway to a particular channel and subchannel.

The channel and subchannel camping information is included by the gateway in the IP packet bearing the upstream video request, or is included within a separate IP packet generated by the gateway that refers to the IP packet bearing the VOD request, also as symbolized by step 108. This camping data aids the video server or router in the headend modem (or the corresponding circuitry in a satellite or ADSL VOD network) to get the requested video data to the correct modulator which is transmitting on the VOD channel to which the gateway coupled to the requesting IP address is tuned. The channel and subchannel data included in the upstream message is also used to control that modulator to put the video and associated audio data on the subchannel to which the gateway is tuned.

Continuing with the discussion of Figure 6A, the Ethernet packet is received by switching process 86 (after it passes through the network adapter card of the host computer and up through the Ethernet protocol layers where the Ethernet header is stripped off as symbolized by step 110). The switching process looks up the destination address of the IP packet in a lookup table and determines from the destination address of the IP packet that it is directed to a VOD server coupled to the headend modem driving HFC 10 or the headend circuitry driving the uplink to the satellite or to the ADSL central office (step 112).

Step 116 represents the general process of transmitting the IP packet containing the VOD program request to the appropriate video server over the appropriate transmission media. The following paragraphs discuss the various cases individually, and step 116 is to be interpreted as covering each of these individual cases depending upon which video server is addressed by the IP packet. The following discussion assumes the gateway is equipped with HFC, satellite and ADSL expansion modules so that VOD can be ordered from any of these three networks. The gateway however may have only some subcombination of one or more of the HFC, satellite or ADSL modem expansion cards, so step 116 will only represent routing the IP request packet to one video server or possibly a selected one of two different video servers delivering VOD over two different networks.

In the case of an IP request packet addressed to a video server coupled to the HFC 10 via the headend modem for delivery of a VOD selection via the HFC, step 116 represents the following subprocess. The IP packet gets routed to DOCSIS modem 70 and transmitted on an upstream management and control channel. In the preferred embodiment, the management and control channel used to transmit the upstream request is the channel designated in a downstream load balancing message from the headend modem indicating which channels and subchannels are available and which upstream channels the gateways are to use in indicating they have camped on one of the available channels and subchannels. The IP packet is recovered from the HFC and coupled directly or via the internet to the video server to which it is addressed. The video server may be coupled directly to headend modem or indirectly via the internet in which case the IP request packet is sent by a router at the headend over the internet to the video server.

In the case of an IP request packet addressed to a video server coupled to the satellite uplink headend circuitry, the upstream channel is over the PSTN so step 116 represents the following. The IP packet get routed to the ADSL modem 182 or the DOCSIS modem 70 for upstream transmission over the phone lines. If routed to the ADSL modem, it transmits the IP packet request message upstream over the PSTN lines to the ADSL central office where it gets routed to the video server coupled to the satellite uplink over a connection to the internet at the CO or a dial-up connection over the PSTN to the video server directly.

If the IP packet addressed to a video server that delivers VOD over the satellite network is routed to the DOCSIS modem, the IP packet gets transmitted over the HFC to the headend DOCFSIS modem. There, the packet gets recovered and reassembled (if necessary) and sent to a router for delivery over the internet or other WAN to the video server to which the packet is addressed. Alternatively, the headend DOCSIS modem may make a dial up connection over the PSTN to the video server or use IP telephony to deliver the packet to the video server over the internet via IP telephony circuitry coupled to the internet at the video server.

If the IP VOD request packet is addressed to a video server that delivers via ADSL, step 116 represents the following. Routing process 86 routes the IP packet to the ADSL modem 182 where it is transmitted via the ADSL upstream channel to the ADSL modem at the CO. The CO then routes the IP VOD request packet to a video server directly coupled to the CO or gives it to a router connected to the internet for routing to a video server coupled to the CO via the internet (the term internet means the internet or any other wide area network currently in existence or which may come into existence in the future). Alternatively, the CO may make a dial up connection to the video server over the PSTN and send the IP VOD request packet over the dial up connection or may communicate with another CO where a video server is located by a T1 line or DS1 or other high speed telephone lines. The processing and circuitry for ADSL delivery of video demand taught in U.S. patent 5,247,347 may be used, and that patent is hereby incorporated by reference.

Step 120 represents the optional step of authentication and/or conditional access gating carried out at the headend prior to routing the IP request packet to the video server. In some embodiments, the IP packet bearing the VOD request is routed to the video server only if the user making the request is authenticated and/or is an authorized subscriber to the requested service. This is typically by using the source address as a search key to search a lookup table of authorized users. The manner in which the requested services such as VOD are monitored so that they are delivered only to authorized subscribers is not critical to the invention, and the lookup function mentioned as part of step 120 can be replaced with any known manner of gating services only to authorized users. The gating function can also be done at the gateways after transmission of the VOD data downstream, and the gateway 14 shows conditional access modules 126 and 186 representing these embodiments. In these embodiments where the conditional access gating function is performed at the gateway, step 120 is not needed. Processes for performing conditional access gating at the customer premises are well known in C band and Ku band subscription-based analog and digital video broadcasting, and need not be detailed here. To implement this known type of conditional access at the consumer premises, each gateway has a decryption module (126, 186 and similar circuitry in ADSL modem 182) with a key or password stored therein. This key or password is used by the video server or other service provider to encrypt the VOD data or other data encoding the requested service using the authorized subscriber's public key. Only that subscriber can decrypt the data using his private key. The conditional access modules 126 and 186 in Figure 4A are intended to symbolize any of these known prior art structures and processes for blocking access by unauthorized persons to services.

After the IP packet reaches the video server, it reads the IP packet and opens the file storing the data of the requested movie or other video production (step 124). The video server then begins transmitting the video data as IP packets addressed to the TV and network adapter 30 that requested the movie (step 124). The IP packets contain compressed video data, typically by MPEG II compression. Step 124 is intended to represent one of the following three subprocesses of delivery of the video data bearing IP packets depending upon the video server to which the original IP packet bearing the VOD request was directed and whether the IP video data packets are to be delivered over HFC, via satellite or via a DSL connection. Step 124 is not intended to represent delivery of the VOD data by all three networks. The discussion of each subprocess is labeled by a header, and three different lines of steps are shown in Figures 6A-6E for the three different delivery networks since each delivery network is coupled to different circuitry in the gateway 14.

First, in the case of HFC delivery, step 124 represents the process of transmitting the IP VOD packets to the modulator in the headend modem which is transmitting downstream on the channel identified in the original request packet. Transmission to this modulator can be by a local direct connection, or via the internet or other WAN or by a T1 or DS1 leased line or possibly by other high speed PSTN connection such as DSL.

The video data is compressed in any known manner and is encrypted before transmission. The preferred manner of implementing conditional access is to do the gating function at the video server end of the connection to avoid wasting downstream bandwidth on requests by unauthorized users.

In the HFC delivery case, the compressed video and audio data (and possibly associated data such as IP telephony packets) is transmitted by the headend on the channel and subchannels identified in the camping data given in the original request message and arrives at the gateway 14 via line 10 (step 136). In alternative embodiments, the video server and headend will cooperate to put the VOD data on unused subchannels of a channel that is not fully utilized and send a downstream management and control message telling the gateway where to find the VOD program it requested (step 136).

Upon reaching the gateway on the HFC connection 10, the RF downstream signal is coupled through coupler 90 to buffer/ isolation circuit 98 and reaches tuners 100, 102 and 104. Tuners 100 and 104 reject it because they have been instructed by the host CPU 128 of the gateway to listen on the analog video and DOCSIS data carrier frequencies, respectively. Tuner 102 however has been instructed by host microprocessor 128 (hereafter, the "host")to tune to the channel on which the VOD data is modulated. In tuner 102, the RF signal is received the RF component is removed and, a baseband signal is output on line 190. In some embodiments, the tuner 102 outputs an IF signal on line 190 which is digitized in A/D matrix 130 with the IF mixed down to baseband by QAM demodulator 146 prior to demodulation of the constellation points. Also, in some embodiments, conventional carrier recovery and clock recovery is performed in tuner 102, and the RF component is removed using a local carrier synchronized in frequency and phase with the transmitter's carriers to reduce the RF signal to I and Q baseband signals on lines 190 and 191.

The VOD data bearing RF carrier is QAM modulated, so the tuner outputs a complex analog baseband signal on line 190 with an inphase and a quadrature component, each having multiple sample periods each of which defines the I and Q values for one constellation point. Both components are sent to A/D matrix 130 for sampling with one sample per constellation point on each of the I and Q signals.

The A/D matrix is comprised of either two or three A/D converters depending upon whether the DOCSIS modem 70 has A/D conversion circuitry therein. Typically, it does, so the output of the DOCSIS data tuner 104 on line 132 is shown as passing the baseband signal straight through the matrix 130 without any sampling thereby.

The samples of the baseband analog I and Q signals on lines 190 and 191 containing VOD data constellation points are output on bus 136. The process of receiving the RF downstream VOD signal and demodulating and digitizing each constellation point's I and Q values is symbolized by step 136. In the preferred embodiment, the clock signal embedded in the data (or transmitted on a separate channel in some embodiments) defining the boundaries of each constellation point is recovered by tuner 100 and is made available to any of the other circuits that need it to deal with the video data.

The digitized, compressed VOD data is typically QAM-64 modulated. This means that the video and audio data is transmitted in the form of constellation points each point transmitted during a different time on the quadrature carriers with video, audio and associated data constellation points transmitted during different timeslots on the same channel. Each vidoe, audio or associated data point takes the form of a complex number having a phase and an amplitude value. QAM demodulator 146 determines the complex value of video, audio and corresponding data points of the compressed VOD data that correspond to each constellation point (step 140).

Transport demultiplexer 148 functions to demultiplex the video, audio and associated data points from their respective subchannel timeslots (or codes in embodiments where the subchannels are CDMA multiplexed)as symbolized by step 144. The video demultiplexer receives a control data input from the microprocessor 128 that tells the demultiplexer which subchannel timeslots (or codes) to use in retrieving the requested VOD data.

The retrieved video, audio and associated data is output in compressed form on buses 150, 152 and 154 to a conditional access circuit 126. This optional circuit descrambles the data if the user is authorized to receive the program ordered or does other known types of conditional access gating if the conditional access function has not already been done at the headend (step 192). If the user is authorized to receive the VOD data, the video, audio and associated data points are encapsulated into bus packets used on the host bus 156 and sent over the bus to an IP video encapsulation process 158. Typically, the host bus is a PCI bus so known PCI bus interface circuits in conditional access circuit 126 encapsulate the VOD data into PCI bus packets addressed to the IP video encapsulation circuitry (step 192).

The IP video circuitry monitors the bus 158 for packets addressed to it and when it finds one, it takes the PCI bus packets that together comprise an IP packet of VOD data and reassembles the VOD data therein into and IP packet payload. In cases where the VOD data was never put into an IP packet format at the headend, the VOD video and audio data are assembled into IP packets addressed to the network adapter that requested the VOD program. Any associated data is encapsulated into an IP packet addressed to the appropriate peripheral such as the PC 22 or the telephone 60 in Figure 3. Usually, the IP destination address to which the video, audio and associated data are bound is included within the data itself, and if an IP packet was broken up into, for example octets or ATM cells for transmission, the original IP source and destination addresses are preserved such as by the methods described previously herein.

In the preferred embodiment, the IP source and destination addresses in the IP packet data within the PCI bus packets are used to assemble an IP packet header upon reassembly of the IP packet. The resulting IP packets are transmitted over line 160 to the routing process 86 (step 194). In embodiments where the VOD video, audio and associated data was never placed into an IP packet format, the host 128 keeps track of where each VOD request came from on the LAN and the addresses of the video server to which each is addressed. The when data arrives from that video server (as determined by the source address of the data or the network, channel and subchannel on which the data arrived), the host sends data to the IP video circuit 158 telling it the IP address of the network adapter the video and audio data are to be addressed to and the IP address of any other peripheral to which any associated data is to be sent. The case where the VOD data is not originally encapsulated into an IP packet could happen where a video server is coupled directly to a headend modem or a satellite uplink facility or an ADSL CO. Step 194 is to be also interpreted as covering this alternative case of constructing IP packets using IP addresses supplied from the host 128 which is monitoring all outgoing VOD requests.

The routing process 86 receives the VOD IP packets and reads the IP destination address and determines that the IP address is mapped to the Ethernet address of network adapter 30 in Figure 3. The IP packets addressed to this network adapter are then encapsulated into Ethernet packets addressed to the network adapter 30 and sent to the appropriate network interface circuit in routing circuitry 86 for launching onto LAN 20 (step 196). The household might have multiple TV sets, each with its own network adapter. In such a case, the IP destiantion address in the VOD data will be used to determine which network adapter ordered the program and that network adapter's Ethernet address will be used in the Ethernet packet headers of the Ethernet packets into which the VOD data IP packets are encapsulated. The routing circuitry will then determine which LAN and NIC to use to get the data to the right TV.

What happens to the VOD data when it gets to the network adapter will be discussed below after the discussion of the ADSL and satellite delivery cases.

### DSL Network Delivery

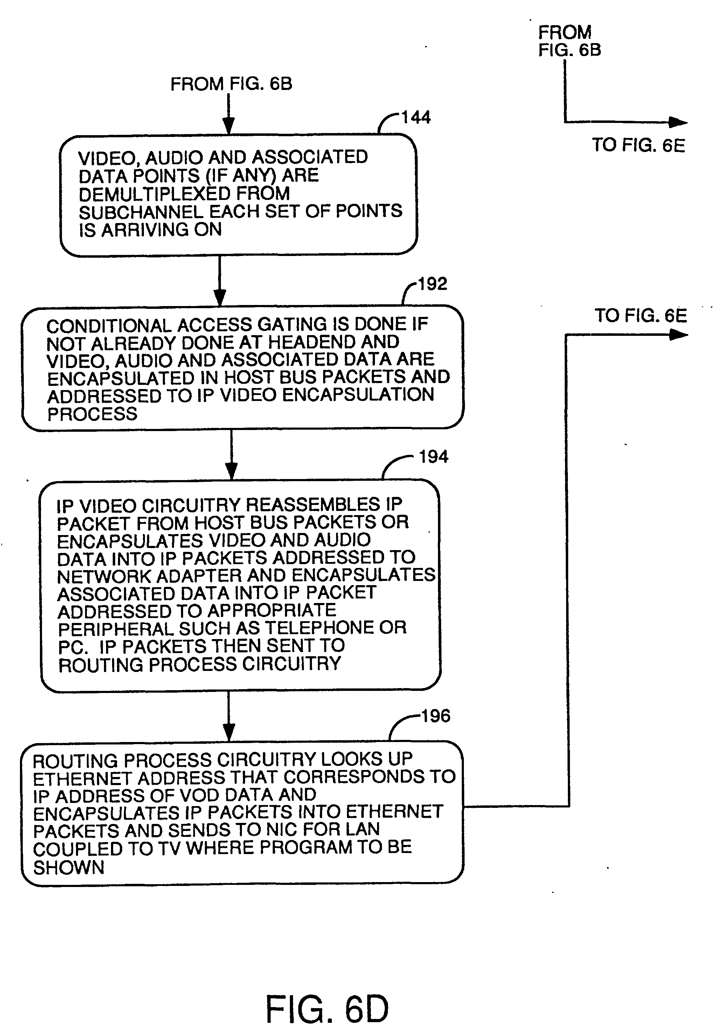

In the case of ADSL delivery (or delivery by any digital subscriber line service with adequate bandwidth), the IP packets are transmitted from the video server to an ADSL central office within approximately 3 miles of the subscriber by a T1 or DS1 line typically although an ADSL downstream connection might be used if the possible maximum load of VOD data being sent to this particular CO is light enough (step 198, Fig. 6B).

From the ADSL central office, the video data IP packets are FDMA multiplexed onto the ADSL downstream carrier and transmitted to the gateway of the requesting subscriber via the appropriate local loop. At the gateway, the IP packets arrive on the PSTN local loop 58 and coupled through an isolation buffer 204 to the ADSL modem 182(step 202).

The ADSL modem 182 is a conventional structure and recovers the IP packets in conventional manner and outputs them on line 188 to the switching process. There, the IP packets bearing VOD data are encapsulated in Ethernet packets addressed to the NIC of network adapter 30 which ordered the video program and sent to the appropriate NIC in routing circuitry 86 which interfaces to the LAN to which the network adapter 30 which ordered the VOD program is coupled (step 206).

In embodiments where only a single LAN is in use at the customer premises, an ADLS modem 200 (shown in dashed lines to indicate it is an alternative embodiment) with an Ethernet output interface may be substituted for ADSL modem 182 with the ADSL modem output coupled directly to the LAN.

### Satellite Network Delivery

In the case of satellite delivery of the video data IP packets, the video server for the satellite network delivers the VOD data IP packets to the satellite uplink facility by any suitable means such as a T1 or DS1 leased line or by direct connection to the uplink transmitter if the video server is located at the uplink facility (step 208).

The uplink facility modulates the IP packet data onto the DirecPC uplink carrier or another carrier devoted to VOD applications and transmits it to a geosynchronous satellite (step 210).

A transponder on the satellite then recovers the IP packets and QPSK modulates them (or using some other suitable modulation scheme) onto a DiretPC or VOD downlink carrier and transmits them to all the dishes in its footprint area on the surface of the earth (step 212).

Tuner 180 (Fig. 4A) receives the RF signal and does conventional carrier and clock recovery so that the recovered carrier and clock signals can be used in demodulating, detecting and demultiplexing the signals as was the case for the preferred embodiment of tuner 102. Tuner 180 receives data from host 128 via host bus 156 that tells it which downstream channel to which it should tune, and it tunes out all other RF signals. The VOD downlink quadrature carriers are then demodulated and I and Q baseband signals are output on lines 216 and 218 (step 214).

Analog to digital conversion can happen anywhere after the tuner 180 and prior to the IP packetization circuit 158. However, for parallelism with the HFC case, we will assume that A/D conversion happens in the QPSK demodulator 220 prior to the constellation point demodulation process. The recovered clock from the tuner 180 is used to synchronize the demodulation and A/D conversion processes in circuit 220. The I and Q values of the QPSK constellation points are then demodulated to their original analog or digital values to yield a stream of video, audio and associated data points on bus 222 (step 224). If they are demodulated to analog values, these analog values for the I and Q values of each constellation point are later digitized.

The satellite VOD delivery system is much like the HFC system in that video programs are delivered on channels each having a different downlink frequency and each having a plurality of TDMA or CDAM subchannels. It is the function of transport demultiplexer 184 to receive data from host 128 telling it which subchannels to recover and to demultiplex the video, audio and associated data points from their respective subchannels (step 226). The transport demultiplexer 184 has any conventional TDMA or CDMA demultiplexing structure that can receive data indicating which subchannels to recover and recover them and can be the same structure as transport demultiplexer 148.

The recovered video, audio and any associated data are output to a conditional access circuit 186 via buses 228, 230 and 232. The conditional access circuit 186 functions to decrypt or otherwise gate the VOD data to the subscriber who requested it only if she is a legitimate subscriber and if this gating function was not performed at the satellite uplink facility or the video server (step 234). The conditional access circuit can have any of the known structures to perform this function.

The conditional access circuit has a host bus interface circuit (not separately shown) which functions to take the data from the VOD IP packets (usually the IP packets bearing VOD data are broken up for transmission over the channel)and encapsulate the data into bus packets of the type used on the host bus 156, e.g., PCI bus packets. These packets are addressed to the IP video circuit 158 (step 236).

The IP video circuit functions as previously described. Basically, it takes packet addressed to it off the host bus 156 and either reassembles the IP packet if it was originally an IP packet but was broken up for transmission (such as into ATM cells) or encapsulates the data into an IP packet if it never was in an IP packet format (step 238). Presumably, the incoming VOD data includes the IP destination address in it. However, in some embodiments, the host 128 will tell the IP video circuit 158, "If you receive data from conditional access circuit 186, it is to be addressed to the IP address of network adapter xx which requested it." One way or another, the IP video circuit 158 assembles an IP packet header for each packet that tells the routing circuitry 86 where the packet is to be sent on the LAN. The resulting IP packets are sent to the routing circuit 86 via bus 160 (step 238).

The routing circuit 86 looks up the Ethernet address bound to the IP address, encapsulates each IP packet into an Ethernet packet and routes it to the appropriate network interface circuitry in router 86 for the LAN to which the network adapter is coupled which ordered the VOD program (step 240).

Note that if there is associated data with the VOD program which needs to go to the personal computer 22 or to IP telephone 60 in Figure 3, that data has its IP address set to the PC or the telephone as the case may be and the router 86 addresses the Ethernet packets containing this associated data to the Ethernet address of the PC or telephone or other peripheral as the case may be and this is true regardless of whether the VOD data is delivered by ADSL, HFC or satellite (steps 238 and 194).

### The Network Adapter Structure and Subprocess For Video on Demand Processing

Regardless of which network was used to transmit the VOD program, the data that encodes the program has now been encapsulated into Ethernet packets and put onto the LAN. A block diagram of a typical network adapter 30 in Figure 3 is shown in Figure 5. The function of the network adapter is to pick the appropriate Ethernet packets off the LAN, strip out the video and audio data and convert it to an NTSC or PAL or SECAM signal or to a video signal which can be fed into a video input of a TV.

Each network adapter has a network interface card 84 which couples the network adapter to the physical media of the LAN. Network interface circuits for Ethernets are well known, and will not be described further herein. Each NIC on the LANs 18 and 20 has a unique Ethernet address which maps to one or more IP addresses. Thus, when an IP packet addressed to the IP address of network adapter 30 arrives at the gateway, the gateway's routing tables will map this IP address to the Ethernet address of the network adapter. The entire IP packet, header and all, will then be encapsulated into an Ethernet packet with the destination address of the Ethernet packet being that of the network adapter.

All Ethernet packets are received by NIC 84, but only packets addressed to the network adapter 30 are kept. When an Ethernet packet addressed to network adapter 30 is received, it is examined to determine if the Ethernet address matches the address of the network adapter, and, if so, the packet is passed through the Ethernet protocol stack where the Ethernet header is stripped off and error detection and correction are done on the packet. The resulting IP packet is then passed to the IP video circuit 242 (step 244) . For outbound packets such as menu requests and VOD request packets, the Ethernet protocol stack in NIC 84 performs the CSMA/CD transmission and collision detection protocol and transmits the packet on the LAN.

The IP packets from the NIC 84 are examined by the IP video circuit 242 to determine if they are addressed to the network adapter and whether they are graphics data or video data. The IP packet header is stripped off and payloads of packets that contain compressed video/audio data are transmitted as a bit stream to MPEG decoder 246, and packets that contain graphics data are transmitted as a bit stream to 2/3 D graphics circuit 83 (step 248). In some embodiments, the menus will not be sent as separate data but will simply be video frames which are digitized and compressed. In such embodiments, bus 87 is not necessary.

The MPEG decoder 246 decompresses the compressed video and audio data bits and generates and uncompressed audio bit stream on line 250 and an uncompressed video bit stream on line 252 (step 258).

The audio bit stream is enhanced for stereo and filtered and then converted to an analog signal in any conventional audio processor 254 (step 258). In alternative embodiments, the uncompressed audio data not processed to enhance it or convert it to stereo or filter it and is simply converted to an audio signal.

The data output on line 252 is a digitized YUV format video signal. Video processor 256 filters the video signal to enhance it (step 258). The combination of the video processor 256 and the 2/3 D Graphics circuit 83 are commercially available in integrated circuit form from ATI or C³.

The digitized YUV format video signal on line 264 (or 252 if video procesor 256 is not used, is converted by video encoder 260 into an NTSC, PAL, SECAM or composite format video signal which can be displayed on a TV (step 262). If the output signal format is composite video, the composite video signal is input to the TV's video inputs via line 266 (step 262). Likewise, the audio processor converts the digitized uncompressed audio data into an audio signal on line 270 for coupling into the audio input of a TV (step 272). If the output signal from the video encoder 260 is NTSC, PAL or SECAM format, the signal is modulated onto an RF carrier at some locally unused frequency such as channel 3 by a video modulator 276 (step 274).

### Wideband Internet Access

Dial up internet connections through modems are very slow. It is much more useful to surf the internet with a much wider bandwidth at least downstream.

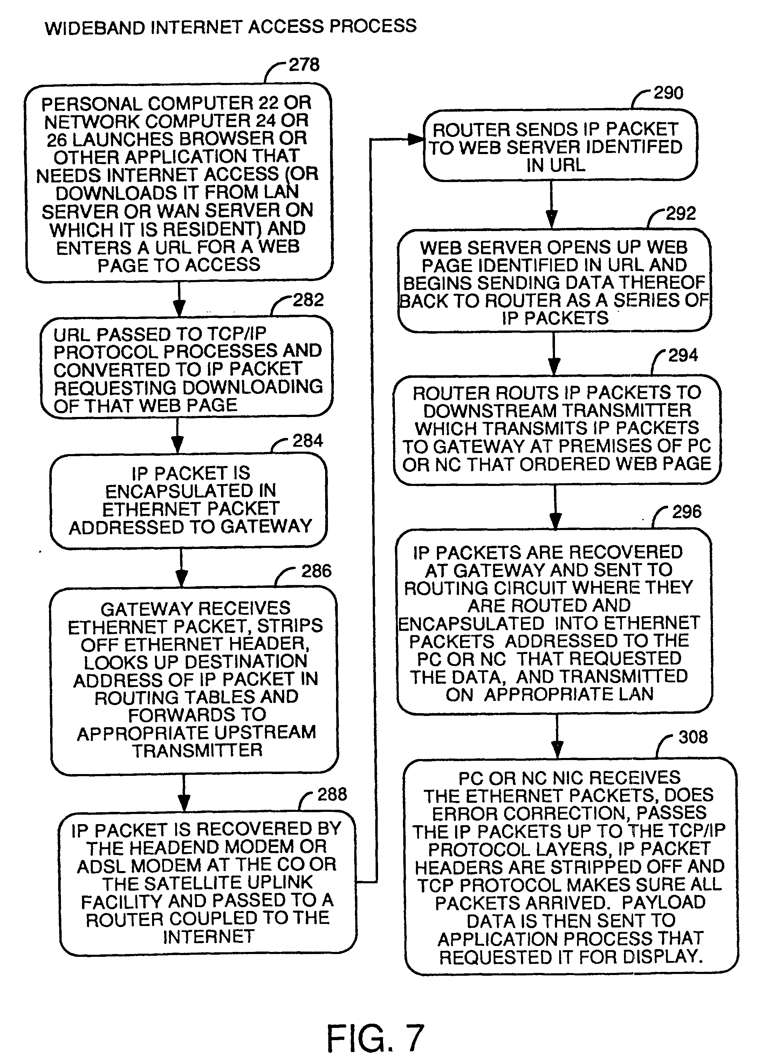

Referring to Figures 7A-7?, there is shown a flowchart of the process of high bandwidth surfing of the internet using one of the HFC, satellite delivered DirectPC or DSL networks. In step 278, the personal computer 22 in Figure 3 or network computer (hereafter sometimes referred to as NC) 24 or 26 launches its browser and enters a URL of a web page to be viewed. The network computers 24 and 26 do not have any local hard drives, so they execute their browsers from the hard disk of the personal computer via known techniques of executing shared software on a server over the network or over a WAN such as the internet. Typically, the network computers indicate which program they want to run by double clicking an icon on their desktops. This action is converted to a request to download the program from a server on the LAN or WAN into the RAM of the network computer. This request is converted by the NIC of the network computer into an Ethernet packet directed to the server on the LAN. The server NIC picks up the packet, opens the file, and generates one or more Ethernet packets directed to the network computer which receives the packets and loads the browser program or other application that needs internet access into RAM and begins executing it.

If the program to be run is resident on a server on the internet, the step of doubling clicking the icon of the program to be run is converted by TCP/IP protocol software layers in the network computer (typically stored in nonvolatile flash EEPROM or ROM) into an IP packet addressed to the server storing the application program to be run. The IP packet is then encapsulated into an Ethernet packet by the NIC of the NC addressed to the gateway 14. At the gateway, the Ethernet packet is received by the NIC and the Ethernet headers are stripped off by the routing process 86. The packet is then routed to the appropriate transmitter for the upstream medium the user has a subscription for or which is cheapest for internet access if the user has DSL, satellite and HFC modules installed - or some combination thereof (least cost routing process). In other words, the IP packet will be routed to the DOCSIS modem 70 for upstream transmission over the HFC 10 or to the ADSL modem 182 if the DSL service or to conventional modem 280 (which may also be a conventional FAX/Data modem) if satellite downloading service via DirectPC is to be used. The IP packet is sent by one of these media to the headend, ADSL CO or by dialup connection to the satellite uplink facility. At the destination, the IP packet is recovered and routed by a router at the destination to the internet server storing the application to be executed.

The internet server then sends the program to be executed to the network computer by encapsulating the data of the program into IP packets addressed to the NC that reqeusted it. These IP packets arrive at the gateway and are recovered by the DOCSIS modem, ADSL modem or satellite reception circuitry to be described below and sent to the routing process 86. There, they are encapsulated into Ethernet packets addressed to the NIC of the NC that requested the program and launched on the LAN. The NC receives the packets, strips out the data of the program, stores in its RAM and begins executing it.

The user then enters the URL of the web site she wants to visit (step 278). The browser or other application then passes this URL down to TCP/IP protocol software processes in execution on the computer which turn the URL into an IP packet requesting that the web page at that URL be downloaded to the computer that asked for it, as identified by the source address of the IP packet (step 282). This IP packet is then encapsulated into an Ethernet packet addressed to the gateway 14 by the NIC of the NC or PC (step 284).

The gateway's NIC (not shown separately in Figure 4A) receives the Ethernet packet, strips off the Ethernet header after error detection and correction and passes the IP packet up to the routing process layers. The router looks up the destination address in its routing tables and forwards the packet to one of the upstream transmitters (step 286). If the user has only one network interface such as an HFC interface only or an ADSL interface only installed (as determined by either a discovery process carried out by the router or by configuration data), the IP packet is forwarded to that upstream transmitter. However, if user has more than one network interface installed, the router may forward the IP packet to an upstream transmitter based upon any criteria such as user choice as indicated by a management and control packet sent to the gateway or a field in the IP packet, by a random or round robin selection process or by a least cost routing algorithm that automatically picks the cheapest service for widebandwidth internet access. Step 286 is intended to represent any of these methods of selecting the upstream transmitter.

If the upstream transmitter is the DOCSIS modem 70, the IP packet is transmitted upstream over a virtual channel devoted to this gateway or assigned to it on the fly by the headend. The virtual channel can be established by TDMA, SCDMA or CDMA or possibly by FDMA. The CO modem recovers the IP packet and passes it to a router coupled to the headend (step 288).

If the upstream transmitter is the ADSL modem 182, the IP packet is modulated onto the upstream carrier and transmitted over the PSTN local loop 58 to the ADSL modem at the CO. There, it is recovered and passed to a router coupled to the internet (step 288).

If the downstream medium is going to be the satellite downlink, the upstream transmitter is the conventional modem 280. This modem dials a modem at the satellite uplink facility and transmits the IP packet thereto. The IP packet is recovered and passed to a router coupled to the internet (step 288).

The router sends the IP packet to the web server at the URL (step 290) which opens the web page identified in the URL and begins sending the web page data back to the router as a series of IP packets (step 292).

The IP packets arrive at the router and are sent to the appropriate downstream transmitter. Step 294 is intended to represent downstream transmission over any of the HFC, DSL or satellite media. In the case of HFC delivery, the downstream transmitter will be the headend modem. The headend modem will either broadcast the IP packet on the downstream carrier to all gateways or transmit it on a virtual downstream channel assigned to the gateway at the premises of the PC or NC that requested the web page (step 294).

If the downstream media is the satellite downlink, the router sends the IP packets to the uplink transmitter which transmits them to the satellite. A transponder on the satellite receives the packets and re-broadcasts them on the downlink channel (step 294).

If the downstream media is a DSL local loop, the router at the CO sends the IP packets to the ADSL modem at the CO which modulates them onto the downstream carrier (step 294).

Step 296 is represents the recovery of the IP packets at the gateway, regardless of the downstream media, transmission to the router, protocol conversion and routing and transmission out on the appropriate LAN. The details of how this happens in the gateway for each different downstream media follows.

In the case of HFC downstream delivery, tuner 104 filters out all but the DOCSIS downstream carrier and removes the RF component. The resulting baseband signal is passed through the A/D matrix on line 132 to the DOCSIS modem 70. There, the IP packets are recovered and sent to the routing circuit 86 via bus 300. Although this is shown as a separate bus, it may actually be the host bus 156 in some embodiments with the IP packets being sent to host microprocessor 128 by encapsulation in PCI bus packets addressed to the host. Likewise for all other buses shown in Figure 4A going into or coming out of the routing circuit 86. The router 86 looks up the destination address in the IP packets and determines they are addressed to PC 22 or one of NC 24 or 26. The router then encapsulates the IP packets into Ethernet packets addressed to the appropriate PC or NC and directs them to the NIC for the proper LAN connected to the PC or NC that requested the data (step 296).

In the case of satellite downstream delivery, tuner 302 in Figure 4B is directed by host 128 to tune to the DirectPC downstream QPSK modulated carrier. The tuner rejects all other signals and recovers the carrier and synchronizes a local oscillator to generate two coherent reference signals which are phase and frequency matched to the two quadrature carriers used to transmit the downstream IP packets. These local reference signals supply two correlators in the tuner, one for the inphase channel and one for the quadrature channel. Each correlator is comprised of a multiplier and an integrator. Digital QPSK transmission and transmitters and receivers therefore as well as other modulation and multiplexing schemes and carrier and clock recovery circuits are described in Haykin, *Communication Systems, 3rd Ed.* (Wiley & Sons 1994) ISBN 0-471-57178-8 which is hereby incorporated by reference. The digital satellite receiver channel is not limited to QPSK modulation, and any modulation and/or multiplexing scheme used today or subsequently for downstream transmissions may be used with suitable adjustments to the gateway satellite digital data receiver.

The output of receiver 302 is coupled via I and Q buses 306 and 310 to a QPSK demodulator 304 which functions to recover the IP packet data and encapsulate it into bus packets for the host bus addressed to the routing circuit 86. The QPSK demodulator 304 is typically comprised of a decision device that receives the baseband I and Q channel signals and compares them to decision threshold of zero volts. If the I channel voltage is greater than zero, a decision of logic 1 is made but if its voltage is less than zero, a decision of logic 0 is made. If the Q channel voltage is greater than zero, a decision of logic 1 is made but if its voltage is less than zero, a decision of logic 0 is made. Finally, the two binary bit sequences defining the IP packets coming out of the decision circuit are recombined in a multiplexer in demodulator 304 and sent to bus interface circuitry in demodulator 304 for encapsulation into bus packets and transmission via bus 312 and the host bus 156 to the router 86. The router receives them, strips off the host bus packet headers, looks up the IP destination address and finds they are addressed to the PC 22 or one of the NCs. The IP packets are then encapsulated into Ethernet packets (or whatever other packet format is used on the LANs 18 or 20) addressed to the PC or NC that ordered the data and sent to the proper NIC (step 296).

If the downstream media is an ADSL local loop, a conventional ADSL modem 182 in Figure 4A recovers the IP packets and sends them on bus 188 to the router 86. The router receives them, strips off the host bus packet headers (if bus 188 is actually the host bus 156), looks up the IP destination address and finds they are addressed to the PC 22 or one of the NCs. The IP packets are then encapsulated into Ethernet packets (or whatever other packet format is used on the LANs 18 or 20) addressed to the PC or NC that ordered the data and sent to the proper NIC (step 296).

The NIC of the PC or NC that ordered the data receives the Ethernet packets, does error correction and strips off the Ethernet headers. The resulting IP packets are passed up the TCP/IP protocol layers where the IP packet headers are stripped off and the TCP protocol makes sure all the packets have been received. The payload data is then sent to the application that requested it for display (step 308). Processing by the PC or NC of the IP packet data and Ethernet packets is the same as in PCs on a LAN that share modems and dial up connections to the internet through ISPs, and that technology is incorporated by reference.

### Reception and Distribution of Analog Video Broadcasts Via Satellite Or Terrestial Antenna

One of the advantages of the gateway 14 is that it may also be used to distribute analog TV broadcasts to TV's throughout the house using the LAN thereby eliminating the need for separate wiring.

Tuner 314 starts this process by receiving control data from microprocessor 128 defining which C-band analog video channel has been requested by the user. Tuner 314 can be any conventional C-band satellite tuner modified so as to accept digital control data from the host 128 to control which satellite and which transponder to tune to as opposed to receiving this information directly from a remote control or front panel switches. In the home network described herein, users request C-band broadcast channels via their IR keyboards 34 or remote controls 80 in Figure 3. These requests are encapsulated into management and control Ethernet packets addressed to host CPU 128 by network adapter 30. The host CPU receives them and generates a PCI bus packet on bus 156 addressed to tuner 314 telling it which channel to tune, i.e., which satellite to turn the dish to and which transponder or channel in the downlink broadcast to tune to.

The RF (or IF) output of tuner 314 on bus 134 is then digitized by an analog-to-digital converter 316. The digital samples on line 318 are input to a video demodulator 320 which functions in the digital domain to demodulate the digitized analog video signal by removing the RF component. The video demodulator 320 outputs digital data on line 322 which represents a conventional baseband NTSC, PAL or SECAM format video signal.

The digital data on line 322 is at too high a bit rate to send over the LAN since uncompressed broadcast video consumes about 221 Mbps of bandwidth. Therefore, the video data must be compressed. MPEG II compression is preferred, but any known form of compression currently known or to be developed in the future will suffice since the form of compression is not critical. MPEG II compression circuitry is well known, and is used for MPEG encoder 326. However, MPEG compression does not compress NTSC, PAL or SECAM format signals. They must first be converted to YUV format luminance and chrominance signals. This conversion is done in video decoder 324, which is a known type of circuit in any video system that uses MPEG II compression.

The compressed video data is encapsulated into PCI (or other type) bus packets addressed to IP video circuit 158 on Figure 4A. There, the compressed video data is encapsulated into IP packets addressed to the network adapter of the TV where the request originated and the satellite C-band video channel is to be viewed. The IP video circuit 158 determines which IP destination address to use in constructing the IP packets via data received from the host microprocessor 128. When the original request was received, the host microprocessor 128, in addition to telling the tuner 314 which channel to tune, also determines from the source address of the Ethernet packet bearing the request which TV's network adapter requested the data. The IP address of this network adapter is encapsulated into a PCI bus packet and transmitted via host bus 156 to the IP video circuit. The IP packets encapsulating the digitized C-band video channel are then transmitted via bus 160 to the routing circuit 86. Bus 160 may simply be the host bus 156 in embodiments where the routing process is carried out in software on the host 128.

The routing process 86 is a conventional IP to Ethernet routing process which examines the IP packet destination addresses and looks up the corresponding Ethernet addresses. The IP packets are then encapsulated into Ethernet packets and routed to the appropriate LAN network interface card for LAN 18 or 20 depending upon the Ethernet destination address of each packet. The process works in reverse for incoming Ethernet packets from the LAN(s).

When the IP packets reach the network adapter of the TV that requested the CATV channel, they are converted to a video signal that can be displayed by the TV by the circuitry described above in conjunction with the discussion of Figure 5.

### Terrestial Broadcast Reception

Reception and distribution of standard TV broadcasts received over an antenna coupled to the gateway 14 is very similar. A standard TV antenna 328 is coupled to the gateway by a coax or twinlead wire 330. A TV tuner 332 tunes the requested channel and outputs the desired channel as an RF or IF signal. Tuner 332 can be a conventional TV tuner modified to receive digital control data from the host computer 128 which controls which analog TV broadcast channel the tuner selects.

A/D converter 334 samples the output RF or IF and feeds the samples to a video demodulator 336. There the signal is demodulated in the digital domain to remove the RF component. As is the case for all the analog signal receiver circuits for both HFC and satellite, the analog-to-digital conversion can happen anywhere along the line of circuits including just before the MPEG encoder.

The output 338 is a digitized version of an NTSC or PAL or SECAM signal. It is fed to a video decoder 340 which converts it to a YUV format. The YUV signal is then compressed by MPEG encoder 342 and put into bus packets of the format used on the host bus 156 (typically PCI) and addressed to the IP video circuit 158.

The IP video circuit strips off the bus packet headers (and may perform error detection and correction) and encapsulates the compressed video data from the PCI bus packets into IP packets addressed to the network adapter of the TV set where the requested channel is to be viewed. The IP packets are then sent to the router 86 where the destination address is looked up and the IP packets are encapsulated into Ethernet packets addressed to the same network adapter and launched onto the appropriate LAN.

### LAN Alternative Embodiments

Video is isochronous or stream-oriented. On the other hand, traditional LAN traffic is more bursty. LANs were not developed to support streaming traffic, and it is therefore possible that a 10 Mbps 10Base-T Ethernet LAN will not have sufficient bandwidth at times to support the load, especially where there are multiple TVs each requesting a different channel along with other simultaneous traffic sharing the 10 Mbps bandwidth. Video is highly bandwidth intensive so even 100 Mbps LANs have trouble supporting high quality video intermingled with more traditional LAN data traffic.

Accordingly, it is within the scope of the genus of the invention to use higher capacity LANs for LANs 18 and 20. Specifically, these LAN can be Fast Ethernet, Switched Ethernet, FDDI, ATM and Fibre Channel Arbitrated Loop. Such LANs are described in Tanenbaum and Horak, *supra,* and Kembel, *Arbitrated Loop,* Connectivity Solutions, a division of Northwest Learning Associates, Inc of Tucson, Az, (1997) ISBN 0-931836-82-4.

### Reception and Distribution of DirecTV Digital Video Broadcasts

The gateway will include a bus slot for a module which can receive regularly scheduled DirecTV and other format digital video broadcasts on downlinks from a satellite. A tuner 344 serves to receive digital control information from host microprocessor as to which channel on the downlink a user has requested. The tuner then tunes to this channel and rejects all other signals and a QAM demodulator demodulates the signal to recover the transmitted data and outputs a complex baseband signal on line 348. Conventional QAM modulated digital data receivers are taught in Lee & Messerschmitt, *Digital Communications, 2d Ed.,* (Kluwer Academic Publishers 1994) ISBNO-7923-9391-0, Section 6.4.3, pp. 203-208 and Figures 6-18 and 6-19, the entirety of this book being hereby incorporated by reference. Typically, the tuner 344 will be comprised of a bandpass filter to tune the desired channel and reject out-of-band signals and doubling as an anti-aliasing filter. Typically, the signal is then digitized and a phase splitter (a filter that passes only frequency components in the positive half of the Fourier spectrum and rejects Fourier components in the negative half) acts in the discrete time domain to remove the negative half Fourier frequency components of the received spectrum to output an analytic signal. Then the positive half frequency components of the received signals are demodulated, i.e., the RF carrier component is removed by mixing with a local carrier which is synchronized to the transmitted carrier.

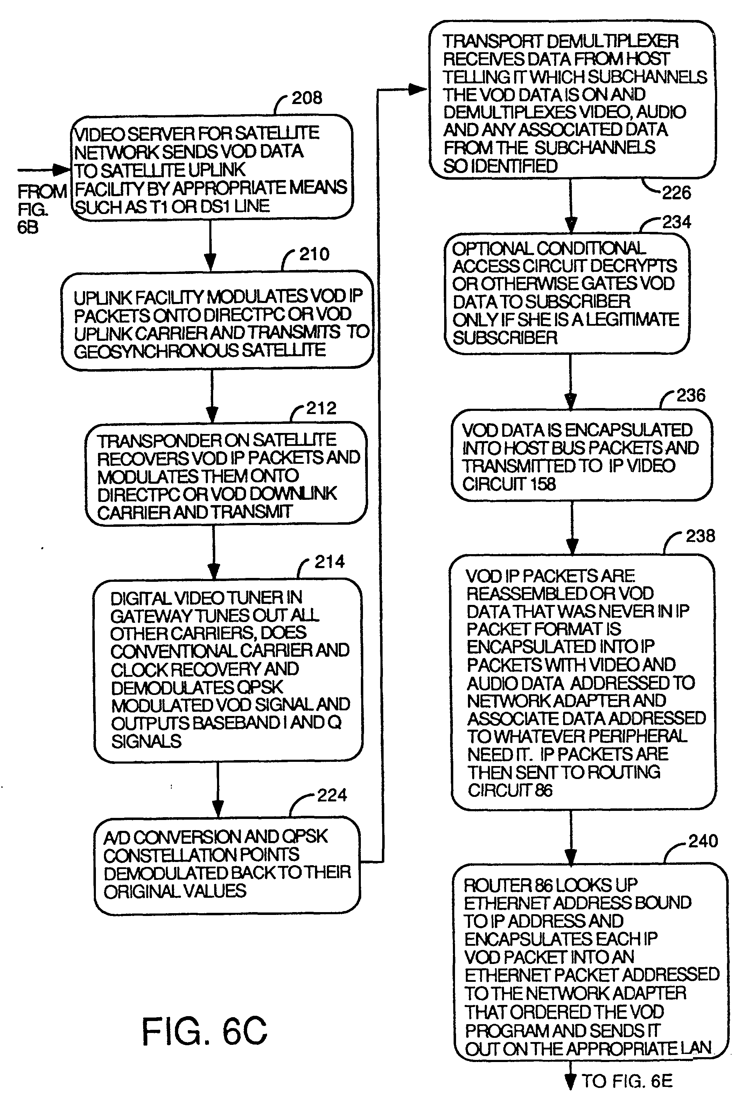

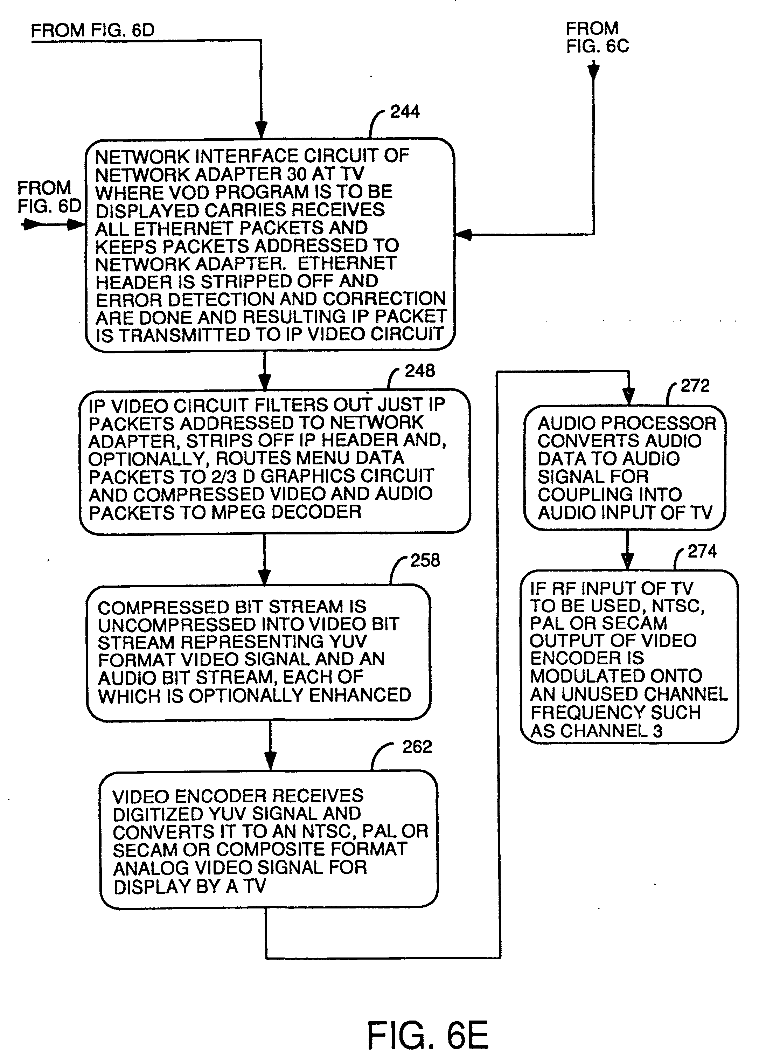

Figure 6-16 of Lee et al. at p.204 illustrates three different configurations for a QAM tuner.

The function of the QAM demodulator 346 is to detect the actual symbols sent. This is typically done by sampling and slicing. A complete QAM tuner to get the receive signal back to baseband and demodulator to recover the transmitted symbols is shown in Figure 6-18(b) of Lee & Messerschmitt for the real valued case and is comprised of two mixers which move the received spectrum back to baseband by multiplying by quadrature shifted local carriers and two receive bandpass filters to reject out of band signals and pass only the positive half Fourier components of inphase and quadrature signals. The I and Q signals are then sampled at the symbol rate and passed through a slicer to recover the symbols actually transmitted. A more complete representation of a practical QAM receiver including both precursor equalization and postcursor equalization and carrier and timing recovery is shown in Figure 6-23 of Lee & Messerschmitt. Preferably there will also be an error detection and correction circuit as well (not shown).

After the symbols of the compressed video program are recovered, a conventional transport demultiplexer 350 receives digital control input from the host as to which subchannel on which to find the video program which has been ordered and demultiplexes the audio, video and any associated data from those subchannels.

To help manage the load on the LAN, a transcoder 352 is used to translate the bit rate of the compressed video down to a lower rate when necessary because of current loading conditions on the LAN. Transcoders are known and were commercially available from Imedia in San Franscisco, California and now from the assignee of the present invention.

The output data of the transcoder is supplied to a conventional conditional access circuit 354 which decrypts the data if the subscriber is authorized to receive the program. Alternatively, the conditional access circuit 354 may function to decrypt the original encrypted data if the user is an authorized subscriber and then re-encrypt the data before transmission on the LAN using the new C5 encryption standard. The re-encrypted data is then packetized into bus packets and transmitted over the host bus 156 to the IP video circuit 158. There it is encapsulated into IP video packets addressed to the network adapter that requested the program and sent over data path 160 to the routing circuit/process 86. The routing process looks up the destination address and maps it to the LAN address of the network adapter and encapsulates the data into Ethernet packets and sends them to the correct NIC for transmission over the LAN. At the network adapter, the packets are processed as previously described in connection with the description of Figure 5 to convert the data to NTSC, PAL or SECAM video signals and the corresponding synchronized audio. If C5 encryption is used, the data remains encrypted at all stages until it is converted to analog video and audio signals.

A conventional DirecTV receiver modified to receive digital control data telling it which channel and subchannel to tune can be substituted for tuner 344, QAM demodulator 346 and transport demultiplexer 350. Alternatively, the satellite receiver taught in U.S. patent 5,983,071 may be used but modified to remove the audio decoder 160, the D/A converter 164, the video decoder 170 and the NTSC encoder 174. Those functions all happen at the network adapter after distribution over the LAN. If the receiver of U.S. patent 5,983,071 is substituted for the tuner 344, QAM demodulator 346 and transport demultiplexer 158 and the conditional access circuit 354, the audio and video output stream on lines 162 and 172 of the patent will be supplied to the transcoder 352. The receiver taught in U.S. patent 5,983,071 may also be used in place of tuner 102, A/D matrix 130, QAM demodulator 146, conditional access circuit 126 and transport demultiplexer 148. Again, this receiver will be modified to remove the following components taught in the patent: audio decoder 160, the D/A converter 164, the video decoder 170 and the NTSC encoder 174. Those functions all happen at the network adapter after distribution over the LAN. The conditional access circuits 126 end 186 may both be modified as described above to re-encrypt the recovered data under the C5 standard to prevent digital copies from being made. If the receiver of U.S. patent 5,983,071 is substituted for the tuner 102, QAM demodulator 130 and transport demultiplexer 148 and the conditional access circuit 126, the audio and video output stream on lines 162 and 172 of the patent will be supplied to either a transcoder, if present, or to bus interface circuitry (not shown) which packetizes it and sends it to the IP video circuit 158 over the host bus.

### Pay Per View Push Technology Gateway Compatibility

The gateway 14 can also be used to receive pay per view or free regularly scheduled broadcasts of digital or analog video programs. Push technology means a video server at or coupled to the HFC headend, ADSL CO or satellite uplink has a regular schedule of video programs that it outputs at specific times on specific channels. A menu displayed on the television set in the manner described elsewhere herein or publication is used by the user to select the program the user wishes to view. The user selects the program she wishes to view at the time the program is supposed to start by entering the program number (the program number can be mapped to the service provider and the video server IP address or that information can be entered manually) on her remote control 80 or keyboard 34. That program number is encapsulated into an Ethernet request packet and transmitted to the gateway where it is routed to the host. The host 128 then sends the appropriate command data over the host bus to tuner 102, or 100 or 180 or 314 or 344 or 332 or ADSL modem 182 to tune to the appropriate channel, depending upon which medium the program will be arriving. In the case of digital video, the host also sends control packets to the transport demultiplexer 350 or 184 or 148 to control them to demultiplex the compressed video and audio signals off the correct subchannels. If transcoders are used in the digital or analog video receiver modules, the host will monitor the monitor the load status of the LAN in any known way and send appropriate control packets to the transcoders over the host bus to control the bit rate of the compressed video transmitted over the LAN so as to not exceed the available bandwidth under varying load conditions.

### IP Telephony

Since there is a LAN to runs throughout the customer premises, it is useful to use the LAN to distribute video and audio and FAX telephony data to the video phones, telephones, FAX machines and FAX modems throughout the premises. Also, since all these physical telephony devices are coupled to a computer, it is useful to include an IP and/or PBX telephony module 353 in the gateway to provide functionality that the user could not formerly obtain from POTS service. POTS service can provide conference calling, call forwarding, caller ID, voice mail and pager notification of voice mail messages as well as other services through facilities such as Centrex provided by the CO switch. However, these services all cost extra money, and can be implemented locally in the gateway through use of "PBX on a card" expansion circuitry to extend the functionality of the host. Such telephony circuitry 353 to extend the functionality of DOS and Windows based personal computers to include PBX functionality, voice mail and a host of other features is commercially available as the VS1 and Incline systems from Picazo Communications, Inc. of San Jose, California and from Netphone, Inc. of Marlborough, Mass, and Altigen Communications, Inc., the details of which are hereby incorporated by reference. The Netphone PBX on a card technology which can be used to implement circuit 353 is described in U.S. patent 5,875,234 which is hereby incorporated by reference. This patent basically teaches a PBX circuit on an expansion card that is coupled to the host bus of a network server. The PBX card can establish and maintain telephone calls and do normal PBX call control functions. The PBX card can be controlled from telephony enabled applications on the server/gateway or by telephony enabled applications running on PCs via the LAN connection to the gateway. Any known expansion circuitry to add PBX functionality to a LAN server regardless of whether it is implemented one one circuit board or more than one may be used for circuit 353.

Typically, the circuit 353 will have its own switching circuit for connecting phone calls from extension phones coupled to conventional phone lines to CO trunk lines 58 and vice versa.

In some embodiments, the PBX functionality alone may be sufficient. However, use of the internet for telephony is a growing market, and websites such as www.net2phone.com already exist to allow long distance telephone conversations to take place over the internet regardless of distance for 10 cents per minute. To allow users to take advantage of these services, PCs on LANs 18 and 20 will need to be equipped with microphones and speakers. In such a class of embodiments, the IP & PBX telephony circuit 353 will include circuitry to digitize analog voice signals arriving from the extension phones via conventional phone lines 354. The IP & PBX telephony circuit 353 may also include packetization circuitry in some embodiments to receive Ethernet packets carrying digitized voice from the PCs on LANs 18 or 20 from router 86 via bus 356 and packetize them into IP packets addressed to the internet server providing the IP telephony services. These IP packets are then sent back over bus 356 to router 86 where they are routed to the server identified in the destination address of the IP packet. The routing can be least cost routing if multiple high bandwidth upstream media such as HFC and ADSL upstream high speed internet access modules such as DOCSIS modem 70 and ADSL modem 182 are present in the gateway. In other embodiments, the PBX expansion module 353 will do call control switching and provide other services between extension lines 354 and the CO trunk lines, and analog telephone signals from the extension phones on line 354 will be digitized and packetized into an IP packet addressed to an IP telephony server on the internet whose IP address is fixed and known to be the IP address to which the telephone data from the conventional POTS telephones is to be directed.

Then, instead of sending data from Ethernet packets bearing telephony data from PCs, telephones and FAX machines on the LAN for encapsulation into IP packets by the IP & PBX telephony module 353, the IP packet encapsulation will be done at the source. In other words, if PC 22 or NC 24 or phone 60 or FAX 64 at the customer premises wants to send data to an IP telephony server on the internet, the digital data generated by the source device will be encapsulated by the source device into IP packets addressed to the IP telephony server on the internet. These packets will then be encapsulated into Ethernet packets and sent to the gateway 14. The gateway 14 will then strip off the Ethernet packet headers and rout the enclosed IP packets to the server on the internet to which they are addressed via the DOCSIS modem 70, the ADSL modem 182 or possibly by the conventional modem 280 in Figure 4A (although use of the conventional modem would only make sense if higher bandwidth upstream media was not available).

### Modular Construction of Gateway

Referring to Figure 8, there is shown a block diagram illustrating the software architecture and modular construction of the gateway/LAN server 14. As mentioned above, in alternative embodiments, the gateway 14 may actually be comprised of two or more servers to divide the labor but each coupled to the expansion modules by a bus/LAN structure 156. For example, one server may run only the PBX control software and IP telephony software and another server may run only the management and control and routing process needed for the push and pull video applications and high speed internet access and perform any routing functions needed for IP telephony by the first server.

The software processes in the host or server run in conjunction with the operating system 358 and use its application programmatic interfaces (API) for message transfers between processes and to send data to the LAN interface or NIC 360 and the host bus 156. The data paths between the various software processes and between the various processes and NICs 362 and 364 and the host bus 156 through the operating system are symbolized by data path 366. This data path represents any of the typical methods and apparatus for transferring data between processes or between processes and circuits in the gateway. For example, NIC #1 362 may receive an Ethernet packet bearing a request for a video-on-demand program that is addressed to the management and control process. One way NIC 362 can transfer that packet to the routing process 86 by writing the data into on-board scratchpad RAM and invoking a software interrupt for the routing process 86 and passing it a pointer to the message in RAM. The routing process then executes an interrupt service routine for that interrupt and reads the data from the scratchpad RAM at the address passed with the interrupt or at some preassigned address stored in an interrupt table. Processes and circuits can also pass messages by writing them into predetermined locations in shared address space in RAM 129 with the destination circuit or process and then setting an interrupt bit and storing an interrupt number in a register. The interrupt bit causes the host to execute a generic interrupt service routine to retrieve the interrupt number and then look up the interrupt number in an interrupt vector table. The table would return the address of the beginning of an interrupt service routine for that number. Each circuit or process would have an interrupt number and an associated interrupt service routine. The service routine pointed to by the vector table would then be executed and retrieve the data and return it to the process or circuit associated with that interrupt. Each of the expansion modules could pass data or IP packets to the routing process 86 or the IP video process 158 in that way.

A management and control process 368 receives video-on-demand and other requests for services and data as described in the detailed descriptions of each module. These other requests can include the numbers of CATV or terrestial channels to tune in or requests for DirecPC or ADSL or HFC high speed internet access. Other data the management and control process will receive in alternative embodiments is LAN available bandwidth status and other network management type data. In response, the management and control process sends out the appropriate control data to the tuners, transport demultiplexers, transcoders, conditional access circuits, IP video process and other circuits or processes to manage retrieving the requested data and distributing it to the right peripheral or to transmit data upstream on particular upstream channels. These upstream channels may be preassigned or assigned by downstream control messages from the headend or ADSL CO or satellite uplink server.

The routing process 86 translates between IP and Ethernet or other LAN protocols and functions as previously described. The IP video process 158 encapsulates data sent to over the host bus into IP packets addressed to the proper peripheral device.

The IP telephony and other telephony enabled and PBX processes represented by block 370 control the IP and PBX telephony expansion module to implement PBX functions, carry out IP telephony etc. For example, there may be 5 conventional or LAN telephones in the home each of which is primarily answered by one person in the family. One of the processes of block 370 may implement direct inward dialing such that each telephone has its own virtual telephone number which an outsider can dial when, for example, they want to talk to teenager Judy without the inconvenience of accidently talking to her father. Likewise, two extension phones may wish to have a conference call with a phone in some other state. The PBX control sofware controls the switch in the PBX module 372 to implement any of these desired PBX functions. The IP telephony process carries out IP telephony, by, for example, receiving digital data from conventional POTS phones via telephony module 372 and encapsulates it into IP packets which are passed to router 86 and vice versa. IP packets received from LAN enabled telephones 60 and 62 are just passed directly to the router 86.

Likewise, a database program or word processing program being run on a PC or NC out on the LAN may be telephony enabled. For example, a rolodex file made by a word processing program may contain telephone numbers and the user may look up a person by name and then double click on the phone number. This double click will be converted by the telephony enabled application into an Ethernet packet requesting that the telephone number be dialed. This Ethernet packet is sent to NIC 362 or 364 and is there passed up to the router 86. The router strips the Ethernet header off and passes the data of the request to a PBX application represented by block 370. The PBX application makes a function call to a library program of the OS 358 through the standard TAPI interface 374.

The TAPI interface represents a collection of predefined Windows function calls, each of which invokes a library program from a telephony dynamic linked library of programs. The TAPI function calls provide a standard telephony programmatic interface to applications that want to perform telephone functions. The basic level of functions allow application programs to carry out basic inbound and outbound voice and data calls by providing programs that can be invoked to initialize and open and close TAPI lines, read and write various parameters that control a line device, handle the details of placing an outbound voice or data call or answer an inbound voice or data call, recognize, translate and or build telephone "addresses" or dialing strings, manipulating call handles etc. Other programs in the TAPI library provide more advanced functions such as digit or tone generation and detection, call acceptance and rejection, redirection, call forwarding, park, hold, conference, etc. if the These advanced features are called supplemental telephony services and allow multiple telephone handsets or other line devices to share only a single CO trunk line or to share multiple CO trunk lines in a PBX type arrangement. The trunk lines can be analog, T1, ISDN or DSL. Because TAPI also supports the logical construct of phone devices, the NCs and PCs out on the network with TAPI libraries can actually have multi-line virtual telephones implement in code running thereof so that every room with a PC in it can also have a multi-line phone capable of speakerphone, conference, hold, park, call forwarding and other advanced capabilities not normally on standard home telephones.

TAPI services focus on "line devices" as a means for transporting information from one place to another. A line device can be a standard telephone handset, a fax board, a data modem, a telephony card or any physical device coupled to a telephone line. In the system depicted in Figure 8, the ADSL modem module 378, conventional modem module 380 and IP and PBX telephony module 372 are all line devices. Because a line device is a logical construct, TAPI can see multiple line devices all coupled to the same physical telephone line. A TAPI call control program (dialer.exe) can accept multiple simultaneous TAPI service requests from, for example, the PBX application, the IP telephony application and other telephony enabled applications all represented by block 370 and queue them all for service in order.

Communications between the application programs and the TAPI library are by the Windows messaging function using predefined TAPI data structures. Telephony libraries of other operating system may be substituted for the Window TAPI library and the data structures and and messaging functions of the operating system in use can be substituted.

How TAPI is structured and how application programs can be written to utilize this resource are all defined in Amundsen, *MAPI, SAPI & TAPI Developer's Guide,* (SAMS Publishing 1996) ISBN 0-672-30928-9, which is hereby incorporated by reference.

Returning to the current example, the TAPI program executes and makes a function call to the telephone service provider process 376 and passes it the number to be dialed. The TSP layer 376 isolates the TAPI library program from needing to know the details of the specific hardware installed and it isolates the particular hardware which is installed from having to be designed for the specific telephony enabled application programs which are present. It is translator between the TAPI world and the harware world. In other words, the TSP layer 376 implements the TSPI fucntions that are used by TAPI implementation. Each TSP then uses whatever interface is appropriate to control the telephony hardware to which it is connected. The TSP layer 376 and the PBX card driver layer 378 actually can be combined in some embodiments, and in other embodiments, the TSP layer can be used to interface to other telephony hardware such as a FAX modem expansion module 380 at the gateway by which FAXes may be sent using data received from PCs that do not have FAX modems or connections to telephone lines available at their location on the network.

Assuming the TSP and PBX card drivers are separate processes, either TSP 376 or TAPI program 374 then invokes the proper function call of a PBX card driver process 378 and passes it the number to be dialed. The PBX card driver speaks the specific language of the IP and PBX telephony module 372 and sends it a properly formatted message to control the switch and other circuitry thereon to seize a CO trunk line and generate the appropriate DTMF tones to dial the requested number when a dial tone is detected.

When the person answers, the voice is digitized by a codec in the PBX card 372 and and the data is passed back to the PBX card driver which then passes it back up through all the layers to the router. The router encapsulates the data into an Ethernet packet addressed to the telephone or other line device that made the call and passes the packets to the appropriate NIC. From the NIC, the packets are transmitted via LAN to the network adapter of the telephone or PC or NC that originated the call. The reverse thing happens for voice going out from the PC, NC or telephone which originated the call to the person who answered the phone.

The host bus is coupled via bus connectors and expansion slots to one or more expansion modules which implement the transmitter and receiver circuitry and other interface circuitry necessary to interface the gateway to the satellite, HFC, POTS or DSL media or any other media such as the power lines or wireless local loops which may be developed in the future. Modules are shown for currently existing technologies only, but newer upstream and downstream media are sure to follow, and the genus of the invention includes expansion modules of whatever type are needed to interface to these newer media.

The ADSL modem module 378 may be any conventional ADSL modem 182 or SDSL modem or any other modem to interface to any type of digital subscriber line local loop which can be digitally controlled by the host 128. It will include any connectors and isolation circuitry 204 needed to connect to the DSL CO trunk line.

The FAX/Data Modem Module 380 can be any conventional FAX/Data modem or simple data modem for coupling via suitable connectors and isolation circuitry 205 to extension phone lines 354 within the customer premises as well as DSL CO trunk lines 58 and which can be digitally controlled by the host 128.

The IP & PBX telephony module 372 can be any known or future developed "PBX on a card" including one or more expansion cards which give a conventional personal computer host 128 running any operating system PBX capabilities and which can be digitally controlled by the host 128. It can include any needed additional known circuitry and software needed to implement IP telephony functions.

A DOCSIS modem module can be any known or future developed cable modem that conforms to the DOCSIS standard or any new standard for modems that allow high speed data transfers from a customer premises to a headend cable modem and/or the internet over a CATV HFC cable plant, and which can be digitally controlled by the host 128.

An HFC digital video module 388 can be any digital video receiver which can be digitally controlled by the host 128 and is compatible with reception of digitized compressed video data transmitted over HFC. In the system of Figure 4A, for example, the HFC digital video module 388 would typically include tuner 108, an A/D converter included in matrix 130, QAM demodulator 146, transport demultiplexer 148 and conditional access circuit 126 to communicate with the shared IP video process 158 running in software on the host. It may also include the upstream and downstream combiner and isolation circuits 90 and 98 although this combiner and isolation circuitry may be shared by all HFC interface modules in some embodiments.

An HFC analog video module 390 can be any receiver capable of receiving regularly scheduled analog CATV transmissions over HFC which can digitize and compress the data for transmission over the LAN and which can be digitally controlled by the host 128. In the exemplary embodiment of Figure 4A and 4B, the module 390 typically would include tuner 100, an A/D converter from matrix 130, video demodulator 138, video decoder 114 and MPEG encoder 147. It may also include the upstream and downstream combiner and isolation circuits 90 and 98 although this combiner and isolation circuitry may be shared by all HFC interface modules in some embodiments.

In some species within the genus of the invention, all HFC interface modules such as 386, 388 and 390 may be combined into one HFC interface module. Likewise for all expansion modules that interface to the PSTN and extension phone lines or all modules that interface with the satellite dish.

A satellite digital video-on-demand module 392 can be any satellite receiver which can be digitally controlled by the host 128 to tune in and receive a specifically requested compressed digital video-on-demand broadcast from a satellite. In the embodiment of Figures 4A and 4B, it includes tuner 180, QPSK demodulator 220, transport demultiplexer 184 and conditional access circuit 186.

A satellite analog video video module 394 can be any coventional C-band satellite receiver modified to receive tuning commands digitally from the host 128 and modified to digitize and compress the video program for distribution on a LAN. In the embodiment of Figures 4A and 4B, it would include tuner 314, A/D converter 316, video demodulator 320, video decoder 324 and MPEG encoder 326.

A satellite DirectPC module 396 can be any conventional DirectPC receiver or any equivalent receiver for receiving IP packetized data transmitted from a satellite capable of being digitally controlled by a host computer and send the recovered IP packets to a routing process being run by the host. In the embodiment of Figures 4A and 4B, it would include tuner 302 and QPSK demodulator 304.

A satellite DirecTV module 398 can be any conventional DirecTV receiver or equivalent digital satellite TV broadcast receiver which can receive regularly-scheduled, compressed, digital TV broadcasts from a satellite but modified to be controlled digitally by the host 128 to tune to a requested broadcast channel. In the embodiment of Figures 4A and 4B, this module would include tuner 344, QAM demodulator 346, transport demultiplexer 350, transcoder 352 and conditional access circuit 354.

A terrestial analog NTSC or PAL or SECAM module 400 can be any receiver capable of being digitally tuned by the host computer which can receive regularly scheduled analog TV broadcasts via an antenna and digitize and compress them for distribution over a LAN. In the embodiment of Figures 4A and 4B, it would include tuner 332, A/D converter 334, video demodulator 336, video decoder 340 and MPEG encoder 342.

Any of the modules defined above which recover or generate digital data for transmission on the LAN indudes a transcoder to translate the original bit rate to a lower bit rate where needed because of network loading. Likewise, any module that recovers digital data that encodes copyrighted materials such as video or audio programs may include a C5 standard encryption circuit to re-encode the digital data before transmission on the LAN to prevent perfect, unauthorized digital copies which could happen if the digital data were to be transmitted in the clear.

## Claims

1. A gateway apparatus, comprising:
a host computer (128) having a host bus (158);
one or more local area network interfaces (84, 362, 364) coupling said host computer to one or more local area networks (18, 20) that carry data between said gateway and one or more devices located within a customer premises; and
two or more external network interface circuits (182, 200, 353, 70, 180, 220, 184, 186, 158, 100, 138, 114, 147, 102, 146, 148, 126, 344, 346, 350, 352, 354, 302, 304) coupled to said host bus for interfacing said host computer to two or more networks external to said customer premises including a satellite feed (56) for receiving at least transmissions of compressed digital video and a hybrid fiber coaxial cable television network, hereafter HFC network (10) which delivers at least analog television signals and other digital data including downstream DOCSIS data transmitted from a head end modem to said customer premises and which carries upstream DOCSIS data to said head end modem, said two or more external network interface circuits including at least a DOCSIS compatible cable modem (104, 70) coupled to said HFC network for tuning to downstream radio frequency signals specified by said host computer, said downstream radio frequency signals modulated with DOCSIS digital data encoding one or more data and/or video services and for recovering said downstream digital data and outputting said data to a routing process (86) for delivery to one or more devices coupled to said one or more local area networks which requested said downstream digital data, and wherein said cable modem is structured to transmit upstream DOCSIS data such that multiple cable modems in multiple gateways coupled to said HFC network can successfully transmit to a head end modem, said two or more external network interface circuits including a satellite digital video broadcast interface for receiving compressed digital video packets modulated onto radio frequency signals and processing said signals in a demodulator (346) and a transport demultiplexer (350) to recover the data of a desired video program and a transcoder (352) to translate the bit rate of the compressed video down to a lower rate when necessary because of current loading conditions on one or more of said local area networks and a conditional access circuit (186) for blocking access so that only video programs to which a subscription exists can be received;
wherein said host computer is also programmed to implement an IP packetization process (158) to receive data from said external network interface circuits and packetize said data into IP packets if said data is not already in IP packet format when received by said routing process and supply (300) said IP packets to said routing process (86), and wherein said host computer is also programmed with a routing process to receive IP packets from said IP packetization process or said cable modem and encapsulate said IP packets into local area network packets and transmit said local area network packets on the appropriate local area network coupled to a device to which said IP packets are addressed via one or more of said local area network interfaces and wherein said host computer is programmed to implement said routing process to receive upstream local area network packets which encapsulate IP packets from devices coupled to said local area networks and strip off the local area network packet headers and route the encapsulated IP packets to the appropriate external network interface circuit for transmission over an external network to a device or process having the IP address of each IP packet's destination address and to receive IP packets from said IP packetization process and route them to the appropriate device coupled to a local area network to which said IP packets are addressed by encapsulating said IP packets into suitable local area network packets and delivering said local area network packets to the appropriate local area network interface (362, 364) for driving onto the appropriate local area network, and a management and control process for receiving requests for data from said devices coupled to said local area networks and sending digital control data to said external network interface circuits to control them to obtain said data.

2. The gateway apparatus of claim 1, wherein said two or more external network interface circuits includes a direct broadcast satellite interface (344, 346, 350, 352, 354) to interface said gateway apparatus to a satellite dish at which is received compressed digital video modulated onto a radio frequency broadcast from a satellite.

3. The gateway apparatus of claim 1 or 2, wherein said two or more external network interface circuits includes an analog CATV interface means (100, 130, 138, 114, 147) adapted to receive control signals from said host computer to control said analog CATV interface means to tune to a specific radio frequency channel modulated with analog CATV broadcast signals transmitted downstream on said HFC network and digitize (130) the analog video signals and demodulate (138) the digitized video signals to output digital data representing conventional NTSC, PAL or SECAM format video signals, and decode (114) the NTSC, PAL or SECAM format video signals into YUV format signals suitable for compression, compress (147) the YUV format signals to a data rate which can be transmitted on one or more of said local area networks coupled to a device where said CATV signal is to be viewed, packetize (158) said compressed video data into a packet suitable for transmission over said local area network and addressed to said device where said CATV signal is to be viewed and provide said packets to said routing process (86) for routing to said device where said CATV signal is to be viewed.

4. The gateway apparatus of any of claims 1 to 3, wherein said management and control process is structured to control said host computer to receive local area network packets from one or more devices coupled to said local area networks which contain requests to download specific data or web pages at uniform resource locator addresses identified in said packet or which contain a request to receive and distribute regularly scheduled video broadcasts transmitted over said HFC network, a satellite downlink or a terrestrial broadcast, or to request a video-on-demand program to be delivered over said HFC network or said satellite downlink or via a digital subscriber line local loop, and generating and sending appropriate control data to the appropriate one of said external network interface circuits to cause the requested data or web page or video broadcast or video-on-demand program to be requested and received.

5. The gateway apparatus of any of claims 1 to 4, wherein said two or more external network interface circuits comprises a digital subscriber line modem (182).

6. The gateway apparatus of any of claims 1 to 5, wherein said two or more external network interface circuits comprises a conventional POTS line fax and/or data modem (280).

7. The gateway apparatus of any of claims 1 to 6, wherein said two or more external network interface circuits comprises an internet packet telephony circuit (353) to interface said gateway to plain old telephone service and/or digital subscriber line phone lines from a public service telephone network central office, and one of said external network interface circuits comprises a digital video-on-demand interface means (102, 146, 148, 126, 86, 128, 158, 70, 94, 90) coupled to said HFC network and said management and control process and to at least one said local area network interfaces, said video-on-demand interface means adapted to receive upstream video-on-demand, hereafter VOD, requests and use said cable modem to transmit said video-on-demand requests via said HFC network upstream to the appropriate server which can supply the requested data, and further adapted to control a VOD tuner (102) tune to the appropriate VOD radio frequency channel on said HFC network on which the requested VOD data will arrive, and further adapted to demodulate (146) the received symbols encoding said VOD data and demultiplex (148) said VOD data into video data, audio data and any associated auxiliary data in the transport stream, and further adapted to decrypt (126) the data output by said the demultiplexing circuitry (148), and further adapted to encapsulate the video, audio and auxiliary data into IP packets addressed to the device which ordered said data and route said IP packets to the appropriate local area network and transmit said IP packets on said appropriate local area network to the device which ordered said VOD data.

8. The gateway apparatus of any of claims 1 to 7, wherein said two or more external network interface circuits comprises a private branch exchange, hereafter PBX, telephony circuit for interfacing said gateway to one or more plain old telephone service, hereafter POTS, telephone lines which are internal or external to said customer premises and/or one or more digital subscriber line, hereafter DSL, phone lines from a public service telephone network central office, said PBX telephony circuit including a switch controlled by a plurality of processes controlling said host computer to implement PBX telephony functions for line devices such as telephones coupled to said one or more POTS or DSL lines or to said local area network, said processes including a PBX application process, one or more processes implementing a TAPI dynamic linked library and a PBX card driver process.

9. The gateway apparatus of any of daims 1 to 8, wherein said two or more external network interface circuits comprises a satellite digital VOD data interface means (180, 220, 184, 186) adapted to receive and route digital data encoding requested VOD program data by tuning (180) to a radio frequency downlink channel specified by said host computer, demodulating (220) the received RF signals to recover received constellation points, and further adapted to demultiplex (184) the video, audio and associated data of the VOD transport stream, and decrypt (186) the data if necessary; and said IP packetization process controls said host computer to reassemble IP packets (158) if IP packets were broken up for transmission or to packetize the recovered data into IP packets if the data was not in IP packets when transmitted, and deliver said IP packets to said routing process (86) for routing and transmission on the appropriate local area network to the device which requested said VOD program.

10. The gateway apparatus of claim 1, wherein cable modem generates its upstream symbol clock from a master symbol clock transmitted downstream over said HFC network from a head end modem, with said upstream symbol clock being generated at a rate which is fast enough for synchronous code division multiplexed transmission and which is M/N times the downstream symbol clock rate where M and N are integers; and said cable modem includes means adapted to detect and excise narrow band noise in downstream data transmitted over said HFC network; and said cable modem includes means adapted to do two-dimensional interleaving of upstream data along both the time and spreading code axes to provide improved burst noise immunity of upstream data transmissions; and said cable modem indudes means adapted to allow mixed modes of upstream transmission in at least two different logical channels transmitted with overlapping bandwidth in the same frequency band.

11. The gateway apparatus of daim 1, wherein said two or more external network interface circuits comprises a receiver (180, 220, 184, 186) for interfacing said gateway to said HFC network, said receiver being capable of receiving and demodulating and recovering digitized, compressed video-on-demand program data in an MPEG transport stream modulated onto a downstream carrier requested by a device coupled to said local area network and demultiplexing the audio and video components and transmitting the recovered data to said IP packetization process for packetization into IP packets or reassembly of IP packets if necessary and transmission to said routing process for routing to the device which requested said VOD program via the appropriate local area network interface which is coupled to the appropriate local area network coupled to said device which requested said VOD program.

12. The gateway apparatus of any of claims 1 to 11, wherein said two or more external network interface circuits comprises a receiver for interfacing said gateway to said HFC network, said receiver (100, 130, 138, 114, 147) being capable of receiving analog video transmissions on said HFC requested by a device coupled to said local area network and digitizing and demodulating (138) said analog video transmissions and then encoding (114) the resulting data into a format in which it can be compressed, and then compressing (147) the data and transmitting it via said host bus to said IP packetization process (158); and said two or more external network interface circuits comprises a satellite digital VOD data interface means (180, 220, 184, 186) adapted to receive and route digital data encoding requested VOD program data by tuning (180) to a radio frequency downlink channel specified by said host computer, demodulating (220) the received RF signals to recover received constellation points, and further adapted to demultiplex (184) the video, audio and associated data of the VOD transport stream, and decrypt (186) the data if necessary; and said IP packetization process controls said host computer to reassemble IP packets (158) if IP packets were broken up for transmission or to packetize the recovered data into IP packets if the data was not in IP packets when transmitted, and deliver said IP packets to said routing process (86) for routing and transmission on the appropriate local area network to the device which requested said VOD program.

13. The gateway apparatus of any of claims 1 to 11, wherein said two or more external network interface circuits comprises a receiver (344, 346, 350, 352, 354) for interfacing said gateway to a satellite dish and receiving compressed digital data encoding a regularly scheduled television program modulated onto a downlink carrier the channel number of which is requested by a device coupled to one of said one or more local area networks and demodulating and recovering said digital data and demultiplexing (350) the audio and video data therefrom and transmitting said recovered digital data via said host bus to said IP packetization process and to said routing process for distribution on the appropriate said local area network coupled to the device which requested said channel number.

14. The gateway apparatus of any of claims 1 to 10, wherein said cable modem is DOCSIS compatible and said two or more external network interface circuits comprises a receiver (102, 146, 148, 126) for interfacing said gateway to a satellite dish and receiving compressed digital data encoding a video-on-demand television program modulated onto a downlink carrier, wherein said program was requested by a device coupled to said one or more local area networks and demodulating and recovering said digital data of said requested video-on-demand program and demultiplexing the audio and video data therefrom and transmitting said recovered digital data via said host bus to said IP packetization process and from there to said routing process for routing to said device which requested said video-on-demand program via the appropriate one of said local area network interfaces and local area networks.

15. The gateway apparatus of any of claims 1 to 14, wherein said two or more external network interface circuits comprises a receiver (314, 316, 320, 324, 326) for interfacing said gateway to a satellite dish and receiving from a device connected to one or more of said local area networks a request to receive a particular channel having analog regularly scheduled television programs modulated onto a downlink carrier and controlling a tuner (314) to tune the requested channel to filter out substantially all other signals other than said requested analog regularly scheduled television program signals, and demodulating (320) and digitizing (316) said television signals and encoding (324) the digital data into a format that can be compressed and compressing (326) said digital data and transmitting said compressed digital data via said host bus to said IP packetization process and to said routing process for routing via the appropriate local area network interface and the appropriate local area network to said device which requested said channel having analog regularly scheduled television programs.

16. The gateway apparatus of any of claims 1 to 15, wherein said two or more external network interface circuits comprises a receiver (302. 304) for interfacing said gateway to a satellite dish and receiving digital data encoding a web page or other information from the internet and encapsulated into internet protocol packets requested by a device coupled to one or more of said local area networks, said digital data having been modulated onto a downlink carrier transmitted from a satellite to said satellite dish, and demodulating (304) and recovering said internet protocol packets and transmitting them via said host bus to said routing process (86) for routing to said device which requested said data via the appropriate said local area network interface and the appropriate local area network.

17. The gateway apparatus of any of claims 1 to 16, wherein said two or more external network interface circuits comprises a receiver (332, 334, 336, 340, 342) for interfacing said gateway to a conventional terrestrial broadcast television antenna and receiving a regularly scheduled television program signal requested by a device coupled to said local area network and modulated onto a terrestrial broadcast carrier and demodulating said signals digitizing said signals and encoding the digital data into a format that can be compressed and compressing the digital data and transmitting said compressed digital data via said host bus to said IP packetization process.

18. The gateway apparatus of any of claims 1 to 17, wherein all or at least some of said external network interface circuits are structured as expansion modules which are coupled to said host computer via expansion slots so as to be removable such that only the desired external network interface circuits need be present in said gateway.

19. The gateway apparatus of claim 1 or 18, wherein said one or more local area network interface circuits are Ethernet local area network interface cards (362, 364) and the apparatus further comprises a transcoder means adapted to convert the original bit rate of the incoming data to a different bit rate where necessary to manage traffic load on said one or more local area networks; and said routing process (86) controls said host computer (128) to receive internet protocol formatted packets either from said IP packetization process (158) or directly from an external network interface circuit (70) and, with said network interface, look up the Ethernet address of the device coupled to said local area network that corresponds to the internet protocol packet's destination address, and do all the protocol conversions necessary to encapsulate each said internet protocol packet into one or more Ethernet local area network packets addressed to a device which requested the data in said internet protocol packet and transmit same over the appropriate local area network (18, 20) to the device which requested said data.

20. The gateway apparatus of claim 19, wherein said local area network interfaces are one or more Ethernet network interface cards (362, 364) which interface said gateway to a corresponding number of Ethernet networks (18, 20); and said host bus is a high capacity, multiplexed H.100 compatible bus; and said management and control process is structured to control said host computer to receive Ethernet packets from devices coupled to said local area networks which contain requests to download specific web pages at URLs identified in said packet or to receive and distribute regularly scheduled video broadcasts over a CATV hybrid fiber coaxial cable system, a satellite downlink or a terrestrial broadcast, or a digital subscriber line local loop or to request receipt and distribution of a video-on-demand program to be delivered over said CATV hybrid fiber coaxial cable system or said satellite downlink or via a digital subscriber line local loop, and generating and sending appropriate control data to the appropriate one of said external network interface circuits to cause the requested data or video broadcast or video-on-demand program, hereafter referred to as content, to be received and distributed to the device or devices which requested said content.

21. The gateway apparatus of claim 1, wherein said two or more external network interface circuits comprise:
a modular digital subscriber line modem means (182) coupled to said host computer via an expansion slot connection to said host bus (156) for interfacing said gateway to a digital subscriber line local loop; and
a direct broadcast satellite receiver module (344) such as a DirecTV receiver coupled to said host bus by an expansion slot connection and functioning to interface said gateway to a satellite dish.

22. The gateway apparatus of claim 1, wherein said two or more external network interface circuits further comprise a conventional POTS line fax and/or data modem expansion module coupled to said host computer via an expansion slot, for interfacing said gateway to a conventional POTS telephone line to the central office of the public service telephone network.

23. The gateway apparatus of claim 1, wherein said two or more external network interface circuits further comprise an internet packet telephony module (372) coupled to said host computer via an expansion slot for interfacing said gateway to plain old telephone service and/or digital subscriber line phone lines from a public service telephone network central office.

24. The gateway apparatus of claim 1. wherein said cable modem is a DOCSIS compatible modular cable modem (386) which is coupled to said host computer's host bus through an expansion slot.

25. The gateway apparatus of claims 1, wherein said two or more external network interface circuits comprise modular VOD means (378, 380, 386, 388, 392 70, 94, 90, 98) coupled to said host bus through an expansion slot, and adapted to interface said gateway to said HFC network, a DSL line or a POTS telephone line to request one or more specified video-on-demand programs via an upstream message and adapted for receiving and demodulating and recovering digitized, compressed data encoding said one or more requested video-on-demand programs, said data being modulated onto a downstream carrier transmitted on a DSL line (58) or said HFC network (10) or a satellite downlink and requested by one or more devices coupled to one or more of said local area networks, and said modular VOD means are also adapted for demultiplexing the audio and video components and any auxiliary data of said one or more requested video-on-demand programs and transmitting the recovered data to said IP packetization process for packetization into IP packets if said data is not already encapsulated in IP packets, and thence to said routing process for encapsulation into appropriate local area network packets and routing to said one or more devices which requested said video-on-demand programs.

26. The gateway apparatus of claim 1, wherein said two or more external network interface circuits further comprise modular C-band satellite receiver means (394) coupled to said host bus via an expansion slot and adapted to interface said gateway to a satellite dish for receiving analog regularly scheduled television programs modulated onto a downlink carrier requested by a device coupled to said gateway by a local area network and demodulating and digitizing said television signals and encoding the digital data into a format that can be compressed and compressing said digital data and transmitting said compressed digital data via said host bus to said IP packetization process for encapsulation into IP packets and thence to said routing process.

27. The gateway apparatus of claim 1, wherein said two or more external network receiver means comprises modular DirecPC modem means (396) coupled to said host bus by an expansion slot and adapted to interface said gateway to a satellite dish and receive digital data encoding a web page or other information from the internet and encapsulated into internet protocol packets requested by a device coupled to said gateway by a local area network, said IP packets having been modulated onto a downlink carrier, and further adapted to demodulate said downlink carrier and recover said internet protocol packets and transmitting them via said host bus to said routing process for routing via said local area network to said device which requested them.

28. A process carried out by a gateway for requesting a video-on-demand, hereafter VOD, program and distributing the data of said video-on-demand program to the device which requested it via a local area network, hereafter LAN, comprising:
receiving a LAN packet encapsulating an internet protocol packet, hereafter IP packet, identifying a VOD program to be requested, said LAN packet containing data identifying the device which requested said VOD program and the source to supply said VOD program (108);
stripping off local area network headers from received LAN packets and routing said IP packet to a video server which can supply the requested VOD program via an external network Interface in said gateway which interfaces said gateway to an external network to which said video server is coupled (110-116), said external network interface being modular and coupled to a host computer of said gateway via an expansion bus slot;
receiving radio frequency signals modulated with data encoding packets containing compressed data encoding the requested VOD program via one of at least two modular external network interface circuits coupled to a host computer through an expansion slot and coupled to an external network to which said video server is coupled, said at least two modular external network interface circuits interfacing said host computer to a satellite feed for receiving at least transmissions of a compressed digital video and a hybrid fiber coaxial cable television network which delivers at least analog television signals and other digital data including downstream DOCSIS data transmitted from a head end modem and which carries upstream DOCSIS data to said head end modem, and recovering (202, 136, 140, 214, 224) said IP packets from said radio frequency signals;
reassembling IP packets containing compressed VOD data or encapsulating compressed VOD data into IP packets addressed to the IP address of the device which requested said VOD program if said VOD data was not originally in IP packets (238, 194), and sending said IP packets to a routing process in said gateway;
translating the bit rate of received compressed video down to a lower rate when necessary because of current loading conditions on one or more local area networks to which said gateway is coupled;
stocking access so that only video programs to which subscription exists can be received; and
encapsulating (240, 196) said IP packet into LAN packets addressed to the device which ordered said VOD program and routing said LAN packets through a local area network interface of said gateway to the device which ordered said VOD program via a local area network coupled to said device.

## Patentansprüche

1. Gateway-Vorrichtung, umfassend:
einen Host-Computer (128), der einen Host-Bus (158) aufweist;
eine oder mehrere lokale Netzwerkschnittstellen (84, 362, 364), die den Host-Computer an eines oder mehrere lokale Netzwerke (18, 20) koppeln, die Daten zwischen dem Gateway und einem oder mehreren Geräten tragen, die innerhalb von Kundenräumlichkeiten lokalisiert sind; und
zwei oder mehrere externe Netzwerkschnittstellenschaltungen (182, 200, 353, 70, 180, 220, 184, 186, 158, 100, 138, 114, 147, 102, 146, 148, 126, 344, 346, 350, 352, 354, 302, 304), die an den Host-Bus gekoppelt sind, um den Host-Computer an zwei oder mehrere Netzwerke zu koppeln, die außerhalb der Kundenräumlichkeiten sind, einschließlich einer Satellitenspeisung (56) zum Empfangen zumindest von Übertragungen von komprimiertem digitalem Video und ein Hybridfaser-Koaxialkabel-Fernschnetzwerk, hierin nachstehend HFC-Netzwerk (10), das zumindest analoge Fernsehsignale und andere digitale Daten lielert, einschließlich Stromabwärts-DOCSIS-Daten, die von einem Kopfstationsmodem zu den Kundenräumlichkeiten übertragen werden, und die Stromaufwärts-DOCSIS-Daten zu dem Kopfstationsmodem tragen, wobei die zwei oder mehr externen Neizwerkschnittstellenschaltungen zumindest ein DOCSIS-kompatibles Kabelmodem (104, 70) einschließen, das an das HFC-Netzwerk gekoppelt ist zum Einstellen auf Stromabwärts-Funkfrequenzsignalen, die durch den Host-Computer spezifiziert sind, wobei die Stromabwärts-Funkfrequenzsignale, die mit DOCSIS-Digitaldaten moduliert sind, ein oder mehrere Daten und/oder Videodienste codieren und zum Empfangen der Stromabwärts-Digitaldaten und Ausgeben der Daten an einen Routingprozess (86) zur Lieferung an ein oder mehrere Geräte, die zu dem einem oder mehreren lokalen Netzwerken gekoppelt sind, die die Stromabwärts-Digitaldaten angefordert haben, und worin das Kabelmodem strukturiert ist, um Stromaufwärts-DOCSIS-Daten zu übertragen, so dass mehrere Kabelmodems in mehreren Gateways, die an das HFC-Netzwerk gekoppelt sind, erfolgreich an ein Kopfstationsmodem übertragen können, wobei die zwei oder mehr externen Netzwerkschnittstellenschaltungen eine Satelliten-Digitalvideo-Übertragungsschnittstelle zum Empfangen komprimierter digitaler Videopakete einschließen, moduliert auf Funkfrequenzsignale, und Verarbeiten der Signale in einem Demodulator (346) und einen Transportdemultiplexer (350) zum Wiederherstellen der Daten eines gewünschten Videoprogramms und einen Transcoder (352) zum Übersetzen der Bitrate des komprimierten Videos herunter auf eine niedrigere Rate, wenn es nötig ist, wegen gegenwärtiger Lastbedingungen auf einem oder mehreren der lokalen Netzwerke und einer bedingten Zugangsschaltung (186) zum Zugangsblockieren, so dass nur Videoprogramme empfangen werden können, zu denen eine Subskription existiert;
wobei der Host-Computer ebenfalls programmiert ist, um einen IP-Paketisierungsprozess (158) zu implementieren, um Daten von den externen Netzwerkschnittstellenschaltungen zu empfangen und Paketisieren der Daten in IP-Pakete, wenn die Daten nicht bereits in IP-Paketformat sind, wenn sie durch den Routingprozess empfangen werden, und Liefern (300) der IP-Pakete an den Routingprozess (86), und wobei der Host-Computer ebenfalls programmiert ist mit einem Routingprozess zum Empfangen von IP-Paketen vom IP-Paketisierungsprozess oder dem Kabelmodem und Einkapseln der IP-Pakete in lokale Netzwerkpakete und Übertragen der lokalen Netzwerkpakete auf einem geeigneten lokalen Netzwerk, das an ein Gerät gekoppelt ist, zu dem die IP-Pakete adressiert sind über eine oder mehrere der lokalen Netzwerkschnittstellen und worin der Host-Computer programmiert ist, um den Routingprozess zu implementieren, um stromaufwärts lokale Netzwerkpakete zu empfangen, die IP-Pakete einkapseln von Geräten, die zu den lokalen Netzwerken gekoppelt sind, und Entfernen der lokalen Netzwerk-Paketheader und Leiten der gekapselten IP-Pakete an die geeignete Netzwerkschnittstellenschaltung zum Übertragen über ein externes Netzwerk zu einem Gerät oder Prozess, das die IP-Adresse von jeder IP-Paket-Zieladresse hat, und um IP-Pakete zu empfangen von dem IP-Paketisierungsprozess und Leiten dieser zu den geeigneten Geräten, die an ein lokales Netzwerk gekoppelt sind, zu dem die IP-Pakete adressiert sind, durch Einkapseln der IP-Pakete in geeignete lokale Netzwerkpakete, und Liefern der lokalen Netzwerkpakete zu der geeigneten lokalen Netzwerkschnittstelle (362, 364) zum Treiben auf das geeignete lokale Netzwerk, und ein Management- und Steuerprozess zum Empfangen von Anforderungen für Daten von den Geräten, die zu den lokalen Netzwerken gekoppelt sind, und Senden von digitalen Steuerdaten zu den externen Netzwerkschnittstellenschaltungen, um diese zu steuern, um die Daten zu erhalten.

2. Gateway-Vorrichtung nach Anspruch 1, worin die zwei oder mehr externen Netzwerkschnittstellenschaltungen eine direkte Satellitenübertragungsschnittstelle (344, 346, 350, 352, 354) einschließen, um die Gatcway-Vorrichtung an eine Satellitenschüssel anzuschließen, bei der komprimiertes digitales Video empfangen wird, moduliert auf eine Funkfrequenz, die von einem Satelliten übertragen wird.

3. Gateway-Vorrichtung nach Anspruch 1 oder 2, worin die zwei oder mehr externen Netzwerkschnittstellenschaltungen ein analoges CATV-Schnittstellenmittel (100, 130, 138, 114, 147) einschließen, angepasst, um Steuersignale von dem Host-Computer zu empfangen, um das analoge CATV-Schnittstellenmittel zu steuern, zum Einstellen eines spezifischen Funkfrequenzkanals, moduliert mit analogen CATV-Übertragungssignalen, Übertragen stromabwärts auf dem HFC-Netzwerk und Digitalisieren (130) des analogen Videosignals und Demodulieren (138) des digitalisierten Videosignals zur Ausgabe digitaler Daten, die konventionelle NTSC-, PAL- oder SECAM-Format-Videosignale darstellen, und Decodieren (114) der NTSC-, PAL- oder SECAM-Format-Videosignale in YUV-Format-Signale, die für Komprimierung geeignet sind, Komprimieren (147) der YUV-Format-Signale zu einer Datenrate, die übertragen werden kann auf einem oder mehreren der lokalen Netzwerke, die gekoppelt sind zu einem Gerät, wo das CATV-Signal zu betrachten ist, Paketisieren (158) der komprimierten Videodaten in ein Paket, das für die Übertragung über das lokalen Netzwerk geeignet ist, und adressiert zu dem Gerät, wo das CATV-Signal zu betrachten sein wird, und Bereitstellen der Pakete an den Routingprozess (86) zum Leiten an das Gerät, wo das GATV-Signal zu betrachten sein wird.

4. Gateway-Vorrichtung nach einem der Ansprüche 1 bis 3, worin der Management- und Steuerprozess strukturiert ist, um den Host-Computer zu steuern, um lokale Netzwerkpakete zu empfangen von einem oder mehreren Geräten, die an die lokalen Netzwerke gekoppelt sind, welche Anforderungen beinhalten zum Herunterladen spezifischer Daten oder Netzseiten bei uniformen Ressourcenlokator-Adressen, die in dem Paket identifiziert sind, oder die eine Anforderung enthalten, um regelmäßig geplante Videoübertragungen zu empfangen und zu verbreiten, die über das HFC-Netzwerk, einen Satelliten-Downlink oder eine terrestrische Übertragung übertragen werden, oder ein Video-auf-Anforderungs-Program anzufordern, das über das HFC-Netzwerk oder den Satelliten-Downlink oder über eine digitale Teilnehmeranschlussleitung zu liefern ist, und Erzeugen und Senden geeigneter Steuerdaten an die eine geeignete der externen Netzwerkschnittstellenschaltungen, um zu bewirken, dass die angeforderten Daten oder Webseite oder Videoübertragung oder Video-auf-Anforderungs-Programm angefordert und empfangen werden.

5. Gateway-Vorrichtung nach einem der Ansprüche 1 bis 4, worin die zwei oder mehr externen Netzwerkschnittstellenschaltungen ein digitales Teilnehmeranschlussleitungsmodem (182) umfassen.

6. Gateway-Vorrichtung nach einem der Ansprüche 1 bis 5, worin die zwei oder mehr externen Netzwerkschnittstellenschaltungen ein konventionelles POTS-Leitungsfax und/oder Datenmodem (280) umfassen.

7. Gateway-Vorrichtung nach einem der Ansprüche 1 bis 6, worin die zwei oder mehr externen Netzwerkschnittstellenschaltungen umfassen eine Internet- Pakettelefonieschaltung (353) zum Verbinden des Gateways zu dem einfachen alten Telefondienst und/oder digitalen Teilnehmeranschlussleitungen von einer öffentlichen Telefonnetzwerkzentrale, und eine der externen Netzwerkschnittstellenschaltungen umfasst ein digitales Video-auf-Anforderungs-Schnittstellenmittel (102, 146, 148, 126, 86, 128, 158, 70, 94, 90), das gekoppelt ist an das HFC-Netzwerk und den Management- und Steuerprozess und an zumindest eine lokale Netzwerkschnittstelle, das Video-auf-Anforderungs-Schnittstellenmittel ist angepasst zum Empfangen von Stromaufwärts-Video-auf-Anforderung, hierin nachstehend VOD, Anforderungen und Verwendung des Kabelmodems, um die Video-auf-Anforderungs-Anforderungen zu übertragen über das HFC-Netzwerk stromaufwärts zu dem geeigneten Server, der die angeforderten Daten liefern kann, und weiter angepasst zum Steuern eines VOD-Tuner (102) zum Einstellen auf den geeigneten VOD-Funkfrequenzkanal auf dem HFC-Netzwerk, auf dem die angeforderten VOD-Daten ankommen werden, und weiter angepasst zum Demodulieren (146) der empfangenen Symbole, die die VOD-Daten codieren, und Demultiplexen (148) der VOD-Daten in Videodaten, Audiodaten und jegliche zugehörige Hilfsdaten im Transportstrom, und weiter angepasst zum Entschlüsseln (126) der Daten, die durch die Demultiplexschaltung (148) ausgegeben werden, und weiter angepasst zum Einkapseln der Video-, Audio- und Hilfsdaten in IP-Pakete, adressiert an das Gerät, das die Daten angefordert hat, und Leiten der IP-Pakete an das geeignete lokale Netzwerk und Übertragen der IP-Pakete an das geeignete lokale Netzwerk zu dem Gerät, das die VOD-Daten angefordert hat.

8. Gateway-Vorrichtung nach einem der Ansprüche 1 bis 7, worin die zwei oder mehr externen Netzwerkschnittstellenschaltungen eine private Vermittlungsstelle umfassen, hierin nachstehend PBX, Telefonieschaltung zum Verbinden des Gateways zu einem oder mehreren einfachen alten Telefondiensten, hierin nachstehend POTS, Telefonleitungen, die innerhalb oder außerhalb der Kundenräumlichkeiten sind und/oder ein oder mehrere digitale Teilnehmeranschlussleitungen, hierin nachstehend DSL, Telefonleitungen von einer öffentlichen Netzwerktelefonzentrale, wobei die PBX-Telefonieschaltung einen Schalter einschließt, der gesteuert wird durch eine Mehrzahl von Prozessen, die den Host-Computer steuern, um PBX-Telefoniefunktionen zu implementieren für Leitungsgeräte, wie z.B. Telefone, die gekoppelt sind an die eine oder mehrere POTS- oder DSL-Leitungen oder das lokale Netzwerk, wobei die Prozesse einen PBX-Anwendungsprozess einschließen, eine oder mehrere Prozesse implementieren eine TAPI-dynamisch verknüpfte Bibliothek und einen PBX-Kartentreiberprozess.

9. Gateway-Vorrichtung nach einem der Ansprüche 1 bis 8, worin die zwei oder mehr externen Netzwerkschnittstellenschaltungen ein digitales VOD-Datensatelliten-Schnittstellenmittel (180, 220, 184, 186) umfassen, angepasst zum Empfangen und Leiten von digitalen Daten, Verschlüsseln angeforderter VOD-Programmdaten durch Einstellen (180) auf einen Funkfrequenz-Downlink-Kanal, angegeben durch den Host-Computer, Demodulieren (220) der empfangenen RF-Signale, um die empfangenen Konstellationspunkte wieder herzustellen, und weiter angepasst zum Demultiplexen (184) der Video-, Audio- und zugehörigen Daten des VOD-Transportstroms, und falls notwendig Entschlüsseln (186) der Daten; und der IP-Paketisierungsprozess steuert den Host-Computer, die IP-Pakete (158) wieder zusammenzusetzen, wenn IP-Pakete aufgetrennt wurden für die Übertragung oder die wiedergewonnenen Daten in IP-Pakete zu Paketisieren, wenn die Daten bei der Übertragung nicht in IP-Paketen waren, und Liefern der IP-Pakete an den Routingprozess (86) zum Leiten und Übertragen auf dem geeigneten lokalen Netzwerk an das Gerät, das das VOD-Programm angefordert hat.

10. Gateway-Vorrichtung nach Anspruch 1, worin das Kabelmodem seinen Stromaufwärts-Symboltakt erzeugt von einem Mastersymboltakt, der stromabwärts übertragen wird über das HFC-Netzwerk von einem Kopfstationsmodem, wobei der Stromaufwärts-Symboltakt erzeugt wird mit einer Rate, die schnell genug ist für synchrone Code-Teilungsmultiplex-Übertragung, und die M/N mal die Stromabwärts-Symboltaktrate ist, wo M und N ganze Zahlen sind; und das Kabelmodem schließt Mittel ein, die angepasst sind zum Erkennen und Ausschneiden von Schmalbandrauschen in Stromabwärts-Daten, die über das HFC-Netzwerk Übertragen werden; und das Kabelmodem schließt Mittel ein, die angepasst sind, zweidimensionales Verschachteln von Stromaufwärts-Daten durchzuführen, sowohl entlang der Zeit- als auch der Spreizcodeachse, um verbesserte Burst-Rausch-Immunität von Stromaufwärts-Datenübertragungen bereitzustellen; und das Kabelmodem schließt Mittel ein, die angepasst sind, um gemixte Modi von Stromaufwärts-Übertragung in zumindest zwei unterschiedlichen logischen Kanälen, übertragen mit überlappender Bandbreite in dem gleichen Frequenzband, zu erlauben.

11. Gateway-Vorrichtung nach Anspruch 1, worin die zwei oder mehr externen Netzwerkschnittstellenschaltungen einen Empfänger (180, 220, 184, 186) umfassen zum Anschließen des Gateways an das HFC-Netzwerk, wobei der Empfänger in der Lage ist digitalisierte, komprimierte Video-auf-Anforderungs-Programmdaten in einem MPEG-Transportstrom zu empfangen und zu demodulieren und wiederherzustellen, moduliert auf einen Stromabwärts-Träger, angefordert durch ein Gerät, das an das lokale Netzwerk gekoppelt ist, und Demultiplexen der Audio- und Videokomponenten und Übertragen der wiederhergestellten Daten an den IP-Paketisierungsprozess zum Paketisieren in IP-Pakete oder zum Wiederzusammensetzen von IP-Paketen, falls notwendig, und Übertragen an den Routingprozess zum Leiten an das Gerät, das das VOD-Programm angefordert hat, über die geeignete lokale Netzwerkschnittstelle, die an das geeignete lokale Netzwerk gekoppelt ist, das an das Gerät gekoppelt ist, das das VOD-Programm angefordert hat.

12. Gateway-Vorrichtung nach einem der Ansprüche 1 bis 11, worin die zwei oder mehr externen Netzwerkschnittstellenschaltungen einen Receiver umfassen zum Anschließen des Gateways and das HFC-Netzwerk, wobei der Receiver (100, 130, 138, 114, 147) in der Lage ist, analoge Videoübertragungen auf dem HFC zu empfangen, die durch ein Gerät angefordert sind, das an das lokale Netzwerk gekoppelt ist, und Digitalisieren und Demodulieren (138) der analoge Videoübertragungen und dann Codieren (114) der resultierenden Daten in ein Format, in dem sie komprimiert werden können, und dann Komprimieren (147) der Daten und Übertragen dieser über den Host-Bus an den IP-Paketisierungsprozess (158); und die zwei oder mehr externen Netzwerkschnittstellenschaltungen umfassen ein digitales VOD-Datensatelliten-Schnittstellenmittel (180, 220, 184, 186), das angepasst ist zum Empfangen und Leiten der digitalen Daten, die die angeforderten VOD-Programmdaten codieren durch Einstellen (180) auf einen Funkfrequenz-Downlinkkanal, der durch den Host-Computer spezifiziert ist, Demodulieren (220) des empfangenen RF-Signals, um die empfangenen KonstellationspunKte wieder herzustellen, und weiter angepasst zum Demultiplexen (184) der Video-, Audio- und zugehörigen Daten des VOD-Transportstroms, und Entschlüsseln (186) der Daten, falls notwendig; und der IP-Paketisierungsprozess steuert den Host-computer, um die IP-Pakete (158) wieder zusammenzusetzen, wenn IP-Pakete aufgetrennt werden für Übertragung oder die wieder gewonnenen Daten in IP-Pakete zu paketisieren, wenn die Daten bei der Übertragung nicht in IP-Paketen waren, und Liefern der IP-Pakete an den Routingprozess (86) zum Leiten und Übertragen an das geeignete lokale Netzwerk zu dem Gerät, das das VOD-Programm angefordert hat.

13. Gateway-Vorrichtung nach einem der Ansprüche 1 bis 11, worin die zwei oder mehr externen Netzwerkschnittstellenschaltungen einen Empfänger (344, 346, 350, 352, 354) umfassen zum Anschließen des Gateways an eine Satellitenschüssel und Empfangen komprimierter digitaler Daten, die ein regelmäßig geplantes Fernsehprogramm codieren, moduliert auf einen Downlinkträger, dessen Kanalnummer angefordert ist durch ein Gerät, das gekoppelt ist an eines der einen oder mehreren lokalen Netzwerke, und Demodulieren und Wiederherstellen der digitalen Daten und Demultiplexen (350) der Audio- und Videodaten davon und Übertragen der wieder hergestellten digitalen Daten über den Host-Bus an den IP-Paketisierungsprozess und an den Routingprozess zur Verbreitung auf dem geeigneten lokalen Netzwerk, das an das Gerät gekoppelt ist, das die Kanalnummer angefordert hat.

14. Gateway-Vornchtung nach einem der Ansprüche 1 bis 10, worin das Kabelmodem DOCSIS-kompatibel ist und die zwei oder mehr externen Netzwerkschnittstellenschaltungen einen Empfänger (102, 146, 148, 126) umfassen zum Anschließen des Gateways an eine Satellitenschüssel und Empfangen komprimierter digitaler Daten, die ein Video-auf-Anforderungs-Fernschprogramm codieren, das auf einen Downlinkträger moduliert ist, worin das Programm angefordert wurde durch ein Gerät, das an eines oder mehrere der lokalen Netzwerke gekoppelt ist, und Dcmodulieren und Widerherstellen der digitalen Daten des angeforderten Video-auf-Antorderungs-Programms und Demultiplexen der Audio- und Videodaten davon und Übertragen der wiederhergestellten digitalen Daten über den Host-Bus an den IP-Paketisierungsprozess und von dort an den Routingprozess zum Leiten zu dem Gerät, das das Video-auf-Anforderungs-Programm angefordert hat, über das geeignete von den lokalen Netzwerkschnittstellen und den lokalen Netzwerken.

15. Gateway-Vorrichtung nach einem der Ansprüche 1 bis 14, worin die zwei oder mehr externen Netzwerkschnittstellenschaltungen einen Empfänger (314, 316, 320, 324, 326) umfassen zum Anschließen des Gateways an eine Satellitenschüssel und Empfangen von einem Gerät, das verbunden ist zu einem oder mehreren der lokalen Netzwerke, einer Anforderung zum Empfangen eines bestimmten Kanals, der ein analoges regelmäßig geplantes Fernsehprogramm aufweist, das moduliert ist auf einen Downlinkträger und Steuern eines Tuners (314) zum Einstellen des angeforderten Kanals zum Ausfiltern im Wesentlichen aller anderen Signale als den angeforderten analogen regelmäßig geplanten Fernsehprogrammsignalen, und Demodulieren (320) und Digitalisieren (316) der Fernsehsignale und Codieren (324) der digitalen Daten in ein Format, das komprimiert werden kann, und Komprimieren (326) der digitalen Daten und Übertragen der komprimieren digitalen Daten über den Host-Bus an den IP-Paketisierungsprozess und an den Routingprozess zum Leiten über die geeignete lokale Netzwerkschnittstelle und das geeignete lokale Netzwerk zu dem Gerät, das den Kanal angefordert hat, der analoge regelmäßig geplante Fernsehprogramme aufweist.

16. Gateway-Vorrichtung nach einem der Ansprüche 1 bis 15, worin die zwei oder mehr externen Netzwerkschnittstellenschaltungen einen Empfänger (302, 304) umfassen zum Anschließen des Gateways an eine Satellitenschüssel und Empfangen digitaler Daten, die eine Webseite oder andere Informationen aus dem Internet codieren und in Internet-Protokollpakete eingekapselt sind, die angefordert werden durch ein Gerät, das an ein oder mehrere der lokalen Netzwerke gekoppelt ist, wobei die digitalen Daten moduliert wurden auf eine Downlinkträger, der von einem Satellit an die Satellitenschüssel übertragen wurde, und Demodulieren (304) und Wiederherstellen der Internet-Protokollpakete und Übertragen dieser über den Host-Bus an den Routingprozess (86) zum Leiten an das Gerät, das die Daten angefordert hat, über die geeignete lokale Netzwerkschnittstelle und das geeignete lokale Netzwerk.

17. Gateway-Vorrichtung nach einem der Ansprüche 1 bis 16, worin die zwei oder mehr externen Netzwerkschnittstellenschaltungen einen Empfänger (332, 334, 336, 340, 342) umfassen zum Anschließen des Gateways an eine konventionelle terrestrische Fernsehüberrragungsantenne und Empfangen eines regelmäßig geplanten Fernsehprogrammsignals, das durch ein Gerät angefordert wurde, das an das lokale Netzwerk gekoppelt ist, und moduliert auf einen terrestrischen Übertragungsträger und Demodulieren des Signals, Digitalisieren des Signals, und Codieren der digitalen Daten in ein Format, das komprimiert werden kann, und Komprimieren der digitalen Daten und Übertragen der komprimierten digitalen Daten über den Host-Bus an den IP-Paketisierungsprozess.

18. Gateway-Vorrichtung nach einem der Ansprüche 1 bis 17, worin alle oder zumindest einige der externen Netzwerkschnittstellenschaltungen strukturiert sind als Erweiterungsmodule, die gekoppelt sind an den Host-Computer über Erweitungsschächte, um so entfernbar zu sein, so dass nur die gewünschten externen Netzwerkschnittstellenschaltungen in dem Gateway zugegen sein müssen.

19. , Gateway-Vorrichtung nach Anspruch 1 oder 18, worin die eine oder mehreren lokalen Netzwerkschnittstellenschaltungen Ethernet-lokale Netzwerkschnittstellenkarten (362, 364) sind und die Vorrichtung weiter umfasst ein Transcodiermittel, das angepasst ist zum Konvertieren der original Bitrate der einkommenden Daten in eine andere Bitrate, wo es notwendig ist, um Verkehrslast auf dem einen oder mehreren lokalen Netzwerken zu managen; und der Routingprozess (86) steuert den Host-Computer (128), Internet-Protokoll-formatierte Pakete zu empfangen, entweder von dem IP-Paktisierungsprozess (158) oder direkt von einer externen Netzwerkschnittstellenschaltung (70) und mit der Netzwerkschnittstelle Nachsehen der Ethernet-Adresse des Gerätes, das an das lokale Netzwerk gekoppelt ist, die der Zieladresse der Internet-Protokollpakete entspricht, und Vornehmen all der Protokollkonversionen, die notwendig sind, um jedes der Internet-Protokollpakete einzukapseln in ein oder mehrere Ethernet-lokale Netzwerkpakete, die adressiert sind an ein Gerät, das die Daten in den Internet-Protokollpaketen angefordert hat, und Übermitteln derselben über das geeignete lokale Netzwerk (18, 20) an das Gerät, das die Daten angefordert hat.

20. Gateway-Vorrichtung nach Anspruch 19, worin die lokalen Netzwerkschnittstellen eine oder mehrere Ethernet-Netzwerkschnittstellenkarten (362, 364) sind, die das Gateway an eine entsprechende Zahl von Ethernet-Netzwerken (18, 20) anschließen; und der Host-Bus ist ein hochkapazitiver, gemultiplexter H.100-kompatibler Bus, und der Management- und Steuerprozess ist strukturiert zum Steuern des Host-Computers, Ethernet-Pakete zu empfangen, von Geräten, die an die lokalen Netzwerke gekoppelt sind, die Anforderungen beinhalten spezifische Webseiten herunter zu laden, bei URLs, die in den Paketen identifiziert sind, oder regelmäßig geplante Videoübertragungen über ein CATV-Hybrid-Faserkoaxialkabelsystem, einen Satelliten-Downlink oder eine terrestrische Übertragung, oder eine Teilnehmeranschlussleitung zu empfangen und zu verteilen, oder Empfang und Verteilung anzufordern von einem Video-auf-Anforderungs-Programm, das zu liefern ist über das CATV-Hybrid-Faserkoaxialkabelsystem oder den Satelliten-Downlink oder über eine digitale Teilnehmeranschlussleitung, und Erzeugen und Senden geeigneter Steuerdaten an die geeignete der externen Netzwerkschnittstellenschaltungen, um zu veranlassen, dass die angeforderten Daten oder Videoübertragung oder Video-auf-Anforderungsprogramm, hierin nachstehend bezeichnet als Inhalt, empfangen und verteilt werden an das Gerät oder die Geräte, die den Inhalt angefordert haben.

21. Gateway-Vorrichtung nach Anspruch 1, worin die eine oder mehreren externen Netzwerkschnittstellenschaltungen umfassen:
ein modulares digitales Teilnehmerleitungsmodemmittel (182), das an den Host-Computer gekoppelt ist über eine Erweitungsschachtverbindung an den Host-Bus (156) zum Anschließen des Gateways an eine Teilnehmeranschlussleitung; und
ein Direktübertragungssatellitenempfängermodul (344), wie ein DirecTV-Empfänger, der gekoppelt ist an den Host-Bus durch eine Erweiterungsschachtverbindung, und fungiert zum Anschließen des Gateways an eine Satellitenschüssel.

22. Gateway-Vorrichtung nach Anspruch 1, worin die zwei oder mehr externen Netzwerkschnittstellenschaltungen weiter umfassen ein konventionelles POTS-Leitungsfax und/oder Datenmodem-Erweiterungsmodul, gekoppelt an den Host-Computer über einen Erweiterungsschacht, zum Anschließen des Gateways an eine konventionelle POTS-Telefonleitung an die Zentrale des öffentlichen Telefonnetzwerks.

23. Gateway-Vorrichtung nach Anspruch 1, worin die zwei oder mehr externen Netzwerkschnittstellenschaltungen weiter umfassen ein Internet-Paket-Telefonmodul (372), das gekoppelt ist an den Host-Computer über einen Erweiterungsschacht zum Anschließen des Gateways an den einfachen alten Telefondienst und/oder Teilnehmerleitungs-Telefonleitungen von einer öffentlichen Telefonnetzwerkzentrale.

24. Gateway-Vorrichtung nach Anspruch 1, worin das Kabelmodem ein DOCSIS-kompatibles modulares Kabelmodem (386) ist, das gekoppelt ist an den Host-Bus des Host-Computers über einen Erweiterungsschacht.

25. Gateway-Vorrichtung nach Anspruch 1, worin die zwei oder mehr externen Netzwerkschnittstellenschaltungen umfassen modulare VOD-Mittel (378, 380, 386, 388, 392, 70, 94, 90, 98), die gekoppelt sind an den Host-Bus durch einen Erweiterungsschacht, und angepasst zum Anschließen des Gateways an das HFC-Netzwerk, eine DSL-Leitung oder POTS-Telefonleitung zum Anfordern einer oder mehrerer spezifizierter Video-auf-Anforderungs-Programme über eine Stromaufwärts-Nachricht und angepasst zum Empfangen und Demodulieren der wiederhergestellten digitalisierten, komprimierten Daten, die das eine oder die mehreren angeforderten Video-auf-Anforderungs-Programme codieren, wobei die Daten moduliert sind auf einen Stromabwärts-Träger, der übertragen wird auf einer DSL-Leitung (58) oder dem HFC-Netzwerk (10) oder einem Satelliten-Downlink und angefordert durch ein oder mehrere Geräte, die an ein oder mehrere der lokalen Netzwerke gekoppelt sind, und die modularen VOD-Mittel sind ebenfalls angepasst zum Demultiplexen der Audio- und Videokomponenten und jegliche Hilfsdaten des einen oder der mehreren angeforderten Video-auf-Anforderungs-Programme und Übertragen der wiederhergestellten Daten an den IP-Paketisierungsprozess zum Paketisieren in IP-Pakete, wenn die Daten nicht bereits in IP-Pakete eingekapselt sind, und von dort an den Routingprozess zum Einkapseln in geeignete lokale Netzwerkpakete und Leiten zu dem einen oder den mehreren Geräten, die die Video-auf-Anfolderungs-Programme, angefordert haben.

26. Gateway-Vorrichtung nach Anspruch 1, worin die zwei oder mehr externen Netzwerkschnittstellenschaltungen weiter umfassen modulare C-Band-Satellitenempfägennittel (394), die gekoppelt sind an den Host-Bus über einen Erweiterungsschacht und angepasst sind zum Anschließen des Gateways an eine Satellitenschüssel zum Empfangen analoger regelmäßig geplanter Fernsehprogramme, die moduliert sind auf einen Downlink-Träger, angefordert durch ein Gerät, das gekoppelt ist an den Gateway durch ein lokales Netzwerk und Demodulieren und Digitalisieren der Fernsehsignale und Codieren der digitalen Daten in ein Format, das komprimiert werden kann, und Komprimieren der digitalen Daten und Übertragen der komprimierten digitalen Daten über den Host-Bus an den IP-Paketisierungsprozess zum Einkapseln in IP-Pakete und von dort zu dem Routingprozess.

27. Gateway-Vorrichtung nach Anspruch 1, worin die zwei oder mehr externen Netzwerkempfängermittel umfassen modulare DirecPC-Modemmittel (396), die gekoppelt sind an den Host-Bus durch einen Erweiterungsschacht und angepasst sind zum Anschließen des Gateways an eine Satellitenschüssel und Empfangen digitaler Daten, die eine Webseite oder andere Informationen aus dem Internet codieren und einkapseln in Internet-Protokollpakete, die angefordert sind durch ein Gerät, das an den Gateway gekoppelt ist durch ein lokales Netzwerk, wobei die IP-Pakete moduliert wurden auf einen Downlink-Träger, und weiter angepasst zum Demodulieren des Downlink-Trägers und Wiederherstellen der Internet-Protokollpakete und Übertragen dieser über den Host-Bus an den Routingprozess zum Leiten über das lokale Netzwerk an das Gerät, das sie angefordert hat.

28. Verfahren ausgeführt durch einen Gateway zum Anfordern eines Video-auf-Anforderungs-Programms, hierin nachstehend VOD, und Verteilen der Daten des Video-auf-Anforderungs-Programms an das Gerät, das es angefordert hat, über ein lokales Netzwerk, hierin nachstehend LAN, umfassend:
Empfangen eines LAN-Pakets, das ein Internet-Protokollpaket, hierin nachstehend IP-Paket, einkapselt, welches ein VOD-Programm identifiziert, das anzufordern ist, wobei das LAN-Paket Daten beinhaltet, die das Gerät identifizieren, das das VOD-Programm angefordert hat und die Quelle zum Liefern des VOD-Programms (108);
Entfernen von lokalen Netzwerkheadern von empfangenen LAN-Paketen und Leiten der IP-Pakete zu einem Videoserver, der das angeforderte VOD-Programm liefern kann, über eine externe Netzwerkschnittstelle in dem Gateway, die den Gateway an ein externes Netzwerk anschließt, an das der Videoserver gekoppelt ist (110-116), wobei die externe Netzwerkschnittstelle modular ist und gekoppelt ist an einen Host-Computer des Gateways über einen Erweiterungsbusschacht;
Empfangen von Funkfrequenzsignalen, die moduliert sind mit Daten, die Pakete codieren, die komprimierte Daten beinhalten, die das angeforderte VOD-Programm codieren, über eine der zumindest zwei modularen externe Netzwerkschnittstellenschaltungen, gekoppelt an einen Host-Computer über einen Erweiterungsschacht und gekoppelt an ein externes Netzwerk, an den der Videoserver gekoppelt ist, wobei die zumindest zwei modularen externen Netzwerkschnittstellenschaltungen den Host-Computer anschließen eine Satellitenspeisung an zum Empfangen von zumindest Übertragungen von einem komprimierten Digital video und einem Hybrid-Faserkoaxialkabel-Fernsehnetzwerk, das zumindest analoge Fernsehsignale und andere digitale Daten liefert, einschließlich Stromabwärts-DOCSIS-Daten, die übertragen werden von einem Kopfstationsmodem und die Stromaufwärts-DOCSIS-Daten tragen zu dem Kopfstationsmodem, und Wiederherstellen (202, 136, 140, 214, 224) der IP-Pakete aus den Funkfrequenzsignalen;
Wiederzusammensetzen von IP-Paketen, die komprimierte VOD-Daten oder eingekapselte komprimierte VOD-Daten umfassen, in IP-Pakete, adressiert an die IP-Adresse des Gerätes, das das VOD-Programm angefordert hat, wenn die VOD-Daten nicht ursprünglich in IP-Paketen (238, 194) waren, und Senden der IP-Pakete an einen Routingprozess in dem Gateway;
Übersetzen der Bitrate des empfangenen komprimierten Videos herab auf eine niedrigere Rate, falls notwendig, wegen gegenwärtiger Lastbedingungen auf einem oder mehreren lokalen Netzwerken, zu denen der Gateway gekoppelt ist;
Blockieren von Zugriff, so dass nur Videoprogramme, zu denen eine Subskription existiert, empfangen werden können; und
Einkapseln (240, 196) der TP-Pakete in LAN-Pakete, adressiert an das Gerät, das das VOD-Programm angefordert hat, und Leiten der LAN-Pakete durch eine lokale Netzwerkschnittstelle des Gateways zu dem Gerät, das das VOD-Programm angefordert hat, über ein lokales Netzwerk, das an das Gerät gekoppelt ist.

## Revendications

1. Dispositif de passerelle, comprenant:
un ordinateur central (128) ayant un bus central (158) ;
une ou plusieurs interfaces de réseau local (84, 362, 364) couplant ledit ordinateur central à un ou plusieurs réseaux locaux (18, 20) qui portent des données entre ladite passerelle et un ou plusieurs dispositifs situés dans une installation de client ; et
deux ou plusieurs circuits d'interface de réseau externe (182, 200, 353, 70, 180, 220, 184, 186, 158, 100, 138, 114, 147, 102, 146, 148, 126, 344, 346, 350, 352, 354, 302, 304) couplés audit bus central pour interfacer ledit ordinateur central à deux réseaux externes ou plus à ladite installation de client comprenant une alimentation par satellite (56) pour recevoir au moins des transmissions de vidéo numérique compressée et un réseau de télévision par câble coaxial de fibre hybride, ci-après réseau HFC (10) qui délivre au moins des signaux de télévision analogiques et d'autres données numériques comprenant des données DOCSIS en aval transmises par un modem frontal auxdites installations de client et qui portent des données DOCSIS en amont audit modem frontal, lesdits deux circuits d'interface de réseau externe ou plus comprenant au moins un modem de câble compatible DOCSIS (104, 70) couplé audit réseau HFC pour la syntonisation aux signaux radio fréquence en aval spécifiés par ledit ordinateur central, lesdits signaux radio fréquence en aval modulés avec des données numériques DOCSIS codant une ou plusieurs données et/ou des services vidéo et pour récupérer lesdites données numériques en aval et fournir lesdites données au traitement de routage (86) pour délivrer à un ou plusieurs dispositifs couplés audit un ou plusieurs réseaux locaux qui demandaient lesdites données numériques aval, et dans lequel ledit modem de câble est structuré pour transmettre des données DOCSIS amont de sorte que de multiples modems par câble dans de multiples passerelles couplées audit réseau HFC peuvent transmettre avec succès à un modem frontal, lesdits deux circuits d'interface de réseau externe ou plus comprenant une interface de diffusion vidéo numérique par satellite pour recevoir des paquets vidéo numériques compressés modulés sur des signaux radio fréquence et traiter lesdits signaux dans un démodulateur (346) et un démultiplexeur de transport (350) pour récupérer les données d'un programme vidéo voulu et un transcodeur (352) pour translater le débit binaire de la vidéo compressée en aval à un débit inférieur lorsque nécessaire à cause des conditions de chargement actuelles sur un ou plusieurs desdits réseaux locaux et un circuit d'accès conditionnel (186) pour bloquer l'accès de sorte que seulement des programmes vidéo auxquels un abonnement existe peuvent être reçus ;
dans lequel ledit ordinateur central est aussi programmé pour implémenter un traitement de mise en paquet IP (158) pour recevoir des données à partir desdits circuits d'interface de réseau externe et mettre en paquet lesdites données dans des paquets IP si lesdites données ne sont pas déjà dans un format de paquet IP lorsqu'elles sont reçues par ledit traitement de routage et la fourniture (300) desdits paquets IP audit traitement de routage (86), et dans lequel ledit ordinateur central est aussi programmé avec un traitement de routage pour recevoir des paquets IP dudit traitement de mise en paquet IP ou ledit modem par câble et met en capsule lesdits paquets IP dans des paquets de réseau local et transmet lesdits paquets de réseaux locaux sur le réseau local approprié couplé à un dispositif auquel lesdits paquets IP sont adressés via une ou plusieurs desdites interfaces de réseaux locaux et où ledit ordinateur central est programmé pour implémenter ledit traitement de routage pour recevoir des paquets de réseaux locaux en amont qui mettent en capsule des paquets IP à partir des dispositifs couplés auxdits réseaux locaux et enlève les en-tête de paquet de réseau local et routent les paquets IP mis en capsule vers le circuit d'interface de réseau externe approprié pour la transmission sur un réseau externe pour un dispositif ou un traitement ayant l'adresse IP de chaque adresse de destination de paquet IP et pour recevoir des paquets IP dudit traitement de mise en paquet IP et les router au dispositif approprié couplé à un réseau local auquel lesdits paquets IP sont adressés en mettant en capsule lesdits paquets IP dans des paquets de réseaux locaux appropriés, et fournir lesdits paquets de réseaux locaux à l'interface de réseau local approprié (362, 364) pour commander sur le réseau local approprié, et une gestion et un traitement de commande pour recevoir des demandes pour des données à partir desdits dispositifs couplés auxdits réseaux locaux et envoyer des données de commande numérique auxdits circuits d'interface de réseau externe pour les commander pour obtenir lesdites données.

2. Dispositif de passerelle selon la revendication 1, dans lequel lesdits deux circuits d'interface de réseau externe ou plus comprennent une interface de diffusion directe par satellite (344, 346, 350, 352, 354) pour interfacer ledit dispositif de passerelle à une parabole de satellite sur laquelle est reçu de la vidéo numérique compressée modulée sur une diffusion radio fréquence à partir d'un satellite.

3. Dispositif de passerelle selon la revendication 1 ou 2, dans lequel lesdits deux circuits d'interface de réseau externe ou plus comprennent un moyen d'interface analogique de CATV (100, 130, 138, 114, 147) adapté pour recevoir des signaux de commande à partir dudit ordinateur central pour commander ledit moyen d'interface CATV analogique pour syntoniser à un canal radio fréquence spécifique modulé avec des signaux de diffusion CATV analogiques transmis en aval sur ledit réseau HFC et numérise (130) les signaux vidéo analogiques et démodule (138) les signaux vidéo numérisés pour fournir des données numériques représentant des signaux vidéo de format conventionnel NTSC, PAL ou SECAM, et décode (114) les signaux vidéo de format NTSC, PAL ou SECAM en signaux de format YUV approprié pour la compression, compresse (147) les signaux de format YUV en un débit de données qui peut être transmis sur un ou plusieurs desdits réseaux locaux couplés à un dispositif où ledit signal CATV est à regarder, mettre en paquet (158) lesdites données de vidéo compressées dans un paquet approprié pour la transmission sur ledit réseau local et adressés audit dispositif où ledit signal CATV est à regarder et fournir lesdits paquets audit traitement de routage (86) pour le routage audit dispositif où ledit signal CATV est à regarder.

4. Dispositif de passerelle selon l'une quelconque des revendications 1 à 3, dans lequel ledit traitement de gestion et de commande est structuré pour commander ledit ordinateur central pour recevoir des paquets de réseaux locaux à partir d'un ou plusieurs dispositifs couplés auxdits réseaux locaux qui contient des demandes pour télécharger des données spécifiques ou des pages web à des adresses URL identifiées dans ledit paquet ou qui contient une demande pour recevoir et distribuer régulièrement des diffusions vidéo programmées transmises sur ledit réseau HFC, une liaison descendante par satellite ou une diffusion terrestre, ou pour interroger un programme de vidéo à la demande à fournir sur ledit réseau HFC ou ladite liaison descendante par satellite ou via une boucle locale de ligne d'abonné numérique, et la génération et l'envoi de données de commande appropriées à celui approprié desdits circuits d'interface de réseau externe pour obliger les données demandées ou la page web ou la diffusion vidéo ou le programme de vidéo à la demande à être demandés et reçus.

5. Dispositif de passerelle selon l'une quelconque des revendications 1 à 4, dans lequel lesdits deux circuits d'interface de réseau externe ou plus comprennent un modem de ligne d'abonné numérique (182).

6. Dispositif de passerelle selon l'une quelconque des revendications 1 à 5, dans lequel lesdits deux circuits d'interface de réseau externe ou plus comprennent un modem de données et/ou un fax de ligne de POTS conventionnel (280).

7. Dispositif de passerelle selon l'une quelconque des revendications 1 à 6, dans lequel lesdits deux circuits d'interface de réseau externe ou plus comprennent un circuit de téléphonie par paquet Internet (353) pour interfacer ladite passerelle pour un service téléphonique ancien simple et/ou des lignes téléphoniques de ligne d'abonné numérique à partir d'un central de commutation de réseau téléphonique de service public et un desdits circuits d'interface de réseau externe comprend un moyen d'interface de vidéo à la demande numérique (102, 146, 148, 126, 86, 128, 158, 70, 94, 90) couplé audit réseau HFC et ledit traitement de gestion et de commande et pour au moins une desdites interfaces de réseau local, ledit moyen d'interface de vidéo à la demande adapté pour recevoir une vidéo à la demande en amont, ci-après VOD, demande et utilise ledit modem par câble pour transmettre lesdites demandes de vidéo à la demande via ledit réseau HFC en amont dudit serveur approprié qui peut fournir les données demandées, et en outre adapté pour commander un syntoniseur VOD (102) syntonisé sur le canal radio fréquence VOD approprié sur ledit réseau HFC sur lequel les données de VOD demandées arriveront, et adapté en outre pour démoduler (146) les symboles reçus codant lesdites données de VOD et démultiplexe (148) lesdites données de VOD en données vidéo, données audio et données auxiliaires associées quelconques dans le flux de transport, et adapté en outre pour décrypter (126) la sortie de données par ledit circuit de démultiplexage (148), et adapté en outre pour mettre en capsule la vidéo, l'audio et des données auxiliaires en paquets IP adressés au dispositif qui ordonnait lesdites données et route lesdits paquets IP au réseau local approprié et transmet lesdits paquets IP sur ledit réseau local approprié au dispositif qui ordonnait lesdites données de VOD.

8. Dispositif de passerelle selon l'une quelconque des revendications 1 à 7, dans lequel lesdits deux circuits d'interface de réseau externe ou plus comprennent un central de commutation privée, ci-après PBX, un circuit téléphonique pour interfacer ladite passerelle à un ou plusieurs services de téléphone ancien simple, ci-après POTS, des lignes téléphoniques qui sont internes ou externes auxdites installations de client et/ou une ou plusieurs lignes d'abonné numériques ci-après DSL, des lignes téléphoniques à partir du central de commutation téléphonique de service public, ledit circuit de téléphonie PBX comprenant un commutateur commandé par une pluralité de traitement commandant ledit ordinateur central pour implémenter des fonctions de téléphonie PBX pour des dispositifs de ligne telles que des téléphones couplés à une ou plusieurs lignes POTS ou DSL ou audit réseau local, ledit traitement comprenant un traitement d'application PBX, un ou plusieurs traitements implémentant une bibliothèque liée dynamique TAPI et un traitement de pilote de carte PBX.

9. Dispositif de passerelle selon l'une quelconque des revendications 1 à 8, dans lequel lesdits deux circuits d'interface de réseau externe ou plus comprennent un moyen d'interface de données de VOD numériques par satellite (180, 220, 184, 186) adapté pour recevoir et router des données numériques codant des données de programme VOD demandées par syntonisation (180) sur un canal radio fréquence de liaison descendante spécifié par ledit ordinateur central, démodulation (220) des signaux RF reçus pour récupérer des points de constellation reçus, et en outre adapté pour démultiplexer (184) les données vidéo, audio et associées du flux de transport VOD, et décrypte (186) les données si nécessaire ; et ledit traitement de mise en paquet IP commande ledit ordinateur central pour réassembler des paquets IP (158) si des paquets IP étaient rompus pour la transmission ou pour mettre en paquet les données récupérées dans des paquets IP si les données n'étaient pas dans des paquets IP lorsqu'elles étaient transmises, et délivre lesdits paquets IP audit traitement de routage (86) pour le routage et la transmission sur le réseau local approprié au dispositif qui demandait ledit programme VOD.

10. Dispositif de passerelle selon la revendication 1, dans lequel un modem par câble génère son horloge de symbole en amont à partir d'une horloge de symbole maitre transmise en aval sur ledit réseau HFC à partir du modem frontal, avec ladite horloge de symbole en amont généré à un débit qui est assez rapide pour une transmission multiplexée par division de code synchrone et qui est M/N fois la fréquence d'horloge de symbole en aval où M et N sont des entiers ; et ledit modem par câble comprend un moyen pour adapter, pour détecter et exercer du bruit de bande étroite dans des données en aval transmises sur ledit réseau HFC ; et ledit modem par câble comprend des moyens adaptés pour effectuer l'entrelacement bidimensionnel des données en amont le long à la fois de l'axe temporel et de code d'étalement pour fournir une immunité au bruit de salve des transmissions de données en amont ; et ledit modem par câble comprend un moyen adapté pour permettre aux modes mélangés de transmission en amont dans au moins deux différents canaux logiques transmis avec une bande passante chevauchante dans la même bande de fréquence.

11. Dispositif de passerelle selon la revendication 1, dans lequel lesdits deux circuits d'interface de réseau externe ou plus comprennent un récepteur (180, 220, 184, 186) pour interfacer ladite passerelle audit réseau HFC, ledit récepteur étant capable de recevoir et de démoduler et de récupérer des données de programme de vidéo à la demande compressées, numérisées dans un flux de transport MPEG modulé sur une porteuse en aval demandée par un dispositif couplé audit réseau local et démultiplexage des composantes audio et vidéo et transmission des données récupérées audit traitement de mise en paquet IP pour mettre en paquet dans des paquets IP ou réassemblage des paquets IP si nécessaire et transmission audit traitement de routage pour le routage au dispositif qui demandait ledit programme VOD via l'interface de réseau local approprié qui est couplée au réseau local approprié couplé audit dispositif qui demandait ledit programme VOD.

12. Dispositif de passerelle selon l'une quelconque des revendications 1 à 11, dans lequel lesdits deux circuits d'interface de réseau externe ou plus comprennent un récepteur pour interfacer ladite passerelle audit réseau HFC, ledit récepteur (100, 130, 138, 114, 147) étant capable de recevoir des transmissions vidéo analogiques sur ledit HFC demandé par un dispositif couplé audit réseau local et numérisation et démodulation (138) desdites transmissions vidéo analogiques et puis codage (114) des données résultantes dans un format dans lequel elles peuvent être compressées, et puis compression (147) des données et transmission des données via ledit bus central audit traitement de mise en paquet IP (158) ; et lesdits deux circuits d'interface de réseau externe ou plus comprennent un moyen d'interface de données VOD numériques par satellite (180, 220, 184, 186) adapté pour recevoir et router des données numériques en codant les données de programme VOD demandées par syntonisation (180) sur un canal radio fréquence de liaison descendante spécifié par ledit ordinateur central, démodulation (220) des signaux RF reçus pour récupérer des points de constellation reçus, et en outre adapté pour démultiplexer (184) les données vidéo, audio et associés du flux de transport VOD, et décrypter (186) les données si nécessaire ; et ledit traitement de mise en paquet IP commande ledit ordinateur central pour réassembler des paquets IP (158) si des paquets IP étaient perdus pour la transmission ou pour mettre en paquet des données récupérées dans des paquets 12 si les données n'étaient pas dans des paquets IP lors de la transmission, et délivre lesdits paquets IF audit traitement de routage (86) pour le routage et la transmission sur le réseau local approprié au dispositif qui demandait ledit programme VOD.

13. Dispositif de passerelle selon l'une quelconque des revendications 1 à 11, dans lequel lesdits deux circuits d'interface de réseau externe ou plus comprennent un récepteur (344, 346, 350, 352, 354) pour interfacer ladite passerelle à une antenne satellite et recevoir des données numériques compressées codant un programme de télévision programmé régulièrement modulé sur une porteuse de liaison descendante dont le numéro de canal est demandé par un dispositif couplé à un desdits un ou plusieurs réseaux locaux et démodulation et récupération desdites données numériques et démultiplexage (350) des données audio et vidéo à partir de celles-ci et transmission desdites données numériques récupérées via ledit bus central audit traitement de mise en paquet IP et pour ledit traitement de routage pour la distribution sur ledit réseau local approprié couplé au dispositif qui demandait ledit numéro de canal.

14. Dispositif de passerelle selon l'une quelconque des revendications 1 à 10, dans lequel ledit modem par câble est compatible DOCSIS et lesdits deux circuits d'interface de réseau externe ou plus comprennent un récepteur (102, 146, 148, 126) pour interfacer ladite passerelle à une parabole satellite et réception des données numériques compressées codant un programme de télévision de vidéo à la demande modulé sur une porteuse de liaison descendante, où ledit programme était demandé par un dispositif couplé à un ou plusieurs dits réseaux locaux et démodulation et récupération desdites données numériques dudit programme de vidéo à la demande demandé et démultiplexage des données audio et vidéo à partir de celui-ci et transmission desdites données numériques récupérées via ledit bus central pour ledit traitement de mise en paquet IP et à partir de là audit traitement de routage pour le routage audit dispositif qui demandait ledit programme de vidéo à la demande via une appropriée desdites interfaces de réseau local et des réseaux locaux.

15. Dispositif de passerelle selon l'une quelconque des revendications 1 à 14, dans lequel lesdits deux circuits d'interface de réseau externe ou plus comprennent un récepteur (314, 316, 320, 324, 326) pour interfacer ladite passerelle à une parabole de satellite et réception à partir d'un dispositif raccordé à un ou plusieurs desdits réseaux locaux d'une demande pour recevoir un canal particulier ayant des programmes de télévision analogiques régulièrement programmés modulés sur une porteuse de liaison descendante et commande d'un syntoniseur (314) pour syntoniser le canal demandé sur le filtre substantiellement en dehors de tous les autres signaux autres que lesdits signaux de programme de télévision analogiques régulièrement programmés demandés, et démodulation (320) et numérisation (316) desdits signaux de télévision et codage (324) des données numériques dans un format qui peut être compressé et compression (326) desdites données numériques et transmission desdites données numériques compressées via ledit bus central audit traitement de mise en paquet IP et audit traitement de routage pour le routage via l'interface de réseau local approprié et le réseau local approprié audit dispositif qui demandait ledit canal ayant des programmes de télévision analogiques régulièrement programmés.

16. Dispositif de passerelle selon l'une quelconque des revendications 1 à 15, dans lequel lesdits deux circuits d'interface de réseau externe ou plus comprennent un récepteur (302, 304) pour interfacer ladite passerelle à une parabole de satellite et réception des données numériques codant une page web ou d'autres informations à partir de l'Internet et encapsulées dans des paquets de protocole Internet demandés par un dispositif couplé à un ou plusieurs desdits réseaux locaux, lesdites données numériques ayant été modulées sur une porteuse de liaison descendante transmise par un satellite à ladite parabole de satellite, et démodulation (304) et récupération desdits paquets de protocole Internet et leur transmission via ledit bus central audit traitement de routage (86) pour le routage audit dispositif qui demandait lesdites données via ladite interface de réseau local approprié et le réseau local approprié.

17. Dispositif de passerelle selon l'une quelconque des revendications 1 à 16, dans lequel lesdits deux circuits d'interface de réseau externe ou plus comprennent un récepteur (332, 334, 336, 340, 342) pour interfacer ladite passerelle à l'antenne de télévision de diffusion terrestre conventionnelle et réception d'un signal de programme de télévision régulièrement programmé demandé par un dispositif couplé audit réseau local et modulé sur une porteuse de diffusion terrestre et démodulation desdits signaux numérisant lesdits signaux et codage des données numériques dans un format qui peut être compressé et compression des données numériques et transmission desdites données numériques compressées via ledit bus hôte audit traitement de mise en paquet IP.

18. Dispositif de passerelle selon l'une quelconque des revendications 1 à 17, dans lequel tous ou au moins certains desdits circuits d'interface de réseau externe sont structurés comme des modules d'extension qui sont couplés audit ordinateur central via des tranches d'extension afin d'être amovibles de sorte que seuls les circuits d'interface de réseau externe voulus ont besoin d'être présents dans ladite passerelle.

19. Dispositif de passerelle selon la revendication 1 ou 18, dans lequel lesdits un ou plusieurs circuits d'interface de réseaux locaux sont des cartes d'interface de réseau local Ethernet (362, 364) et le dispositif comprend en outre un moyen de transcodeur adapté pour convertir le débit binaire original des données entrantes en un débit binaire différent lorsque nécessaire pour gérer une charge de trafic sur lesdits un ou plusieurs réseaux locaux ; et ledit traitement de routage (86) commande ledit ordinateur central (128) pour recevoir des paquets formatés de protocole Internet soit à partir dudit traitement de mise en paquet IP (158) soit directement à partir d'un circuit d'interface de réseau externe (70) et, avec ladite interface de réseau, consultation de l'adresse Ethernet du dispositif couplé audit réseau local qui correspond à l'adresse de destination de paquet de protocole Internet, et faire toutes les conversions de protocole nécessaires pour mettre en capsule chacun dudit paquet de protocole Ethernet dans un ou plusieurs paquets de réseau local Ethernet adressés à un dispositif qui demandait les données dans ledit paquet de protocole Internet et transmet celles-ci sur le réseau local approprié (18, 20) au dispositif qui demandait lesdites données.

20. Dispositif de passerelle selon la revendication 19, dans lequel lesdites interfaces de réseau local interface sont une ou plusieurs cartes d'interface de réseau Ethernet (362, 364) qui interface ladite passerelle à un numéro de réseau Ethernet correspondant (18, 20) ; et ledit bus central est un bus de capacité élevée, multiplexé compatible H.100 ; et ledit traitement de gestion et de commande est structuré pour commander ledit ordinateur central pour recevoir des paquets Ethernet à partir des dispositifs couplés auxdits réseaux locaux qui contiennent des demandes pour télécharger des pages web spécifiques sur des URL identifiés dans ledit paquet et pour recevoir et distribuer des diffusions vidéo régulièrement programmées sur un système de câble coaxial de fibre hybride CATV, une liaison descendante par satellite ou une diffusion terrestre, ou une boucle locale de ligne d'abonné numérique ou pour demander la réception et la distribution d'un programme de vidéo à la demande à délivrer sur ledit système de câble coaxial de fibre hybride CATV ou ladite liaison descendante par satellite ou via une boucle locale de ligne d'abonné numérique, et pour générer et envoyer des données de commande appropriées à celui approprié desdits circuits d'interface de réseau externe pour obliger les données demandées ou programme de diffusion vidéo ou programme de vidéo à la demande, désigné ci-après par contenu, à recevoir et distribuer au dispositif ou dispositifs qui demandaient ledit contenu.

21. Dispositif de passerelle selon la revendication 1, dans lequel lesdits deux circuits d'interface de réseau externe ou plus comprennent :
un moyen de modem de ligne d'abonné numérique modulaire (182) couplé audit premier ordinateur central via une connexion de connecteur d'extension audit bus central (156) pour interfacer ladite passerelle à une boucle locale de ligne d'abonné numérique ; et
un module de récepteur satellite de diffusion directe (344) tel qu'un récepteur DirecTV couplé audit bus central par une connexion de connecteur d'extension et fonctionnant pour interfacer ladite passerelle à une parabole de satellite.

22. Dispositif de passerelle selon la revendication 1, dans lequel lesdits deux circuits d'interface de réseau externe ou plus comprennent en outre un fax de ligne POTS conventionnel et/ou un module d'extension de modem de données couplé audit ordinateur central via un connecteur d'extension, pour interfacer ladite passerelle à une ligne téléphonique POTS conventionnelle au central de commutation du réseau téléphonique de service public.

23. Dispositif de passerelle selon la revendication 1, dans lequel lesdits deux circuits d'interface de réseau externe ou plus comprennent en outre un module de téléphonie de paquet d'Internet (372) couplé audit ordinateur central via un connecteur d'extension pour interfacer ladite passerelle au service téléphonique ancien simple et/ou lignes téléphoniques de ligne d'abonné numérique à partir d'un central de commutation de réseau téléphonique de service public.

24. Dispositif de passerelle selon la revendication 1, dans lequel ledit modem par câble est un modem par câble modulaire compatible DOCSIS (386) qui est couplé audit bus central de l'ordinateur central par l'intermédiaire d'un connecteur d'extension.

25. Dispositif de passerelle selon la revendication 1, dans lequel lesdits deux circuits d'interface de réseau externe ou plus comprennent un moyen VOD modulaire (378, 380, 386, 388, 392, 70, 94, 90, 98) couplé audit bus central par l'intermédiaire d'un connecteur d'extension, et adapté pour interfacer ladite passerelle audit réseau HFC, une ligne DSL ou une ligne téléphonique POTS pour demander un ou plusieurs programmes vidéo à la demande spécifiés via un message en amont et adapté pour recevoir et démoduler et récupérer des données numérisées, compressées, coder un ou plusieurs dits programmes de vidéo à la demande demandés, lesdites données étant modulées sur une porteuse aval transmise sur une ligne DSL (58) ou ledit réseau HFC (10) ou une liaison par satellite et demandés par un ou plusieurs dispositifs couplés à un ou plusieurs desdits réseaux locaux, et lesdits moyens VOD modulaires sont aussi adaptés pour démultiplexer les composants audio et vidéo et une quelconque des données auxiliaires d'un ou de plusieurs dits programmes de vidéo à la demande demandée et transmettre les données récupérées audit traitement de mise en paquet IP pour mettre en paquet dans des paquets IP si lesdites données ne sont pas déjà mises en capsule dans des paquets IP, et donc ledit traitement de routage pour la mise en capsule dans des paquets de réseaux locaux appropriés et le routage auxdits un ou plusieurs dispositifs qui demandaient lesdits programmes de vidéo à la demande.

26. Dispositif de passerelle selon la revendication 1, dans lequel lesdits deux ou plusieurs circuits d'interface de réseau externe comprennent en outre un moyen de récepteur de satellite de bande C modulaire (394) couplé audit bus central via un connecteur d'extension et adapté pour interfacer ladite passerelle à une parabole de satellite pour recevoir des programmes de télévision analogiques régulièrement programmés modulés sur une porteuse de liaison descendante demandée par un dispositif couplé à ladite passerelle par un réseau local et démoduler et numériser lesdits signaux de télévision et coder les données numériques dans un format qui peut être compressé et compresser lesdites données numériques et transmettre lesdites données numériques compressées via ledit bus central audit traitement de mise en paquet IP pour la mise en capsule dans des paquets IP et donc audit traitement de routage.

27. Dispositif de passerelle selon la revendication 1, dans lequel lesdits deux ou plusieurs moyens de récepteur de réseau externe comprennent un moyen de modem direct PC modulaire (396) couplé audit bus central par un connecteur d'extension et adapté pour interfacer ladite passerelle à une parabole de satellite et recevoir des données numériques codant une page web ou d'autres informations à partir de l'Internet et mettre en capsule dans des paquets de protocole Internet demandés par un dispositif couplé à ladite passerelle par un réseau local, lesdits paquets IP ayant été modulés sur une porteuse de liaison descendante, et en outre adapté pour démoduler ladite porteuse de liaison descendante et récupérer lesdits paquets de protocole Internet et les transmettre via ledit bus central audit traitement de routage pour le routage via ledit réseau local audit dispositif qui les demandait.

28. Traitement réalisé par une passerelle pour demander un programme de vidéo à la demande, ci-après VOD et distribuer les données dudit programme de vidéo à la demande au dispositif qui le demandait via le réseau local, ci-après LAN, comprenant :
la réception d'un paquet LAN mettant en capsule un paquet de protocole Internet, ci-après paquet IP, identifiant un programme VOD à demander, ledit paquet LAN contenant des données identifiant le dispositif qui demandait ledit programme VOD et la source pour fournir ledit programme VOD (108) ;
la suppression des en-têtes de réseau local des paquets LAN reçus et routage desdits paquets IP à un serveur vidéo qui peut fournir le programme VOD demandé via une interface de réseau externe dans ladite passerelle qui interface ladite passerelle à un réseau externe auquel ledit serveur vidéo est couplé (110-116), ladite interface de réseau externe étant modulaire et couplée à un ordinateur central de ladite passerelle via un connecteur d'extension de bus ;
la réception des signaux radio fréquence modulés avec des paquets de codage de données contenant des données compressées codant le programme VOD demandé via un d'au moins deux circuits d'interface de réseau externe modulaire couplé à un ordinateur central par l'intermédiaire d'un connecteur d'extension et couplé à un réseau externe auquel ledit serveur vidéo est couplé, lesdits au moins deux circuits d'interface de réseau externe modulaire interfacant ledit ordinateur central à une diffusion par satellite pour recevoir au moins des transmissions d'une vidéo numérique compressée et un réseau de télévision par câble coaxial de fibre hybride qui délivre au moins des signaux de télévision analogiques et d'autres données numériques comprenant des données DOCSIS en aval transmises par un modem frontal et qui transporte des données DOCSIS en amont audit modem frontal, et récupération (202, 136, 140, 214, 224) desdits paquets IP à partir desdits signaux radio fréquence ;
le réassemblage de paquets IP contenant des données de VOD compressées ou la mise en capsule des données de VOD compressées dans des paquets IP adressés aux adresses IP du dispositif qui demandait ledit programme VOD si lesdites données de VOD n'étaient pas originalement dans des paquets IP (238, 194) et envoie desdits paquets IP à un traitement de routage dans ladite passerelle ;
la translation du débit binaire de vidéo compressée reçue vers le bas à un débit inférieur lorsque nécessaire à cause de conditions de charge actuelles sur un ou plusieurs réseaux locaux auxquels ladite passerelle est couplée ;
le blocage d'accès pour que seulement des programmes vidéo auxquels l'abonnement existe puissent être reçus ; et
la mise en capsule (240, 196) dudit paquet IP dans des paquets LAN adressés au dispositif qui ordonnait ledit programme VOD et routage desdits paquets LAN par l'intermédiaire dune interface de réseau local de ladite passerelle au dispositif qui ordonnait ledit programme VOD via un réseau local couplé audit dispositif.
